# EUROPÄISCHE PATENTSCHRIFT

(11) **EP 3 640 606 B1**
(45) Veröffentlichungstag und Bekanntmachung des Hinweises auf die Patenterteilung: **23.09.2026**
(21) Anmeldenummer: 19208439.0
(22) Anmeldetag: 25.11.2010
(51) Int. Cl.: G01F 1/84, G01F 15/02, G01F 25/10

(54) **MESSAUFNEHMER VOM VIBRATIONSTYP SOWIE DAMIT GEBILDETES MESSSYSTEM**
VIBRATION-TYPE MEASURING SENSOR AND MEASURING SYSTEM FORMED THEREBY
CAPTEUR DE MESURE DE TYPE À VIBRATIONS AINSI QUE SYSTÈME DE MESURE AINSI CONÇU

(30) Priorität: 21.12.2009 DE 102009055069; 20.08.2010 DE 102010039627
(43) Veröffentlichungstag der Anmeldung: 22.04.2020
(62) Dokumentnummer(n) der früheren Anmeldung(en) nach Art. 76 EPÜ: 10779827.4 / 2 516 971
(73) Patentinhaber: Endress+Hauser Flowtec AG, 4153 Reinach (CH)
(72) Erfinder: Bitto, Ennio, 4147 Aesch (CH); Braun, Marcel, 79594 Inzlingen (DE); Huber, Christof, 3007 Bern (CH); Rieder, Alfred, 84032 Landshut (DE); Schütze, Christian, 4055 Basel (CH)
(74) Vertreter: Endress + Hauser Group Services (Deutschland) AG+Co. KG

(56) Entgegenhaltungen:
- WO-A2-96/08697
- DE-A1- 102004 035 971
- DE-A1- 102009 001 472
- US-A- 4 879 910

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums. Ferner betrifft die Erfindung ein, etwa als In-line-Meßgerät ausgebildetes, Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien, etwa einer wässrigen Flüssigkeit, einem Gas, einem Flüssigkeits-Gas-Gemisch, einem Dampf, einem Öl, einer Paste, einem Schlamm oder einem anderen strömungsfähigen Stoff, oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 47 93 191, der US-A 2002/0157479, der US-A 2006/0150750, der US-A 2007/0151368, der US-A 53 70 002, der US-A 57 96 011, der US-B 63 08 580, der US-B 64 15 668, der US-B 67 11 958, der US-B 69 20 798, der US-B 71 34 347, der US-B 73 92 709, oder der WO-A 03/027616 der ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen von zumindest zeitweise strömendem, ggf. auch extrem heißem, Medium umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die beiden Meßrohre im Nutzmode zumindest anteilig, insb. auch überwiegend, zu gegengleichen Biegeschwingungen differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungssignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der zwei Meßrohre gebildete Rohranordnung mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz der Rohranordnung gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer Nutz-Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gebogener Meßrohre entspricht dabei die Länge eines zwischen dem einlaßseitigem und dem auslaßseitigen Kopplerelement verlaufenden Abschnitts einer Biegelinie des jeweiligen Meßrohrs, mithin einer die Flächenschwerpunkte aller gedachten Querschnittsflächen des jeweiligen Meßrohrs verbindende gedachte Mittelllinie des nämlichen Meßrohrs, der Nutz-Schwinglänge der Meßrohre. Mittels der - insoweit mit zur Rohranordnung gehörigen - Kopplerelementen kann zudem auch eine Schwingungsgüte der Rohranordnung wie auch die Empfindlichkeit des Meßaufnehmers insgesamt beeinflußt werden, in der Weise, daß für eine minimal geforderte Empfindlichkeit des Meßaufnehmers zumindest eine minimale Nutz-Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1 %, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 1000 t/h jeweils für Druckverluste von weniger als 3 bar spezifiziert sind. Ein Kaliber der Meßrohre liegt hierbei etwa in einem Bereich zwischen 80 mm und 100 mm. WO 96/08697 A2 offenbart eine Leitungsanordnung für einen Coriolis-Massendurchflußmesser umfassend ein Leitungssystem aus vier symmetrisch angeordneten geraden Röhren.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 1500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Ausgehend vom oben genannten Stand der Technik besteht daher eine Aufgabe der Erfindung darin, einen Meßaufnehmer von hoher Empfindlichkeit und Schwingungsgüte anzugeben, der auch bei großen Massendurchflußraten von mehr als 1000 t/h einen geringen Druckverlust von möglichst weniger als 3 bar verursacht, und der auch mit großer nomineller Nennweite von über 100 mm eine möglichst kompakter Bauweise aufweist und nicht zuletzt auch für Anwendungen mit extrem heißen bzw. extrem kalten Medien und/oder mit signifikant schwankenden Mediumstemperaturen geeignet ist.

Zur Lösung der Aufgabe besteht die Erfindung in einem Meßaufnehmer vom Vibrationstyp zum Erfassen wenigstens einer physikalischen Meßgröße eines in einer Rohrleitung geführten strömungsfähigen Mediums, beispielsweise eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften. Der Meßaufnehmer umfaßt erfindungsgemäß ein, beispielsweise zumindest teilweise im wesentlichen rohrförmiges und/oder zumindest teilweise außen kreiszylindrisches, Aufnehmer-Gehäuse, von dem ein einlaßseitiges erstes Gehäuseende mittels eines genau vier jeweils voneinander beabstandeten, beispielsweise kreiszylindrische, kegelförmige oder konusförmige, Strömungsöffnungen aufweisenden einlaßseitigen ersten Strömungsteiler und ein auslaßseitiges zweites Gehäuseende mittels eines genau vier jeweils voneinander beabstandeten, beispielsweise kreiszylindrische, kegelförmige oder konusförmige, Strömungsöffnungen aufweisenden auslaßseitigen zweiten Strömungsteilers gebildet sind. Desweiteren umfaßt der Meßaufnehmer eine Rohranordnung mit genau vier unter Bildung strömungstechnisch parallel geschalteter Strömungspfade an die, beispielsweise baugleichen, Strömungsteiler angeschlossene, insb. lediglich mittels nämlicher Strömungsteiler im Aufnehmer-Gehäuse schwingfähig gehalterte und/oder baugleiche und/oder zueinander paarweise parallelen, gebogene, nämlich zumindest abschnittsweise V-förmige Meßrohre zum Führen von strömendem Medium. Von den vier, beispielsweise sowohl hinsichtlich Geometrie als auch hinsichtlich Material baugleichen, Meßrohren münden ein erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers, ein zum ersten Meßrohr zumindest abschnittsweise paralleles zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers sowie ein zum dritten Meßrohr zumindest abschnittsweise paralleles viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. Ferner umfaßt der Meßaufnehmer eine elektro-mechanische, beispielsweise mittels eines oder mehreren elektro-dynamischen Schwingungserregern gebildete, Erregeranordnung zum Erzeugen und/oder Aufrechterhalten von mechanischen Schwingungen, insb. von Biegeschwingungen, der vier Meßrohre. Beim erfindungsgemäßen Meßaufnehmer sind die Meßrohre so ausgebildet und im Meßaufnehmer angeordnet, daß die Rohranordnung eine zwischen der ersten gedachten Längsschnittebene und der zweiten gedachten Längsschnittebene des Meßaufnehmers liegende, zur ersten gedachten Längsschnittebene des Meßaufnehmers und zur zweiten gedachten Längsschnittebene des Meßaufnehmers jeweils parallele erste gedachte Längsschnittebene aufweist, bezüglich der die Rohranordnung spiegelsymmetrisch ist, und daß die Rohranordnung eine zu deren gedachten ersten Längsschnittebene senkrechte zweite gedachte Längsschnittebene aufweist, bezüglich der die Rohranordnung gleichfalls spiegelsymmetrisch ist.

Darüberhinaus besteht die Erfindung in einem Meßsystem zum Messen einer Dichte und/oder einer Massendurchflußrate, beispielsweise auch eines über ein Zeitintervall totalisierten Gesamt-Massendurchflusses, eines in einer Rohrleitung zumindest zeitweise, beispielsweise auch mit einer Massendurchflußrate von mehr als 1000 t/h, strömenden Mediums, etwa eines Gases, einer Flüssigkeit, eines Pulvers oder eines anderen strömungsfähigen Stoffes, welches, beispielsweise als In-Line-Meßgerät und/oder Meßgerät in Kompaktbauweise ausgebildete, Meßsystem nämlichen Meßaufnehmer sowie eine mit dem Meßaufnehmer elektrisch gekoppelte, beispielsweise in einem mechanisch mit dem Aufnehmer-Gehäuse verbundenen Elektronik-Gehäuse angeordneten, Umformer-Elektronik zum Ansteuern des Meßaufnehmers, nicht zuletzt auch von dessen Erregeranordnung, und zum Auswerten von vom Meßaufnehmer gelieferten Schwingungssignalen umfaßt; bzw. auch in der Verwendung nämlichen Meßsystems zum Messen einer Dichte und/oder einer Massendurchflußrate, nicht zuletzt auch eines über ein Zeitintervall totalisierten Gesamt-Massendurchflusses, und/oder einer Viskosität und/oder einer Reynoldszahl eines in einer Prozeßleitung, etwa einer Rohrleitung, zumindest zeitweise mit einer Massendurchflußrate von mehr als 1000 t/h, beispielsweise mehr als 1500 t/h, strömenden Mediums, wie z.B. eines Gases, einer Flüssigkeit, eines Pulvers oder eines anderen strömungsfähigen Stoffes.

Nach einer ersten Ausgestaltung des Meßaufnehmers der Erfindung ist die Erregeranordnung derart ausgebildet, daß damit jedes der vier Meßrohre, beispielsweise auch simultan, zu Biegeschwingungen anregbar ist.

Nach einer zweiten Ausgestaltung des Meßaufnehmers der Erfindung ist die Erregeranordnung derart ausgebildet, daß damit das erste Meßrohr und das zweite Meßrohr zu bezüglich der zweiten gedachten Längsschnittebene gegengleichen, beispielsweise auch zu bezüglich der zweiten gedachten Längsschnittebene symmetrischen, Biegeschwingungen und das dritte Meßrohr und das vierte Meßrohr zu bezüglich der zweiten gedachten Längsschnittebene gegengleichen, beispielsweise auch zu bezüglich der zweiten gedachten Längsschnittebene symmetrischen, Biegeschwingungen anregbar sind.

Nach einer dritten Ausgestaltung des Meßaufnehmers der Erfindung ist die Erregeranordnung derart ausgebildet, daß damit das erste Meßrohr und das dritte Meßrohr zu bezüglich der zweiten gedachten Längsschnittebene gegengleichen, beispielsweise auch zu bezüglich der zweiten gedachten Längsschnittebene symmetrischen, Biegeschwingungen und das zweite Meßrohr und das vierte Meßrohr zu bezüglich der zweiten gedachten Längsschnittebene gegengleichen, beispielsweise auch zu bezüglich der zweiten gedachten Längsschnittebene symmetrischen, Biegeschwingungen anregbar sind.

Nach einer vierten Ausgestaltung des Meßaufnehmers der Erfindung ist die Erregeranordnung derart ausgebildet, daß damit ein der Rohranordnung innewohnender, natürlicher Biegeschwingungsmode erster Art anregbar ist, in welchem Biegeschwingungsmode erster Art das erste Meßrohr und das zweite Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, und in welchem Biegeschwingungsmode erster Art das dritte Meßrohr und das vierte Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, derart, daß, bezüglich der zweiten gedachten Längsschnittebene, nämliche Biegeschwingungen des ersten Meßrohrs auch gegengleich zu nämlichen Biegeschwingungen des dritten Meßrohrs sind, und daß, bezüglich der zweiten gedachten Längsschnittebene, nämliche Biegeschwingungen des zweiten Meßrohrs auch gegengleich zu nämlichen Biegeschwingungen des vierten Meßrohrs sind.

Diese Ausgestaltung der Erfindung weiterbildend ist die Erregeranordnung derart ausgebildet, daß damit ein der Rohranordnung innewohnender, natürlicher Biegeschwingungsmode zweiter Art, beispielsweise auch simultan zum Biegeschwingungsmode erster Art, anregbar ist, in welchen Biegeschwingungsmode zweiter Art das erste Meßrohr und das zweite Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, und in welchen Biegeschwingungsmode zweiter Art das dritte Meßrohr und das vierte Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, derart, daß, bezüglich der zweiten gedachten Längsschnittebene, nämliche Biegeschwingungen des ersten Meßrohrs auch gegengleich zu nämlichen Biegeschwingungen des vierten Meßrohrs sind, und daß, bezüglich der zweiten gedachten Längsschnittebene, nämliche Biegeschwingungen des zweiten Meßrohrs auch gegengleich zu nämlichen Biegeschwingungen des dritten Meßrohrs sind.

Alternativ oder in Ergänzung ist ferner vorgesehen, ist daß eine, beispielsweise bei vollständig mit Wasser gefüllter Rohranordnung meßbare, Eigenfrequenz des Biegeschwingungsmode erster Art von einer, beispielsweise bei vollständig mit Wasser gefüllter Rohranordnung und/oder zeitgleich zur Eigenfrequenz des Biegeschwingungsmode erster Art meßbaren, Eigenfrequenz des Biegeschwingungsmode zweiter Art, beispielsweise um mehr als 10Hz, verschieden ist; die z.B. derart, daß, nämliche Eigenfrequenz des Biegeschwingungsmode erster Art um mehr als 10Hz größer als nämliche Eigenfrequenz des Biegeschwingungsmode zweiter Art ist oder daß nämliche Eigenfrequenz des Biegeschwingungsmode erster Art um mehr als 10Hz kleiner als nämliche Eigenfrequenz des Biegeschwingungsmode zweiter Art ist.

Nach einer fünften Ausgestaltung der Erfindung weist jedes der vier Meßrohre jeweils einen Meßrohr-Scheitelpunkt, definiert als größter senkrechter Abstand des jeweiligen Meßrohres von der ersten gedachten Längsschnittebene, auf.

Nach einer sechsten Ausgestaltung des Meßaufnehmers der Erfindung liegt ein Massenschwerpunkt der Rohranordnung in einer sowohl zur ersten gedachten Längsschnittebene als auch zur zweiten gedachten Längsschnittebene jeweils senkrechte gedachte Querschnittebene der Rohranordnung.

Nach einer siebenten Ausgestaltung des Meßaufnehmers der Erfindung ist die Rohranordnung bezüglich einer sowohl zur ersten gedachten Längsschnittebene als auch zur zweiten gedachten Längsschnittebene jeweils senkrechte gedachte Querschnittebene der Rohranordnung spiegelsymmetrisch.

Nach einer achten Ausgestaltung des Meßaufnehmers der Erfindung weist jedes der vier Meßrohre jeweils einen Meßrohr-Scheitelpunkt, definiert als größter senkrechter Abstand des jeweiligen Meßrohres von der ersten gedachten Längsschnittebene, auf und schneidet eine sowohl zur ersten gedachten Längsschnittebene als auch zur zweiten gedachten Längsschnittebene jeweils senkrechte gedachte Querschnittebene der Rohranordnung jedes der vier Meßrohre in dessen jeweiligen Meßrohr-Scheitelpunkt.

Nach einer neunten Ausgestaltung des Meßaufnehmers der Erfindung ist ein Mittelsegment des Aufnehmer-Gehäuses zumindest anteilig mittels eines geraden, beispielsweise kreiszylindrischen, Trägerrohres gebildet ist, etwa derart, daß ein auf einer ersten Seite aus nämlichem Trägerrohrs herausragendes Segment des ersten Meßrohrs und ein auf der ersten Seite aus nämlichem Trägerrohr herausragendes Segment des zweiten Meßrohrs von einer ersten Gehäusekappe des Aufnehmer-Gehäuses umgeben sind, und daß ein auf einer der ersten Seite gegenüberliegenden zweiten Seite aus nämlichem Trägerrohr herausragendes Segment des dritten Meßrohrs und ein auf der zweiten Seite aus nämlichem Trägerrohr herausragendes Segment des vierten Meßrohrs von einer, beispielsweise auch zur ersten Gehäusekappe baugleichen, zweiten Gehäusekappe des Aufnehmer-Gehäuses umgeben sind.

Nach einer zehnten Ausgestaltung des Meßaufnehmers der Erfindung ist ferner vorgesehen, daß die beiden Strömungsteiler zudem so ausgebildet und im Meßaufnehmer angeordnet, daß eine die erste Strömungsöffnung des ersten Strömungsteilers mit der ersten Strömungsöffnung des zweiten Strömungsteilers imaginär verbindende gedachte erste Verbindungsachse des Meßaufnehmers parallel zu einer die zweite Strömungsöffnung des ersten Strömungsteilers mit der zweiten Strömungsöffnung des zweiten Strömungsteilers imaginär verbindende gedachten zweiten Verbindungsachse des Meßaufnehmers verläuft, daß eine die dritte Strömungsöffnung des ersten Strömungsteilers mit der dritten Strömungsöffnung des zweiten Strömungsteilers imaginär verbindende gedachte dritten Verbindungsachse des Meßaufnehmers parallel zu einer die vierte Strömungsöffnung des ersten Strömungsteilers mit der vierten Strömungsöffnung des zweiten Strömungsteilers imaginär verbindende gedachten vierten Verbindungsachse des Meßaufnehmers verläuft. Diese Ausgestaltung der Erfindung weiterbildend ist ferner vorgesehen, daß eine erste gedachte Längsschnittebene des Meßaufnehmers, innerhalb der die, beispielsweise zu einer mit der Rohrleitung fluchtenden Hauptströmungsachse des Meßaufnehmers parallele, erste gedachte Verbindungsachse und die zweite gedachte Verbindungsachse verlaufen, parallel zu einer zweiten gedachten Längsschnittebene des Meßaufnehmers, innerhalb der die gedachte dritte Verbindungsachse und die gedachte vierte Verbindungsachse verlaufen, ist, beispielsweise derart, daß die erste gedachte Längsschnittebene der Rohranordnung zwischen der ersten und zweiten gedachten Längsschnittebene des Meßaufnehmers liegt und/oder parallel zur ersten und zweiten gedachten Längsschnittebene des Meßaufnehmers ist.

Nach einer elften Ausgestaltung des Meßaufnehmers der Erfindung ist ferner vorgesehen, daß die beiden Strömungsteiler so ausgebildet und im Meßaufnehmer angeordnet sind, daß eine dritte gedachte Längsschnittebene des Meßaufnehmers, innerhalb der die gedachte erste Verbindungsachse und die die gedachte dritte Verbindungsachse verlaufen, parallel zu einer vierten gedachten Längsschnittebene des Meßaufnehmers, innerhalb der die gedachte zweite Verbindungsachse und die die gedachte vierte Verbindungsachse verlaufen, ist. Diese Ausgestaltung der Erfindung weiterbildend ist ferner vorgesehen, daß die zweite gedachte Längsschnittebene der Rohranordnung zwischen der dritten gedachten Längsschnittebene des Meßaufnehmers und der vierten gedachten Längsschnittebene des Meßaufnehmers verläuft, beispielsweise derart, daß die zweite gedachte Längsschnittebene der Rohranordnung parallel zur dritten gedachten Längsschnittebene des Meßaufnehmers und parallel zur vierten gedachten Längsschnittebene des Meßaufnehmers ist.

Nach einer zwölften Ausgestaltung des Meßaufnehmers der Erfindung ist ferner vorgesehen, daß die vier Strömungsöffnungen des ersten Strömungsteilers so angeordnet sind, daß zu, insb. kreisförmigen, Querschnittsflächen der Strömungsöffnungen des ersten Strömungsteilers zugehörige gedachte Flächenschwerpunkte die Eckpunkte eines gedachten Rechtecks oder eines gedachten Quadrats bilden, wobei nämliche Querschnittsflächen in einer, beispielsweise zur ersten gedachten Längsschnittebene des Meßaufnehmers bzw. zur zweiten gedachten Längsschnittebene des Meßaufnehmers senkrechten, gemeinsamen gedachten Querschnittsschnittebene des ersten Strömungsteilers liegen.

Nach einer dreizehnten Ausgestaltung des Meßaufnehmers der Erfindung ist ferner vorgesehen, daß die vier Strömungsöffnungen des zweiten Strömungsteilers so angeordnet sind, daß zu, insb. kreisförmigen, Querschnittsflächen der Strömungsöffnungen des zweiten Strömungsteilers zugehörige gedachte Flächenschwerpunkte die Eckpunkte eines gedachten Rechtecks oder eines gedachten Quadrats bilden, wobei nämliche Querschnittsflächen in einer, beispielsweise zur ersten gedachten Längsschnittebene des Meßaufnehmers bzw. zur zweiten gedachten Längsschnittebene des Meßaufnehmers senkrechten, gemeinsamen gedachten Querschnittsschnittebene des zweiten Strömungsteilers liegen.

Nach einer vierzehnten Ausgestaltung des Meßaufnehmers der Erfindung ist ferner vorgesehen, daß jedes der vier, insb. gleichgroßen, Meßrohre ein Kaliber aufweist, das mehr als 40 mm, insb. mehr als 60 mm, beträgt. Diese Ausgestaltung der Erfindung weiterbildend ist ferner vorgesehen, daß die Meßrohre so gebogen und so angeordnet sind, daß ein Kaliber-zu-Höhe-Verhältnis der Rohranordnung, definiert durch ein Verhältnis des Kalibers des ersten Meßrohrs zu einer maximalen seitlichen Ausdehnung der Rohranordnung, gemessen von einem Scheitelpunkt des ersten Meßrohrs zu einem Scheitelpunkt des dritten Meßrohrs, mehr als 0.05, insb. mehr als 0.07 und/oder weniger als 0.35, insb. weniger als 0.2, beträgt.

Nach einer fünfzehnten Ausgestaltung des Meßaufnehmers der Erfindung ist ferner vorgesehen, daß der erste Strömungsteiler einen, insb. eine Masse von mehr als 50 kg aufweisenden, Flansch zum Anschließen des Meßaufnehmers an ein dem Zuführen von Medium zum Meßaufnehmer dienendes Rohrsegment der Rohrleitung und der zweite Strömungsteiler einen, insb. eine Masse von mehr als 50 kg aufweisenden, Flansch zum Anschließen des Meßaufnehmers an ein dem Abführen von Medium vom Meßaufnehmer dienendes Rohrsegment der Rohrleitung aufweisen. Diese Ausgestaltung der Erfindung weiterbildend weist jeder der Flansche jeweils eine Dichtfläche zum fluiddichten Verbinden des Meßaufnehmers mit dem jeweils korrespondierenden Rohrsegment der Rohrleitung auf, wobei ein Abstand zwischen den Dichtflächen beider Flansche eine, insb. mehr als 1000 mm betragende und/oder weniger als 3000 mm betragende, Einbaulänge des Meßaufnehmers definiert. Im besonderen ist der Meßaufnehmer ferner so ausgebildet, daß dabei eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs so gewählt ist, daß ein Meßrohrlänge-zu-Einbaulänge-Verhältnis des Meßaufnehmers, definiert durch ein Verhältnis der Meßrohrlänge des ersten Meßrohrs zur Einbaulänge des Meßaufnehmers, mehr als 0.7, insb. mehr als 0.8 und/oder weniger als 1.2, beträgt, und/oder daß ein Kaliber-zu-Einbaulänge-Verhältnis, des Meßaufnehmers, definiert durch ein Verhältnis eines Kalibers des ersten Meßrohrs zur Einbaulänge des Meßaufnehmers, mehr als 0.02, insb. mehr als 0.05 und/oder weniger als 0.09, beträgt. Alternativ oder in Ergänzung dazu ist der Meßaufnehmer so ausgebildete, daß ein Nennweite-zu Einbaulänge-Verhältnis des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist, wobei die nominelle Nennweite einem Kaliber der Rohrleitung, in deren Verlauf der Meßaufnehmer einzusetzen ist, entspricht.

Nach einer sechzehnten Ausgestaltung des Meßaufnehmers der Erfindung ist ferner vorgesehen, daß eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs mehr als 1000 mm, insb. mehr als 1200 mm und/oder weniger als 3000 mm, insb. weniger als 2500, beträgt.

Nach einer siebzehnten Ausgestaltung des Meßaufnehmers der Erfindung ist ferner vorgesehen, daß jedes der vier, beispielsweise gleichkalibrigen, Meßrohre so angeordnet ist, daß ein kleinster seitlicher Abstand jedes der vier, beispielsweise gleichlangen, Meßrohre von einer Gehäuseseitenwand des Aufnehmer-Gehäuses jeweils größer als Null, beispielsweise auch größer als 3 mm und/oder größer als ein Doppeltes einer jeweiligen Rohrwandstärke, beträgt; und/oder daß ein kleinster seitlicher Abstand zwischen zwei benachbarten Meßrohren jeweils größer als 3 mm und/oder größer als die Summe von deren jeweiligen Rohrwandstärken beträgt.

Nach einer achtzehnten Ausgestaltung des Meßaufnehmers der Erfindung ist ferner vorgesehen, daß jede der Strömungsöffnungen so angeordnet ist, daß ein kleinster seitlicher Abstand jeder der Strömungsöffnungen von einer Gehäuseseitenwand des Aufnehmer-Gehäuses jeweils größer als Null, beispielsweise auch größer als 3 mm und/oder größer als ein Doppeltes einer kleinsten Rohrwandstärke der Meßrohre, beträgt; und/oder daß ein kleinster seitlicher Abstand zwischen den Strömungsöffnungen größer als 3 mm und/oder größer als ein Doppeltes einer kleinsten Rohrwandstärke der Meßrohre beträgt.

Nach einer neunzehnten Ausgestaltung des Meßaufnehmers der Erfindung ist ferner vorgesehen, daß die Erregeranordnung derart ausgebildet ist, daß damit das erste Meßrohr und das zweite Meßrohr im Betrieb zu gegengleichen Biegeschwingungen und das dritte Meßrohr und das vierte Meßrohr im Betrieb zu gegengleichen Biegeschwingungen anregbar sind.

Nach einer zwanzigsten Ausgestaltung des Meßaufnehmers der Erfindung ist ferner vorgesehen, daß ein Massenverhältnis einer Leermasse des gesamten Meßaufnehmers zu einer Leermasse des ersten Meßrohrs größer als 10, insb. größer als 15 und kleiner als 25, ist.

Nach einer einundzwanzigsten Ausgestaltung des Meßaufnehmers der Erfindung ist ferner vorgesehen, daß eine Leermasse, M₁₈, des ersten Meßrohrs, insb. jedes der Meßrohre größer als 20 kg, insb. größer als 30 kg und/oder kleiner als 50 kg, ist.

Nach einer zweiundzwanzigsten Ausgestaltung des Meßaufnehmers der Erfindung ist ferner vorgesehen, daß eine Leermasse des Meßaufnehmers größer als 200 kg, insb. größer als 300 kg, ist.

Nach einer dreiundzwanzigsten Ausgestaltung des Meßaufnehmers der Erfindung ist ferner vorgesehen, daß eine nominellen Nennweite des Meßaufnehmers, die einem Kaliber der Rohrleitung, in deren Verlauf der Meßaufnehmer einzusetzen ist, entspricht, mehr als 50 mm beträgt, insb. größer als 100 mm ist. In vorteilhafter Weise ist der Meßaufnehmer ferner so ausgebildet, daß ein Masse-zu-Nennweite-Verhältnis des Meßaufnehmers, definiert durch ein Verhältnis der Leermasse des Meßaufnehmers zur nominellen Nennweite des Meßaufnehmers kleiner als 2 kg/mm, insb. kleiner als 1 kg/mm und/oder größer als 0.5 kg/mm, ist.

Nach einer vierundzwanzigsten Ausgestaltung des Meßaufnehmers der Erfindung ist ferner vorgesehen, daß das erste und das zweite Meßrohr zumindest hinsichtlich eines Materials, aus dem deren Rohrwände jeweils bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer fünfundzwanzigsten Ausgestaltung der Erfindung ist ferner vorgesehen, daß das dritte und das vierte Meßrohr zumindest hinsichtlich eines Materials, aus dem deren Rohrwände jeweils bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer sechsundzwanzigsten Ausgestaltung des Meßaufnehmers der Erfindung ist ferner vorgesehen, daß alle vier Meßrohre hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer siebenundzwanzigsten Ausgestaltung des Meßaufnehmers der Erfindung ist ferner vorgesehen, daß ein Material, aus dem die Rohrwände der vier Meßrohre zumindest anteilig bestehen, Titan und/oder Zirconium und/oder, beispielsweise rostfreier und/oder hochfester, Stahl ist, Duplexstahl und/oder Superduplexstahl, oder Hastelloy ist.

Nach einer achtundzwanzigsten Ausgestaltung des Meßaufnehmers der Erfindung ist ferner vorgesehen, daß das Aufnehmer-Gehäuse, die Strömungsteiler und Rohrwände der Meßrohre jeweils aus, beispielsweise rostfreiem, Stahl bestehen.

Nach einer neunundzwanzigsten Ausgestaltung des Meßaufnehmers der Erfindung ist ferner vorgesehen, daß die Erregeranordnung mittels eines, insb. elektrodynamischen und/oder Schwingungen des ersten Meßrohrs relativ zum zweiten Meßrohr differentiell anregenden, ersten Schwingungserregers gebildet ist. Im besonderen ist die Erregeranordnung mittels eines, beispielsweise elektrodynamischen und/oder Schwingungen des dritten Meßrohrs relativ zum vierten Meßrohr differentiell anregenden, zweiten Schwingungserregers gebildet. Hierbei ist ferner vorgesehen, daß der erste und zweite Schwingungserreger elektrisch seriell verschaltet sind, derart, daß ein gemeinsames Treibersignal gemeinsame Schwingungen des ersten und dritten Meßrohrs relativ zum zweiten und vierten Meßrohr anregt. Die Schwingungserreger der Erregeranordnung können beispielsweise mittels eines am ersten Meßrohr gehalterten Permanentmagneten und einer von dessen Magnetfeld durchfluteten, am zweiten Meßrohr gehalterten Zylinderspule gebildet ist, und wobei der zweite Schwingungserreger mittels eines am dritten Meßrohr gehalterten Permanentmagneten und einer von dessen Magnetfeld durchfluteten, am vierten Meßrohr gehalterten Zylinderspule gebildet ist.

Nach einer ersten Weiterbildung des Meßaufnehmers der Erfindung umfaßt dieser weiters: ein, sowohl vom ersten Strömungsteiler als auch vom zweiten Strömungsteiler beabstandet, einlaßseitig an jedem der vier Meßrohre fixiertes, beispielsweise eine H- oder X-förmige Grundfläche aufweisendes, erstes Kopplerelement erster Art zum Einstellen von Eigenfrequenzen natürlicher Schwingungsmoden der Rohranordnung, beispielsweise von Biegeschwingungsmoden, sowie ein, sowohl vom ersten Strömungsteiler als auch vom zweiten Strömungsteiler beabstandet, auslaßseitig an jedem der vier Meßrohre fixiertes, beispielsweise eine H- oder X-förmige Grundfläche aufweisendes und/oder zum ersten Kopplerelement erster Art im wesentlichen baugleiches, zweites Kopplerelement erster Art zum Einstellen von Eigenfrequenzen natürlicher Schwingungsmoden der Rohranordnung, beispielsweise von Biegeschwingungsmoden.

Nach einer ersten Ausgestaltung der ersten Weiterbildung des Meßaufnehmers der Erfindung ist ferner vorgesehen, daß jedes der beiden Kopplerelemente erster Art symmetrisch bezüglich der ersten gedachten Längsschnittebene der Rohranordnung ist

Nach einer zweiten Ausgestaltung der ersten Weiterbildung des Meßaufnehmers der Erfindung ist ferner vorgesehen, daß jedes der beiden Kopplerelemente erster Art symmetrisch bezüglich der zweiten gedachten Längsschnittebene der Rohranordnung ist.

Nach einer dritten Ausgestaltung der ersten Weiterbildung des Meßaufnehmers der Erfindung ist ferner vorgesehen, daß beiden Kopplerelemente erster Art symmetrisch bezüglich einer sowohl zur ersten gedachten Längsschnittebene als auch zur zweiten gedachten Längsschnittebene der Rohranordnung jeweils senkrechten gedachte Querschnittsebene der Rohranordnung im Meßaufnehmer angeordnet sind.

Nach einer vierten Ausgestaltung der ersten Weiterbildung des Meßaufnehmers der Erfindung ist ferner vorgesehen, daß die beiden Kopplerelemente erster Art äquidistant bezüglich einer sowohl zur ersten gedachten Längsschnittebene als auch zur zweiten gedachten Längsschnittebene der Rohranordnung jeweils senkrechten gedachte Querschnittsebene der Rohranordnung im Meßaufnehmer angeordnet sind.

Nach einer fünften Ausgestaltung der ersten Weiterbildung des Meßaufnehmers der Erfindung ist ferner vorgesehen, daß die beiden Kopplerelemente erster Art bezüglich einer sowohl zur ersten gedachten Längsschnittebene als auch zur zweiten gedachten Längsschnittebene der Rohranordnung jeweils senkrechten gedachte Querschnittsebene der Rohranordnung parallel verlaufend im Meßaufnehmer angeordnet sind.

Nach einer sechsten Ausgestaltung der ersten Weiterbildung des Meßaufnehmers der Erfindung ist ferner vorgesehen, daß jedes der beiden Kopplerelemente erster Art jeweils so ausgebildet und im Meßaufnehmer plaziert ist, daß es bezüglich der ersten gedachten Längsschnittebene der Rohranordnung und/oder bezüglich der zweiten gedachten Längsschnittebene der Rohranordnung symmetrisch ist.

Nach einer siebenten Ausgestaltung der ersten Weiterbildung des Meßaufnehmers der Erfindung ist ferner vorgesehen, daß jedes der beiden Kopplerelemente erster Art jeweils so ausgebildet und im Meßaufnehmer plaziert ist, daß es in Projektion auf eine sowohl zur ersten gedachten Längsschnittebene der Rohranordnung als auch zur zweiten gedachten Längsschnittebene der Rohranordnung jeweils senkrechten gedachte Querschnittsebene der Rohranordnung X-förmig ausgebildet ist, oder daß es in Projektion auf eine zur ersten gedachten Längsschnittebene und der zweiten gedachten Längsschnittebene der Rohranordnung jeweils senkrechten gedachte Querschnittsebene der Rohranordnung H-förmig ausgebildet ist.

Nach einer achten Ausgestaltung der ersten Weiterbildung des Meßaufnehmers der Erfindung ist ferner vorgesehen, daß sowohl das erste Kopplerelement erster Art als auch das zweite Kopplerelement erster Art jeweils mittels plattenförmiger Teilelemente gebildet ist.

Nach einer neunten Ausgestaltung der ersten Weiterbildung des Meßaufnehmers der Erfindung ist ferner vorgesehen, daß jedes der beiden Kopplerelemente erster Art jeweils zumindest abschnittsweise gewölbt ist, beispielsweise in derart, daß es bezüglich einer zwischen dem ersten Kopplerelement erster Art und dem zweiten Kopplerelement erster Art verlaufende, sowohl zur ersten gedachten Längsschnittebene der Rohranordnung als auch zur zweiten gedachten Längsschnittebene der Rohranordnung jeweils senkrechten, gedachten Querschnittsebene der Rohranordnung jeweils zumindest abschnittsweise konvex sind.

Nach einer zehnten Ausgestaltung der ersten Weiterbildung des Meßaufnehmers der Erfindung ist ferner vorgesehen, daß sowohl das erste Kopplerelement erster Art als auch das zweite Kopplerelement erster Art bezüglich einer zwischen dem ersten Kopplerelement erster Art und dem zweiten Kopplerelement erster Art verlaufende, sowohl zur ersten gedachten Längsschnittebene der Rohranordnung als auch zur zweiten gedachten Längsschnittebene der Rohranordnung jeweils senkrechten, gedachten Querschnittsebene der Rohranordnung, nämlich von der Querschnittsebene aus gesehen, jeweils zumindest abschnittsweise konvex sind.

Nach einer elften Ausgestaltung der ersten Weiterbildung des Meßaufnehmers der Erfindung umfaßt dieser weiters: ein, beispielsweise plattenförmiges, erstes Kopplerelement zweiter Art, das zum Bilden von einlaßseitigen Schwingungsknoten sowohl für Vibrationen, beispielsweise Biegeschwingungen, des ersten Meßrohrs als auch für dazu gegengleiche Vibrationen, beispielsweise Biegeschwingungen, des zweiten Meßrohrs einlaßseitig am ersten Meßrohr und am zweiten Meßrohr fixiert ist, beispielsweise sowohl an einem sich zwischen dem ersten Strömungsteiler und dem ersten Kopplerelement erster Art erstreckenden Rohrsegment des ersten Meßrohrs als auch an einem sich zwischen dem ersten Strömungsteiler und dem ersten Kopplerelement erster Art erstreckenden Rohrsegment des zweiten Meßrohrs; ein, beispielsweise plattenförmiges und/oder zum ersten Kopplerelement zweiter Art baugleiches und/oder zum ersten Kopplerelement zweiter Art paralleles, zweites Kopplerelement zweiter Art, das zum Bilden von auslaßseitigen Schwingungsknoten sowohl für Vibrationen, beispielsweise Biegeschwingungen, des ersten Meßrohrs als auch für dazu gegengleiche Vibrationen, beispielsweise Biegeschwingungen, des zweiten Meßrohrs auslaßseitig am ersten Meßrohr und am zweiten Meßrohr fixiert ist, beispielsweise sowohl an einem sich zwischen dem zweiten Strömungsteiler und dem zweiten Kopplerelement erster Art erstreckenden Rohrsegment des ersten Meßrohrs als auch an einem sich zwischen dem zweiten Strömungsteiler und dem zweiten Kopplerelement erster Art erstreckenden Rohrsegment des zweiten Meßrohrs; ein, beispielsweise plattenförmiges und/oder zum ersten Kopplerelement zweiter Art baugleiches und/oder zum zweiten Kopplerelement zweiter Art paralleles, drittes Kopplerelement zweiter Art, das zum Bilden von einlaßseitigen Schwingungsknoten sowohl für Vibrationen, beispielsweise Biegeschwingungen, des dritten Meßrohrs als auch für dazu gegengleiche Vibrationen, beispielsweise Biegeschwingungen, des vierten Meßrohrs sowohl vom ersten Strömungsteiler als auch vom zweiten Strömungsteiler beabstandet einlaßseitig am dritten Meßrohr und am vierten Meßrohr fixiert ist, beispielsweise sowohl an einem sich zwischen dem ersten Strömungsteiler und dem ersten Kopplerelement erster Art erstreckenden Rohrsegment des dritten Meßrohrs als auch an einem sich zwischen dem ersten Strömungsteiler und dem ersten Kopplerelement erster Art erstreckenden Rohrsegment des vierten Meßrohrs; sowie ein, beispielsweise plattenförmiges und/oder zum ersten Kopplerelement zweiter Art baugleiches und/oder zum ersten Kopplerelement zweiter Art paralleles, viertes Kopplerelement zweiter Art, das zum Bilden von auslaßseitigen Schwingungsknoten sowohl für Vibrationen, beispielsweise Biegeschwingungen, des dritten Meßrohrs als auch für dazu gegengleiche Vibrationen, beispielsweise Biegeschwingungen, des vierten Meßrohrs sowohl vom ersten Strömungsteiler als auch vom zweiten Strömungsteiler wie auch vom ersten Kopplerelement beabstandet auslaßseitig am dritten Meßrohr und am vierten Meßrohr fixiert ist, beispielsweise sowohl an einem sich zwischen dem zweiten Strömungsteiler und dem zweiten Kopplerelement erster Art erstreckenden Rohrsegment des dritten Meßrohrs als auch an einem sich zwischen dem zweiten Strömungsteiler und dem zweiten Kopplerelement erster Art erstreckenden Rohrsegment des vierten Meßrohrs. Der Meßaufnehmer gemäß dieser Ausgestaltung der Erfindung kann beispielsweise dadurch hergestellt werden, daß zunächst sowohl das erste Kopplerelement zweiter Art als auch das zweite Kopplerelement zweiter Art jeweils am ersten Meßrohr und am zweiten Meßrohr zum Herstellen eines ersten Meßrohrpakets fixiert werden sowie sowohl das dritte Kopplerelement zweiter Art als auch das vierte Kopplerelement zweiter Art jeweils am dritten Meßrohr und am vierten Meßrohr zum Herstellen eines zweiten Meßrohrpakets fixiert werden; und daß hernach erst sowohl das erste Kopplerelement erster Art als auch das zweite Kopplerelement erster Art jeweils an wenigstens einem, beispielsweise auch jedem, der Meßrohre des ersten Meßrohrpakets und an wenigstens einem, beispielsweise auch jedem, der Meßrohre des zweiten Meßrohrpakets fixiert werden.

Nach einer zweiten Weiterbildung der Erfindung umfaßt der Meßaufnehmer weiters eine auf Vibrationen, insb. mittels der Erregeranordnung angeregten Biegeschwingungen, der Meßrohre reagierende, beispielsweise elektro-dynamische und/oder mittels einander baugleicher Schwingungssensoren gebildete, Sensoranordnung zum Erzeugen von Vibrationen, insb. Biegeschwingungen, der Meßrohre repräsentierenden Schwingungssignalen.

Nach einer ersten Ausgestaltung der zweiten Weiterbildung der Erfindung ist vorgesehen, daß die Sensoranordnung mittels eines, insb. elektrodynamischen und/oder Schwingungen des ersten Meßrohrs relativ zum zweiten Meßrohr differentiell erfassenden, einlaßseitigen ersten Schwingungssensors sowie eines, insb. elektrodynamischen und/oder Schwingungen des ersten Meßrohrs relativ zum zweiten Meßrohr differentiell erfassenden, auslaßseitigen zweiten Schwingungssensors gebildet ist, insb. derart, daß eine einer Länge eines zwischen dem ersten Schwingungssensor und dem zweite Schwingungssensor verlaufenden Abschnitts einer Biegelinie des ersten Meßrohrs entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Ferner können der erste Schwingungssensor mittels eines am ersten Meßrohr gehalterten Permanentmagneten und einer von dessen Magnetfeld durchfluteten, am zweiten Meßrohr gehalterten Zylinderspule gebildet sein, und der zweite Schwingungssensor mittels eines am ersten Meßrohr gehalterten Permanentmagneten und einer von dessen Magnetfeld durchfluteten, am zweiten Meßrohr gehalterten Zylinderspule gebildet sein.

Nach einer zweiten Ausgestaltung der zweiten Weiterbildung der Erfindung ist ferner vorgesehen, daß die Sensoranordnung mittels eines, insb. elektrodynamischen und/oder Schwingungen des ersten Meßrohrs relativ zum zweiten Meßrohr differentiell erfassenden, einlaßseitigen ersten Schwingungssensors, eines, insb. elektrodynamischen und/oder Schwingungen des ersten Meßrohrs relativ zum zweiten Meßrohr differentiell erfassenden, auslaßseitigen zweiten Schwingungssensors, eines, insb. elektrodynamischen und/oder Schwingungen des dritten Meßrohrs relativ zum vierten Meßrohr differentiell erfassenden, einlaßseitigen dritten Schwingungssensors sowie eines, insb. elektrodynamischen und/oder Schwingungen des dritten Meßrohrs relativ zum vierten Meßrohr differentiell erfassenden, auslaßseitigen vierten Schwingungssensors gebildet ist, insb. derart, daß eine einer Länge eines zwischen dem ersten Schwingungssensor und dem zweite Schwingungssensor verlaufenden Abschnitts einer Biegelinie des ersten Meßrohrs entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Hierbei können in vorteilhafter Weise der erste und dritte Schwingungssensor elektrisch seriell derart verschaltet sein, daß ein gemeinsames Schwingungssignal gemeinsame einlaßseitige Schwingungen des ersten und dritten Meßrohrs relativ zum zweiten und vierten Meßrohr repräsentiert, und/oder der zweite und vierte Schwingungssensor elektrisch seriell derart verschaltet sein, daß ein gemeinsames Schwingungssignal gemeinsame auslaßseitige Schwingungen des ersten und dritten Meßrohrs relativ zum zweiten und vierten Meßrohr repräsentiert. Alternativ oder in Ergänzung können ferner der erste Schwingungssensor mittels eines am ersten Meßrohr gehalterten Permanentmagneten und einer von dessen Magnetfeld durchfluteten, am zweiten Meßrohr gehalterten Zylinderspule, und der zweite Schwingungssensor mittels eines am ersten Meßrohr gehalterten Permanentmagneten und einer von dessen Magnetfeld durchfluteten, am zweiten Meßrohr gehalterten Zylinderspule gebildet sein, und/oder können der dritte Schwingungssensor mittels eines am dritten Meßrohr gehalterten Permanentmagneten und einer von dessen Magnetfeld durchfluteten, am vierten Meßrohr gehalterten Zylinderspule und der vierte Schwingungssensor mittels eines am dritten Meßrohr gehalterten Permanentmagneten und einer von dessen Magnetfeld durchfluteten, am vierten Meßrohr gehalterten Zylinderspule gebildet sein.

Nach einer ersten Ausgestaltung des Meßsystems der Erfindung ist ferner vorgesehen, daß die vier Meßrohre im Betrieb, angeregt von der Erregeranordnung, simultan Biegeschwingungen, beispielsweise in einem Biegeschwingungsgrundmode erster Art, ausführen. Diese Ausgestaltung der Erfindung weiterbildend ist ferner vorgesehen, daß die Erregeranordnung Schwingungen der Meßrohre, nicht zuletzt auch Biegeschwingungen im ersten Biegeschwingungsmode erster Art, dadurch bewirkt, daß eine mittels des ersten Schwingungserregers generierte, auf das erste Meßrohr wirkende Erregerkraft zu einer mittels des ersten Schwingungserregers zeitgleich generierten, auf das zweite Meßrohr wirkenden Erregerkraft entgegengerichtet, beispielsweise auch gegengleich, ist.

Nach einer zweiten Ausgestaltung des Meßsystems der Erfindung ist ferner vorgesehen, daß die Erregeranordnung wenigstens einen, beispielsweise differentiell, auf das erste und zweite Meßrohr wirkenden, beispielsweise daran fixierten und/oder elektro-dynamischen, ersten Schwingungserreger zum Konvertieren von mittels der Umformer-Elektronik in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, Biegeschwingungen des ersten Meßrohrs und in zu nämlichen Biegeschwingungen des ersten Meßrohrs bezüglich der zweiten gedachten Längsschnittebene der Rohranordnung gegengleiche Biegeschwingungen des zweiten Meßrohrs bewirkende mechanische Erregerkräfte aufweist. Diese Ausgestaltung der Erfindung weiterbildend ist ferner vorgesehen, daß der erste Schwingungserreger mittels eines am ersten Meßrohr, beispielsweise im Bereich eines Meßrohr-Scheitelpunktes, gehalterten Permanentmagneten und einer von dessen Magnetfeld durchfluteten, am zweiten Meßrohr, beispielsweise im Bereich eines Meßrohr-Scheitelpunktes, gehalterten Zylinderspule gebildet ist. Alternativ oder in Ergänzung kann Erregeranordnung weiters auch einen, beispielsweise differentiell, auf das dritte und vierte Meßrohr wirkenden, beispielsweise daran fixierten und/oder elektro-dynamischen und/oder zum ersten Schwingungserreger baugleichen und/oder mit dem ersten Schwingungserreger elektrisch seriell verschalteten, zweiten Schwingungserreger zum Konvertieren von mittels der Umformer-Elektronik in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, Biegeschwingungen des dritten Meßrohrs und zu nämlichen Biegeschwingungen des dritten Meßrohrs bezüglich der zweiten gedachten Längsschnittebene der Rohranordnung gegengleiche Biegeschwingungen des vierten Meßrohrs bewirkende mechanische Erregerkräfte aufweisen. Der zweite Schwingungserreger kann hierbei mittels eines am dritten Meßrohr, beispielsweise im Bereich eines Meßrohr-Scheitelpunktes, gehalterten Permanentmagneten und einer von dessen Magnetfeld durchfluteten, am vierten Meßrohr, beispielsweise im Bereich eines Meßrohr-Scheitelpunktes, gehalterten Zylinderspule gebildet sein.

Nach einer dritten Ausgestaltung des Meßsystems der Erfindung ist ferner vorgesehen, daß die Umformer-Elektronik mittels wenigstens eines, beispielsweise mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten elektrischen Treibersignals, beispielsweise mit einer veränderlichen maximalen Spannungshöhe und/oder einer veränderlichen maximalen Stromstärke, elektrische Erregerleistung in die Erregeranordnung einspeist; und daß die Erregeranordnung die, nicht zuletzt auch von einer Spannungshöhe und einer Stromstärke des wenigstens einen Treibersignals abhängige, elektrische Erregerleistung zumindest anteilig sowohl in Biegeschwingungen des ersten Meßrohrs und zu den Biegeschwingungen des ersten Meßrohrs bezüglich der zweiten gedachten Längsschnittebene der Rohranordnung gegengleiche Biegeschwingungen des zweiten Meßrohrs als auch in Biegeschwingungen des dritten Meßrohrs und zu den Biegeschwingungen des dritten Meßrohrs bezüglich der zweiten gedachten Längsschnittebene der Rohranordnung gegengleiche Biegeschwingungen des vierten Meßrohrs wandelt. Diese Ausgestaltung der Erfindung weiterbildend ist ferner vorgesehen, daß das wenigstens eine Treibersignal dem ersten Schwingungserreger zugeführt ist, etwa derart, daß dessen Zylinderspule von einem von einer mittels des ersten Treibersignals bereitgestellten veränderlichen ersten Erregerspannung getriebenen ersten Erregerstrom durchflossen ist. Alternativ oder in Ergänzung kann das wenigstens eine Treibersignal eine Vielzahl von Signalkomponenten mit voneinander verschiedener Signalfrequenz aufweisen, wobei wenigstens eine der Signalkomponenten, etwa eine hinsichtlich einer Signalleistung dominierende Signalkomponente, des ersten Treibersignals eine einer Eigenfrequenz eines natürlichen Schwingungsmodes der Rohranordnung, beispielsweise des Biegeschwingungsmodes erster Art, in dem jedes der vier Meßrohre Biegeschwingungen ausführt, entsprechende Signalfrequenz aufweist.

Nach einer vierten Ausgestaltung des Meßsystems der Erfindung ist ferner vorgesehen, daß die Umformer-Elektronik anhand von in der Erregeranordnung umgesetzter elektrischer Erregerleistung einen die Viskosität des strömenden Mediums repräsentierenden Viskosität-Meßwert generiert; und/oder daß die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert.

Ein Grundgedanke der Erfindung besteht darin, anstelle der bei konventionellen Meßaufnehmern großer Nennweite üblicherweise verwendeten Rohranordnungen mit zwei parallel durchströmten Meßrohren Rohranordnungen mit vier parallel durchströmte, V-förmig gebogene Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 1000 t/h, gewährleisten zu können. Darüber hinaus kann der sich aus dem Gesamtquerschnitt der vier Meßrohre ergebende effektive Strömungsquerschnitt der Rohranordnung im Vergleich zu herkömmlichen nur zwei Meßrohre aufweisenden Meßaufnehmern gleicher nomineller Nennweite und gleicher Leermasse ohne weiteres um mehr als 20% erhöht werden.

Ein Vorteil der Erfindung besteht zudem u.a. darin, daß durch die Verwendung gebogener Meßrohre dauerhafte mechanische Spannungen, beispielsweise infolge thermisch bedingter Ausdehnung der Meßrohre oder infolge von seitens der Rohranordnung in den Meßaufnehmer eingetragener Einspannkräfte, innerhalb der Rohranordnung weitgehend vermieden oder zumindest sehr niedrig gehalten und damit einhergehend die Meßgenauigkeit wie auch die strukturelle Integrität des jeweiligen Meßaufnehmers auch bei extrem heißen Medien bzw. zeitlich stark schwankenden Temperaturgradienten innerhalb der Rohranordnung sicher erhalten werden. Darüberhinaus können aufgrund der Symmetrieeigenschaften der Rohranordnung auch jene durch Biegeschwingungen gebogener Meßrohre Querkräfte weitgehend neutralisiert werden, die - wie u.a. in den eingangs erwähnten EP-A 1 248 084 und US-B 73 50 421 diskutiert - im wesentlich senkrecht zu den Längsschnittebenen des jeweiligen Meßaufnehmers bzw. dessen Rohranordnung wirken und für die Meßgenauigkeit von Meßaufnehmern vom Vibrationstyp durchaus schädlich sein können. Zudem konnte bei Meßaufnehmern der vorgenannten Art im Vergleich zu konventionellen Meßaufnehmern mit nur einem oder zwei gebogenen Meßrohren eine erhöhte Schwingungsgüte des Meßaufnehmers insgesamt, dies nicht zuletzt auch infolge einer erheblich geringer ausfallenden Dissipation von Schwingungsenergie aus dem Meßaufnehmer in die daran angeschlossene Rohrleitung, etwa infolge von eigentlich unerwünschten Deformationen der Strömungsteiler, festgestellt werden. Darüberhinaus weisen die Schwingungen der Meßrohre von Meßaufnehmern gemäß der vorliegenden Erfindung auch eine - im Vergleich zu herkömmlichen Meßaufnehmer - erheblich verringerte Druckstoß- bzw. Schallabhängigkeit auf.

Ein weiterer Vorteil des erfindungsgemäßen Meßaufnehmers ist ferner auch darin zu sehen, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher besonders zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 1000 t/h sind, insb. zumindest zeitweise mehr als 1500 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fign. 1, 2: ein, beispielsweise als Coriolis-Durchfluss/Dichte/Viskositäts-Meßgerät dienendes, In-Line-Meßgerät in perspektivischen, teilweise auch geschnittenen, Seitenansichten;
- Fign. 3a, b: eine Projektion des In-line-Meßgerät gemäß Fig. 1 in zwei verschiedenen Seitenansichten;
- Fig. 4a: in perspektivischer Seitenansicht einen Meßaufnehmer vom Vibrationstyp mit einer mittels vier gebogenen Meßrohren gebildeten Rohranordnung, eingebaut in ein In-line-Meßgerät gemäß Fig. 1;
- Fig. 4b: in perspektivischer Seitenansicht die Rohranordnung gemäß Fig. 4a;
- Fign. 5a, b: eine Projektion des Meßaufnehmers gemäß Fig. 4a in zwei verschiedenen Seitenansichten;
- Fign. 6a, b: Projektionen einer Rohranordnung gemäß Fig. 4b zwei verschiedenen Seitenansichten; und
- Fign. 7a, b: schematisch Schwingungsmoden (V-Mode; X-Mode) einer Rohranordnung gemäß Fig. 4b, jeweils in Projektion auf eine gedachte Querschnittsebene nämlicher Rohranordnung.

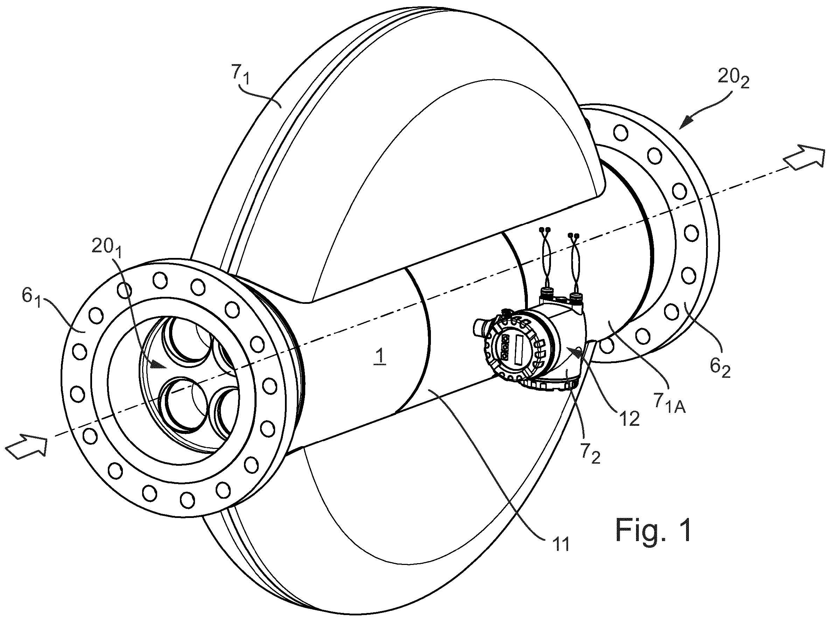

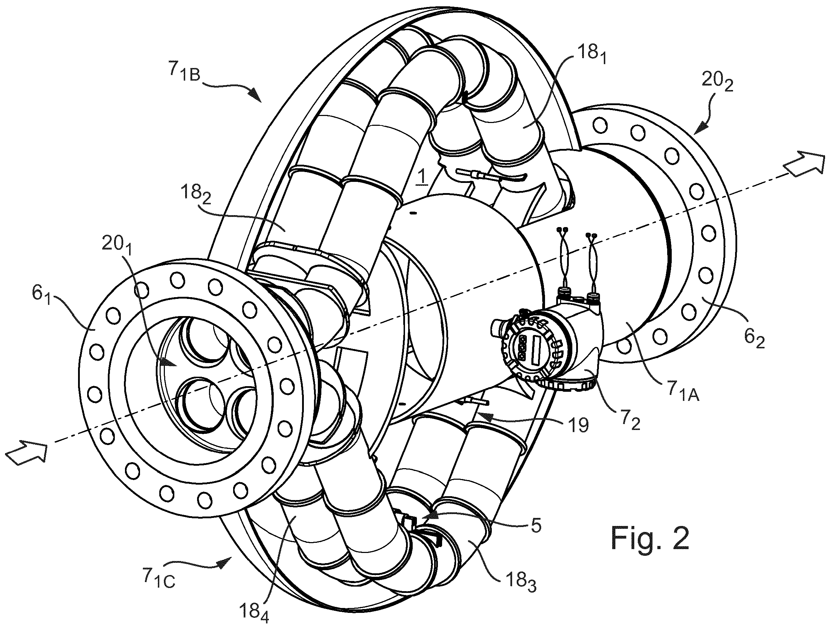

In den Fig. 1, 2 ist ein, insb. als Coriolis-Massedurchfluß- und/oder Dichte-Meßgerät ausgebildetes, Meßsystem 1 schematisch dargestellt, das im nicht zuletzt dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte ρ und/oder eine Viskosität η des Mediums zu messen. Im besonderen ist das Meßsystem 1 dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Nicht zuletzt ist das In-Line-Meßgerät auch dafür vorgesehen strömende Medien der vorgenannten Art zu messen, die mit einer Massendurchflußrate von größer als 1000 t/h, insb. von größer 1500 t/h, strömen gelassen sind.

Das - hier als In-Line-Meßgerät, nämlich in den Verlauf der Rohrleitung einsetzbares Meßgerät, in Kompaktbauweise gezeigte - Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen dargestellte - Umformer-Elektronik 12 zum Ansteuern des Meßaufnehmers und zum Auswerten von vom Meßaufnehmer gelieferten Schwingungssignalen. In vorteilhafter Weise kann die, beispielsweise mittels einem oder mehreren Mikroprozessoren und/oder mittels eines oder mehreren digitalen Signalprozessoren gebildete Umformer-Elektronik 12 z.B. so ausgelegt sein, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 so ausgelegt sein, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, kann die, beispielsweise auch vor Ort und/oder via Kommunikationssystem reprogrammierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

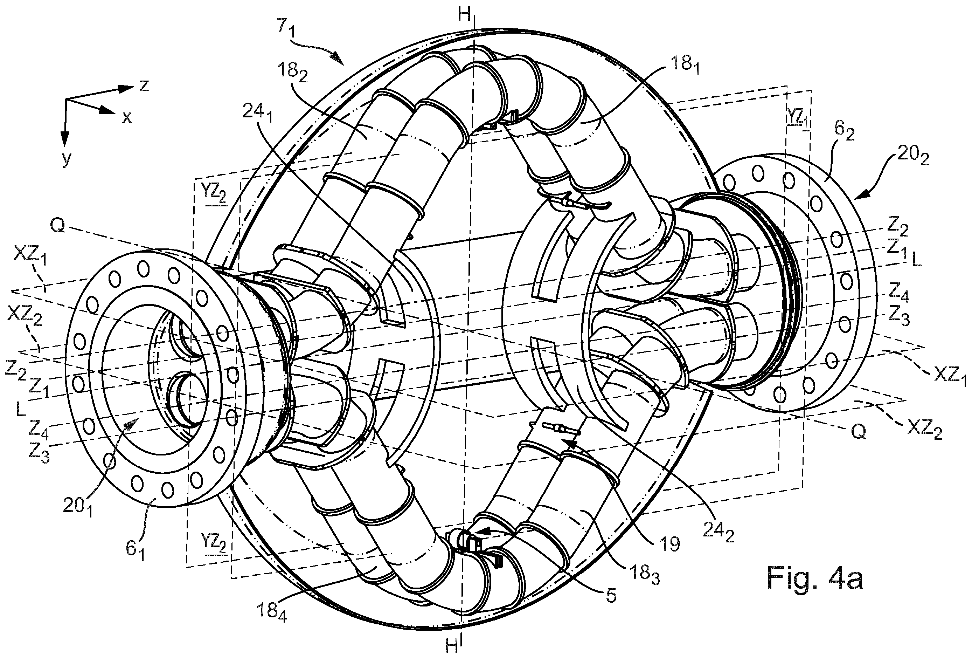

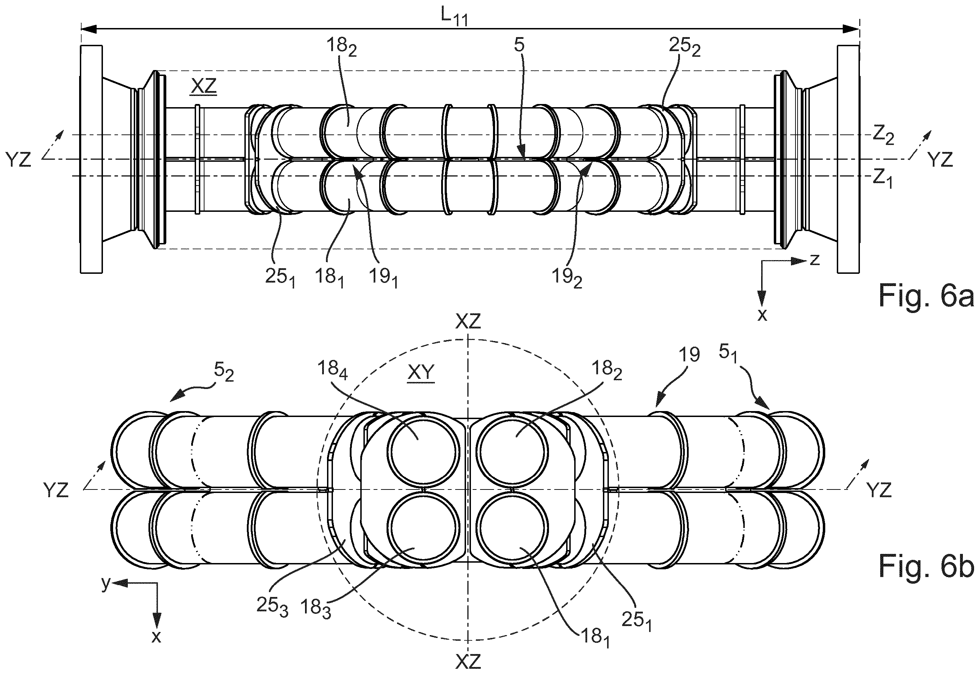

In den Fig. 4a, 4b, 5a, 5b, 6a, 6b ist in unterschiedlichen Darstellungen ein Ausführungsbeispiel für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. die m Massendurchflußrate, mithin der Massendurchfluß, und/oder die Dichte und/oder die Viskosität des Mediums gemessen werden.

Der Meßaufnehmer 11 weist ein - hier teilweise im wesentlichen rohrförmiges, mithin auch außen teilweise kreiszylindrisches - Aufnehmer-Gehäuse 7₁ auf, in dem weitere, dem Erfassen der wenigstens einen Meßgröße dienende Komponenten des Meßaufnehmers 11 vor äußeren Umwelteinflüssen, mithin Staub oder Spritzwasser oder auch allfällig auf den Meßaufnehmer von außen einwirkenden Kräften etc., geschützt untergebracht sind. Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D} bzw. 20_{2A}, 20_{2B}, 20_{2C}, 20_{2D} auf. Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6₁₄ bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht. Infolge der für den Meßaufnehmer im besondern angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4a ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem - nicht zuletzt auch bei angestrebt hohen Massendurchflußraten von über 1000 t/h - sind nach einer anderen Ausgestaltung der Erfindung die Einbaulänge und die nominelle Nennweite des Meßaufnehmers aufeinander abgestimmt so bemessen, daß ein Nennweite-zu-Einbaulänge-Verhältnis D₁₁/L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist. Im hier gezeigten Ausführungsbeispiel ist zumindest ein Mittelsegment 7_{1A} des Aufnehmer-Gehäuses 7₁ mittels eines geraden - hier auch kreiszylindrischen und zunächst dreiteiligen - Rohres gebildet, so daß zur Fertigung des Aufnehmer-Gehäuses 7₁ beispielsweise auch standardisierte, mithin kostengünstige, geschweißte oder gegossenen Standardrohre, beispielsweise aus Stahlguß oder geschmiedetem Stahl, verwendet werden können. Wie aus der Zusammenschau der Fig. 1 und 2 ferner ohne weiteres ersichtlich, kann das Mittelsegment 7_{1A} des Aufnehmer-Gehäuses 7₁ hierbei beispielsweise auch mittels eines in etwa das Kaliber der anzuschließenden Rohrleitung aufweisenden, mithin mit einer nominellen Nennweite D₁₁ des Meßaufnehmers korrespondierenden, Rohrs gebildet sein, insb. einem hinsichtlich Kaliber, Wandstärke und Material der anzuschließenden Rohrleitung entsprechenden und insoweit auch hinsichtlich des erlaubten Betriebsdrucks entsprechend angepaßten Rohr. Nicht zuletzt für den Fall, daß das rohrförmige Mittelsegment wie auch die mit dem jeweiligen Flansch verbundenen Strömungsteiler im Vor- bzw. Auslaufbereich jeweils den gleichen Innendurchmesser aufweisen, kann das Aufnehmer-Gehäuses zudem auch in der Weise gebildet werden, daß an die Enden des das Mittelsegment bildenden Rrohrs die Flansche angeformt oder angeschweißt sind, und daß die Strömungsteiler mittels, insb. von den Flanschen etwas beabstandet, an die Innenwand orbital und/oder mittels Laser angeschweißten, die Strömungsöffnungen aufweisenden Platten gebildet sind.

Zum Führen des zumindest zeitweise durch Rohrleitung und Meßaufnehmer strömenden Mediums umfaßt der erfindungsgemäße Meßaufnehmer ferner eine Rohranordnung mit genau vier im Aufnehmer-Gehäuse 10 schwingfähig gehalterte gebogene - wie hier schematisch dargestellt - zumindest abschnittsweise V-förmige, Meßrohre 18₁, 18₂, 18₃, 18₄. Die vier - hier gleichlangen sowie paarweise parallelen - Meßrohre kommunizieren jeweils mit der an den Meßaufnehmer angeschlossenen Rohrleitung und werden im Betrieb zumindest zeitweise, insb. auch simultan, in wenigstens einem für Ermittlung der physikalischen Meßgröße geeigneten, aktiv angeregten Schwingungsmode - dem sogenannten Nutzmode - vibrieren gelassen. Von den vier Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ - hier nämlich an dessen Mittelsegment 7_{1A} - schwingfähig gehaltert sind. Als Material für die Rohrwände der Meßrohre eignet sich beispielsweise rostfreier, ggf. auch hochfester, Edelstahl, Titan, Zirkonium oder Tantal bzw. damit gebildete Legierungen oder auch Superlegierungen, wie etwa Hastelloy, Inconel etc.. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Alternativ oder in Ergänzung sind nach einer weiteren Ausgestaltung der Erfindung zumindest das erste und das zweite Meßrohr 18₁, 18₂ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Vorzugsweise sind die vier Meßrohre 18₁, 18₂, 18₃, 18₄ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, baugleich realisiert, insb. derart, daß im Ergebnis zumindest eine minimale Biegeschwingungs-Resonanzfrequenz jedes der vier - leeren oder gleichmäßig von einem homogenen Medium durchströmten - Meßrohre 18₁, 18₂, 18₃, 18₄ im wesentlichen gleich den jeweiligen minimalen Biegeschwingungs-Resonanzfrequenzen der verbleibenden anderen Meßrohre ist.

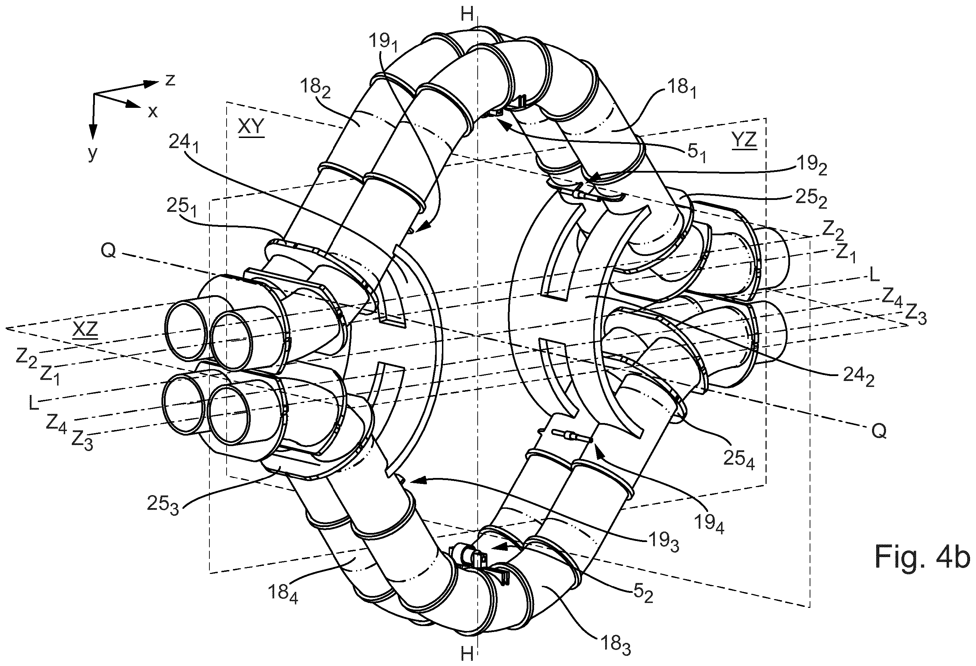

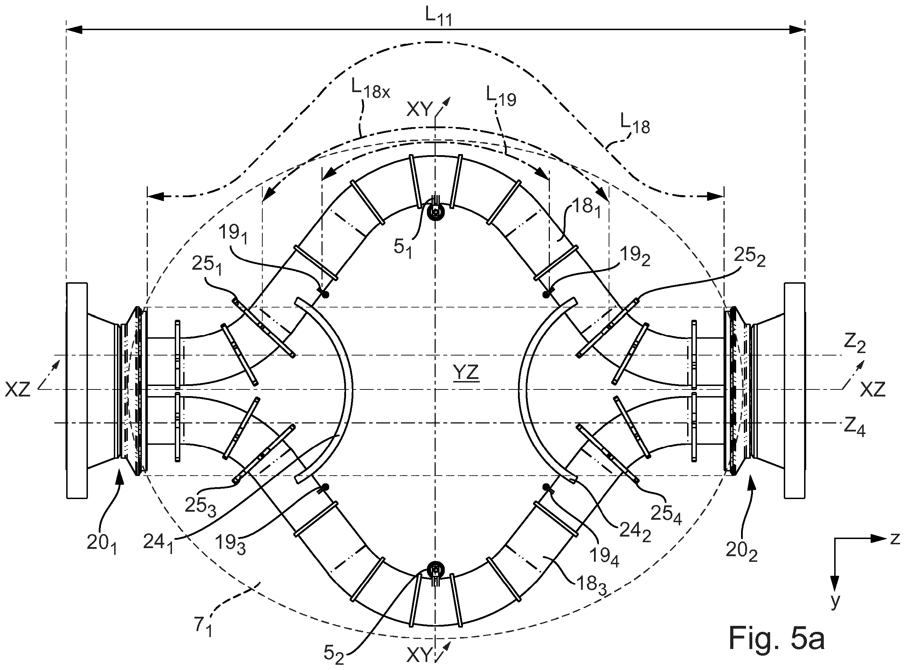

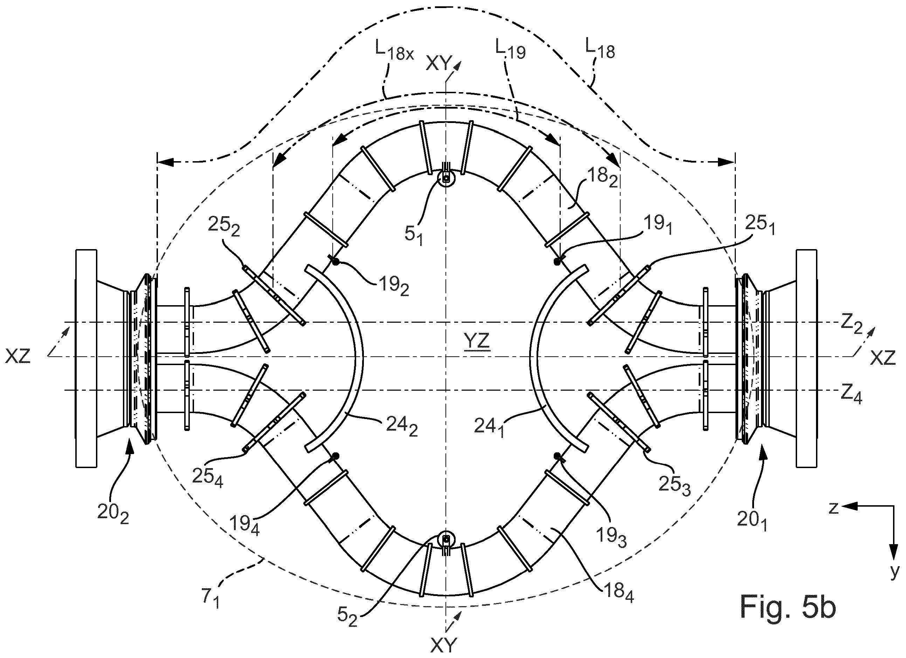

Beim erfindungsgemäßen Meßaufnehmer sind die Meßrohre - wie auch aus der Zusammenschau der Fig. 2, 4a und 4 b ohne weiteres ersichtlich - ferner so ausgebildet und im Meßaufnehmer angeordnet, daß die Rohranordnung eine sowohl zwischen dem ersten Meßrohr 18₁ und dem dritten Meßrohr 18₃ als auch zwischen dem zweiten Meßrohr 18₂ und dem vierten Meßrohr 18₄ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem ersten Meßrohr 18₁ und zweiten Meßrohr 18₂ als auch zwischen dem dritten Meßrohr 18₃ und vierten Meßrohr 18₄ verlaufende zweite gedachte Längsschnittebene YZ aufweist, bezüglich der die Rohranordnung gleichfalls spiegelsymmetrisch ist. Im Ergebnis dessen sind nicht nur durch allfällige thermisch bedingte Ausdehnung der Meßrohre innerhalb der Rohranordnung generierte mechanische Spannungen minimiert, sondern können auch durch die Biegeschwingungen der gebogenen Meßrohre innerhalb der Rohranordnung allfällig induzierte, im wesentlichen senkrecht zur Schnittlinie der beiden vorgenannten gedachten Längsschnittebenen wirkende Querkräfte weitgehend neutralisiert werden, nicht zuletzt auch jene, u.a. auch in den eingangs erwähnten EP-A 1 248 084 und US-B 73 50 421 erwähnten, Querkräfte, die im wesentlichen senkrecht zur ersten gedachten Längsschnittebene XZ gerichtet sind. Wie nicht zuletzt auch aus den Fig. 4a, 4b, 5a, 5b ersichtlich, weist im hier gezeigten Ausführungsbeispiel jedes der vier Meßrohre jeweils einen Meßrohr-Scheitelpunkt, definiert als größter senkrechter Abstand des jeweiligen Meßrohres von der ersten gedachten Längsschnittebene XZ, auf. Im übrigen weist die die Rohranordnung, wie auch aus der Zusammenschau der Fig. 4a-6b ohne weiteres ersichtlich, eine sowohl zur ersten gedachten Längsschnittebene XZ als auch zur zweiten gedachten Längsschnittebene YZ jeweils senkrechte gedachte Querschnittebene XY auf. Gemäß einer vorteilhaften Ausgestaltung der Erfindung ist die Rohranordnung ferner so ausgebildet, daß ein Massenschwerpunkt der Rohranordnung in der gedachten Querschnittsebene XY liegt bzw. daß die Rohranordnung bezüglich der gedachten Querschnittsebene XY spiegelsymmetrisch ist, etwa derart, daß die gedachte Querschnittsebene XY jedes der vier Meßrohre in dessen jeweiligen Meßrohr-Scheitelpunkt schneidet.

Zur weiteren Symmetrisierung des Meßaufnehmers und insoweit auch zur weiteren Vereinfachung von dessen Aufbau sind die beiden Strömungsteiler 20₁, 20₂ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung 20_{1A} des ersten Strömungsteilers 20₁ mit der ersten Strömungsöffnung 20_{2A} des zweiten Strömungsteilers 20₂ imaginär verbindende gedachte erste Verbindungsachse Z₁ des Meßaufnehmers parallel zu einer die zweite Strömungsöffnung 20_{1B} des ersten Strömungsteilers 20₁ mit der zweiten Strömungsöffnung 20_{2B} des zweiten Strömungsteilers 20₂ imaginär verbindende gedachten zweiten Verbindungsachse Z₂ des Meßaufnehmers verläuft, und daß eine die dritte Strömungsöffnung 20_{1C} des ersten Strömungsteilers 20₁ mit der dritten Strömungsöffnung 20_{2C} des zweiten Strömungsteilers 20₂ imaginär verbindende gedachte dritten Verbindungsachse Z₃ des Meßaufnehmers parallel zu einer die vierte Strömungsöffnung 20_{1D} des ersten Strömungsteilers 20₁ mit der vierten Strömungsöffnung 20_{2B} des zweiten Strömungsteilers 20₂ imaginär verbindende gedachten vierten Verbindungsachse Z₄ des Meßaufnehmers verläuft. Wie in der Fig. 4a und 4b gezeigte, sind die Strömungsteiler ferner so ausgebildet und im Meßaufnehmer so angeordnet, daß die Verbindungsachsen Z₁, Z₂, Z₃, Z₄ auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler 20₁, 20₂ zudem auch so ausgebildet und so im Meßaufnehmer angeordnet sein, daß eine erste gedachte Längsschnittebene XZ₁ des Meßaufnehmers, innerhalb der die erste gedachte Verbindungsachse Z₄ und die zweite gedachte Verbindungsachse Z₂ verlaufen, parallel zu einer zweiten gedachten Längsschnittebene XZ₂ des Meßaufnehmers ist, innerhalb der die gedachte dritte Verbindungsachse Z₃ und die gedachte vierte Verbindungsachse Z₄ verlaufen.

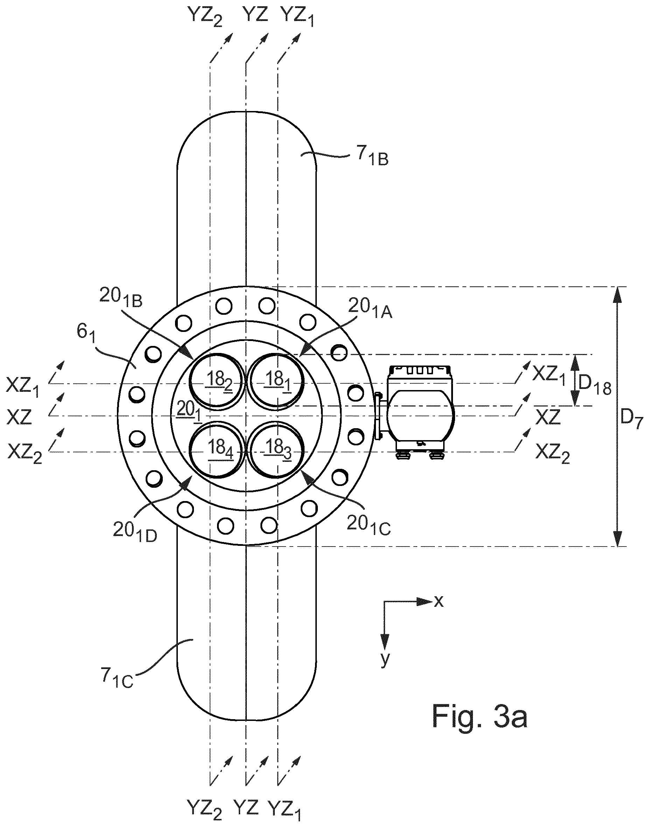

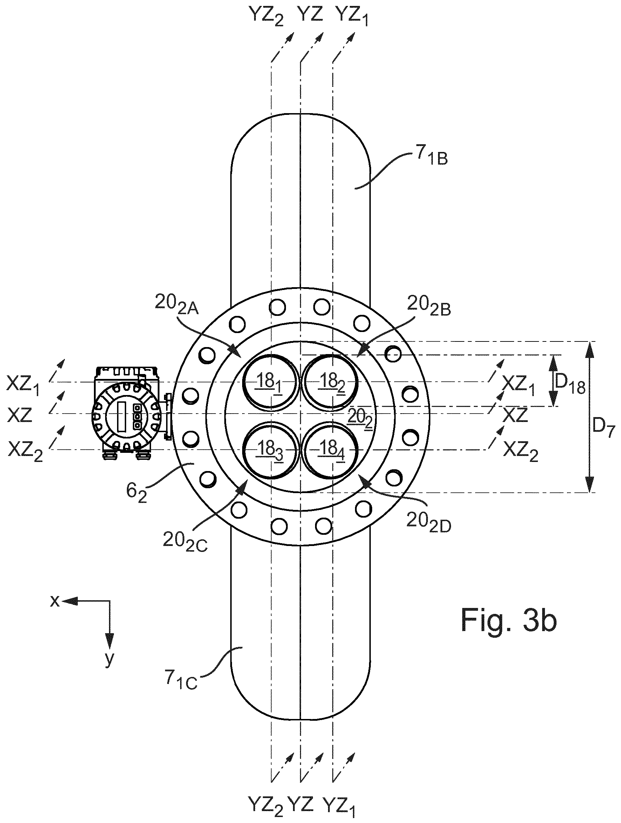

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene XZ₁ des Meßaufnehmers und der vorgenannten zweiten gedachten Längsschnittebene XZ₂ des Meßaufnehmers liegt, beispielsweise auch so, daß die erste Längsschnittebene XZ der Rohranordnung parallel zur ersten und zweiten Längsschnittebene XZ₁,XZ₂ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene YZ₁ des Meßaufnehmers und der vierten gedachten Längsschnittebene YZ₂ des Meßaufnehmers verläuft, etwa derart, daß die zweite gedachte Längsschnittebene YZ der Rohranordnung parallel zur dritten gedachten Längsschnittebene YZ₁des Meßaufnehmers und parallel zur vierten gedachten Längsschnittebene YZ₂ des Meßaufnehmers ist. Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Aufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel zu einer zur Längsachse L senkrechten gedachten Querachse Q des Meßaufnehmers und eine gemeinsame Schnittlinie der zweiten Längsschnittebene YZ und der Querschnittsebene XY parallel zu einer zur Längsachse L senkrechten gedachten Hochachse H des Meßaufnehmers sind.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten Rechteck oder eines gedachten Quadrats, bilden, wobei nämliche Querschnittsflächen wiederum in einer gemeinsamen gedachten, senkrecht zu einer - beispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Rechtecks bzw. Quadrats bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen. Gemäß einer weiteren Ausgestaltung der Erfindung sind die Meßrohre so gebogen und so im Meßaufnehmer angeordnet, daß ein Kaliber-zu-Höhe-Verhältnis D₁₈/Q₁₈ der Rohranordnung, definiert durch ein Verhältnis des Kalibers, D₁₈, des ersten Meßrohrs zu einer maximalen seitlichen Ausdehnung der Rohranordnung Q₁₈, gemessen von einem Scheitelpunkt des ersten Meßrohrs zu einem Scheitelpunkt des dritten Meßrohrs bzw. gemessen von einem Scheitelpunkt des zweiten Meßrohrs zu einem Scheitelpunkt des vierten Meßrohrs, mehr als 0.05, insb. mehr als 0.07 und/oder weniger als 0.35, insb. weniger als 0.2, beträgt.

Zwecks der Realisierung eines möglichst kompakten Meßaufnehmers, nicht zuletzt auch für den erwähnten Fall, daß dieser eine vergleichsweise große nominelle Nennweite von 250 mm oder mehr aufweisen soll, und/oder daß die Meßrohre seitlich vergleichsweise weitausladend sind, kann das Aufnehmer-Gehäuse 7₁, wie aus der Zusammenschau der Fig. 1 und 2 ferner ohne weiteres ersichtlich, in vorteilhafter Weise ferner dadurch gebildet sein, daß das Aufnehmer-Gehäuse 7₁ mittels eines - hier zwecks vereinfachter Handhabung beispielsweise zunächst dreiteiligen, also aus drei einzelnen Segmente zusammengefügtes - entsprechende seitliche Ausnehmungen aufweisenden Rohres, das - wie bereits angedeutet - in etwa das Kaliber der anzuschließenden Rohrleitung aufweist, mithin mit einer nominellen Nennweite D₁₁ des Meßaufnehmers korrespondiert, sowie seitlich an dem schlußendlich das Mittelssegment des Aufnehmergehäuses bildenden Rohr fixierten, etwa angeschweißten, seitlich aus dem Mittelssegment herausragende Segmente der Meßrohre umgebende, insb. baugleichen, Gehäusekappen 7_{1B}, 7_{1C} gebildet sein. Von den beiden Gehäusekappen 7_{1B}, 7_{1C} können - wie aus der Zusammenschau der Fig. 1-4a ersichtlich - z.B. eine erste Gehäusekappe 7_{1B} über ein auf einer ersten Seite aus dem - nicht zuletzt auch als Traggestell für die Rohranordnung dienenden, mithin als Trägerrohr ausgebildeten - Mittelsegment herausragendes Segment des ersten Meßrohrs und ein auf der ersten Seite aus dem Mittelsegment herausragendes Segment des zweiten Meßrohrs und eine, etwa zur ersten Gehäusekappe baugleiche, zweite Gehäusekappe 7_{1C} über ein auf einer der ersten Seite gegenüberliegenden zweiten Seite aus dem Mittelsegment herausragendes Segment des dritten Meßrohrs und ein auf der zweiten Seite aus dem Mittelsegment herausragendes Segment des vierten Meßrohrs gestülpt sein. Im Ergebnis dessen sind die Meßrohre 18₁, 18₂, 18₃, 18₄ bzw. die damit gebildete Rohranordnung des Meßaufnehmers 11 sind, wie aus der Zusammenschau der Fign. 1, 2 und 4a ohne weiteres ersichtlich vom - hier mittels des im besonderen auch als Trägerohr dienenden Mittelsegment sowie der daran seitlich fixierten zwei Gehäusekappen gebildeten - Aufnehmer-Gehäuse 7₁ vollständig umhüllt. Für den vorgenannten Fall, daß das Aufnehmergehäuse mittels des rohrförmigen Mittelsegement und den daran seitlich fixierten Gehäusekappen gebildet ist, sind die vier Meßohre 18₁, 18₂, 18₃, 18₄ und das Aufnehmergehäuse 7₁ nach einer weiteren Ausgestaltung der Erfindung - nicht zuletzt auch zwecks einer Minimierung der Einbaumaße des gesamten Meßaufnehmers - aufeinander abgestimmt ferner so bemessen, daß ein Trägerrohr-zu-Meßrohr-Innendurchmesser-Verhältnis des Meßaufnehmers, definiert durch ein Verhältnis des größten Innendurchmessers des als Trägerrohr ausgebildeten Mittelsegments des Aufnehmergehäuses zu einem Kaliber D₁₈ des ersten Meßrohrs größer als 3 und/oder kleiner als 5, insb. kleiner als 4, ist.

Als Material für das Aufnehmer-Gehäuse 7₁ können im übrigen Stähle, wie etwa Baustahl bzw. rostfreier Stahl, oder auch andere geeignete bzw. üblicherweise hierfür geeignete hochfeste Werkstoffe verwendet werden. Für die meisten Anwendungen der industriellen Meßtechnik, insb. auch in der petrochemischen Industrie, können zudem auch Meßrohre aus rostfreiem Stahl, beispielsweise auch Duplexstahl, Superduplexstahl oder einem anderen (hochfesten) Edelstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann. Überdies kann das Aufnehmer-Gehäuse 7₁ ferner in vorteilhafter Weise auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik 12 im Betrieb intern erzeugten Betriebsparametern möglichst frühzeitig erfaßt und signalisiert werden können. Zur Vereinfachung des Transports des Meßaufnehmers bzw. des gesamten damit gebildeten In-line-Meßgeräts können ferner, wie beispielsweise auch in der eingangs erwähnten US-B 73 50 421 vorgeschlagen, einlaßseitig und auslaßseitig am außen am Aufnehmer-Gehäuse fixierte eine Transport-Öse vorgesehen sein.

Wie bereits eingangs erwähnt, werden beim Meßaufnehmer 11 die für die Messung erforderlichen Reaktionskräfte im jeweils zu messenden Medium durch das, beispielsweise simultane, Schwingenlassen der Meßrohre 18₁, 18₂, 18₃, 18₄ in einem aktiv angeregten Schwingungsmode, dem sogenannten Nutzmode, bewirkt. Zum Anregen von Schwingungen der Meßrohre, nicht zuletzt auch denen im Nutzmode, umfaßt der Meßaufnehmer ferner eine mittels wenigstens eines auf die Meßrohre 18₁, 18₂, 18₃, 18₄ einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger, mithin die damit gebildete Erregeranordnung dient hierbei im besonderen dazu, eine von der Umformer-Elektronik - etwa mittels wenigstens eines elektrischen Treibersignals - eingespeiste elektrische Erregerleistung P_{exc} in solche, z.B. pulsierenden oder harmonischen, Erregerkräfte F_{exc} zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter auf die anderen zwei Meßrohre mechanisch gekoppelt werden, und so Schwingungen im Nutzmode bewirken. Die - durch Konvertierung von in die Erregeranordnung eingespeister elektrischer Erregerleistung P_{exc} generierten - Erregerkräfte F_{exc} können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz, vgl. hierzu beispielsweise auch die US-A 48 01 897 oder die US-B 63 11 136. Gemäß einer weiteren Ausgestaltung der Erfindung ist daher ferner vorgesehen, daß die Umformer-Elektronik für die Generierung der Erregerkräfte benötigte elektrische Erregerleistung in die Erregeranordnung mittels wenigstens eines, dem Schwingungserreger, mithin der Erregeranordnung beispielsweise via Verbindungsleitungen zugeführten und/oder zumindest zeitweise periodischen, elektrischen Treibersignals einspeist, das mit wenigstens einer mit einer einer Eigenfrequenz eines natürlichen Schwingungsmodes der Rohranordnung, etwa dem erwähnten V-Mode oder dem erwähnten X-Mode, entsprechenden Signalfrequenz veränderlich ist. Beispielsweise kann das wenigstens eine Treibersignal auch eine Vielzahl von Signalkomponenten mit voneinander verschiedener Signalfrequenz aufweisen, von denen wenigstens eine - etwa eine hinsichtlich einer Signalleistung dominierende - Signalkomponente eine einer Eigenfrequenz eines natürlichen Schwingungsmodes der Rohranordnung in dem jedes der vier Meßrohre Biegeschwingungen ausführt, beispielsweise also dem erwähnten Biegeschwingungsmode erster Art, entsprechende Signalfrequenz aufweist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal hinsichtlich einer maximalen Spannungshöhe (Spannungsamplitude) und/oder einer maximalen Stromstärke (Stromamplitude) veränderlich auszuführen - etwa derart, daß beispielsweise Zylinderspule des wenigstens einen Schwingungserregers von einem von einer mittels nämlichen Treibersignals bereitgestellten veränderlichen Erregerspannung getriebenen Erregerstrom durchflossen ist.

Ziel der aktiven Anregung der Meßrohre zu Schwingungen ist es im Besonderen, nicht zuletzt auch für den Fall, daß das mittels des Meßaufnehmers schlußendlich gebildete Meßsystem zur Messung des Massendurchflusses verwendet werden soll, mittels der im Nutzmode vibrierenden Meßrohre im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können die Meßrohre 18₁, 18₂, 18₃, 18₄ mittels der daran gehalterten elektro-mechanischen Erregeranordnung zu, insb. simultanen, Biegeschwingungen, insb. auf einer momentanen mechanischen Eigenfrequenz der mittels der vier Meßrohre 18₁, 18₂, 18₃, 18₄ gebildeten Rohranordnung, angeregt werden, bei denen sie - zumindest überwiegend - lateral ausgelenkt und, wie aus der Zusammenschau der Fign. 3a, 3b, 6a, 6b, 7a, 7b für den Fachmann ohne weiteres ersichtlich, paarweise zueinander im wesentlichen gegengleich schwingen gelassen werden. Dies im besonderen derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen Z₁, Z₂, Z₃, Z₄ jeweils parallele gedachte Schwingungssachse ausgebildet sind, wobei die vier Schwingungssachsen im hier gezeigten Ausführungsbeispiel gleichermaßen zueinander wie auch zu der die beiden Strömungsteiler imaginär verbindenden und durch einen Massenschwerpunkt des Meßaufnehmers gedachten Längsachse L des gesamten Meßaufnehmers parallel sind. Anders gesagt, können die Meßrohre, wie bei Meßaufnehmern vom Vibrationstyp mit einem oder mehr gebogenen Meßrohren durchaus üblich, jeweils zumindest abschnittsweise nach Art eines endseitig eingespannten Auslegers schwingen gelassen werden, mithin also Ausleger-Biegeschwingungen um jeweils eine zu wenigstens zwei der gedachten Verbindungsachsen Z₁, Z₂, Z₃, Z₄ parallele gedachte Schwingungsachse ausführen. Gemäß einer Ausgestaltung der Erfindung ist die Erregeranordnung ferner derart ausgebildet ist, daß damit das erste Meßrohr 18₁ und das zweite Meßrohr 18₂ zu bezüglich der zweiten gedachten Längsschnittebene YZ gegengleichen, insb. auch zu bezüglich der zweiten gedachten Längsschnittebene YZ symmetrischen, Biegeschwingungen und das dritte Meßrohr 18₃ und das vierte Meßrohr 18₄ zu bezüglich der zweiten gedachten Längsschnittebene YZ gegengleichen, insb. auch zu bezüglich der zweiten gedachten Längsschnittebene YZ symmetrischen, Biegeschwingungen anregbar sind. Alternativ oder in Ergänzung dazu ist die Erregeranordnung nach einer weiteren Ausgestaltung der Erfindung ferner derart ausgebildet, daß damit das erste Meßrohr 18₁ und das dritte Meßrohr 18₃ zu bezüglich der zweiten gedachten Längsschnittebene YZ gegengleichen, beispielsweise auch zu bezüglich der zweiten gedachten Längsschnittebene YZ symmetrischen, Biegeschwingungen und das zweite Meßrohr 18₂ und das vierte Meßrohr 18₄ zu bezüglich der zweiten gedachten Längsschnittebene YZ gegengleichen, beispielsweise zu bezüglich der zweiten gedachten Längsschnittebene YZ symmetrischen, Biegeschwingungen anregbar sind.

Gemäß einer weiteren Ausgestaltung der Erfindung sind die Meßrohre 18₁, 18₂, 18₃, 18₄ im Betrieb mittels der Erregeranordnung 5 im Nutzmode ferner zumindest anteilig, insb. überwiegend, zu Biegeschwingungen angeregt, die eine Biegeschwingungsfrequenz aufweisen, die in etwa gleich einer momentanen mechanischen Resonanzfrequenz der die vier Meßrohre 18₁, 18₂, 18₃, 18₄ umfassenden Rohranordnung, mithin einer momentanen Eigenfrequenz eines Biegeschwingungsmode der Rohranordnung entspricht, ist oder die zumindest in der Nähe einer solchen Eigen- oder Resonanzfrequenz liegt. Die momentanen mechanischen Resonanzfrequenzen von Biegeschwingungen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf jeweils ein und derselben, insoweit einer gemeinsamen, natürlichen mechanischen Eigenfrequenz, schwingen gelassen. In vorteilhafter Weise sind das Schwingungsverhalten der mittels der vier Meßrohre 18₁, 18₂, 18₃, 18₄ gebildeten Rohranordnung wie auch die die Erregeranordnung steuernden Treibersignale ferner so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ - etwa nach Art zweier Stimmgabelzinken - zueinander im wesentlichen gegengleich, mithin zumindest in der gedachten Querschnittsebene XY mit einer gegenseitigen Phasenverschiebung von etwa 180°, schwingen und auch das dritte und das vierte Meßrohr 18₃, 18₄ gleichermaßen zueinander im wesentlichen gegengleich schwingen.

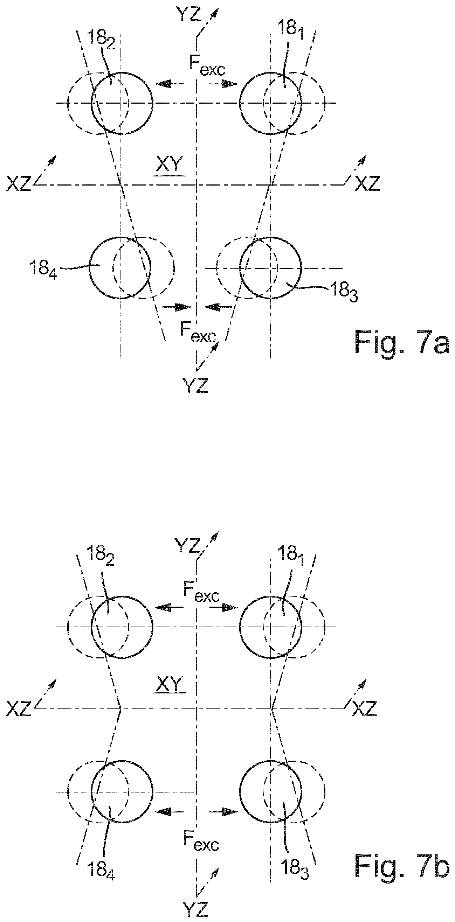

Untersuchungen an Meßsystemen mit einem Meßaufnehmer gemäß der in Rede stehenden Art haben ferner überraschender Weise ergeben, daß sich als Nutzmode, nicht zuletzt auch für die Ermittlung der Massendurchflußrate sowie der Dichte des im Meßaufnehmer geführten Mediums, im besonderen jener der Rohranordnung innewohnende natürliche - im weiteren als Biegeschwingungsgrundmode erster Art oder auch als V-Mode bezeichnete - Schwingungsmode eignet, in dem - wie auch in Fig. 7a schematisch dargestellt - das erste Meßrohr und das zweite Meßrohr bezüglich der zweiten gedachten Längsschnittebene YZ gegengleiche Biegeschwingungen um jeweils eine dem jeweiligen Meßrohr zugehörige statische Ruhelage ausführen, und in dem das dritte Meßrohr und das vierte Meßrohr bezüglich der zweiten gedachten Längsschnittebene ebenfalls gegengleiche Biegeschwingungen um jeweils eine dem jeweiligen Meßrohr zugehörige statische Ruhelage ausführen, und zwar so, daß - bezüglich der zweiten gedachten Längsschnittebene YZ - nämliche Biegeschwingungen des ersten Meßrohrs auch gegengleich zu nämlichen Biegeschwingungen des dritten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des vierten Meßrohrs sind. Die - hier ebenfalls als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise V-förmig erscheinen lassenden (vgl. Fig. 7a) - gegengleichen Biegeschwingungen des ersten und zweiten Meßrohrs bzw. des dritten und vierten Meßrohrs im V-Mode sind bei symmetrisch aufgebauter Rohranordnung und gleichmäßig durchströmter Rohranordnung zudem bezüglich der zweiten gedachten Längsschnittebene YZ symmetrisch ausgebildet. Die besondere Eignung des V-Modes als Nutzmode für Meßaufnehmer mit vier gebogenen Meßrohren konnte dabei nicht zuletzt auch auf die für das Schwingverhalten des Meßaufnehmers - sowohl räumlich als auch zeitlich gesehen - dabei insgesamt sehr günstig ausfallenden Spannungsverteilung im Meßaufnehmer, nicht zuletzt auch im Bereich der beiden Strömungsteiler, sowie auch auf die gleichermaßen günstig, mithin sehr gering ausfallenden schwingungsbedingten Deformierungen des Meßaufnehmers im allgemeinen, sowie der Strömungsteiler im besonderen, zurückgeführt werden.

Außer dem vorgenannten V-Mode weist die Rohranordnung zudem auch einen - im weiteren als X-Mode bezeichneten - natürlichen Biegeschwingungsmode zweiter Art auf, in dem - wie in Fig. 7b schematisch dargestellt - das erste Meßrohr und das zweite Meßrohr bezüglich der zweiten gedachten Längsschnittebene YZ gegengleiche Biegeschwingungen um die jeweils zugehörige statische Ruhelage ausführen und in dem das dritte Meßrohr und das vierte Meßrohr bezüglich der zweiten gedachten Längsschnittebene YZ gegengleiche Biegeschwingungen um jeweils zugehörige statische Ruhelage ausführen, im Unterschied zu den Biegeschwingungen im V-Mode, jedoch in der Weise, daß - bezüglich der zweiten gedachten Längsschnittebene YZ - nämliche Biegeschwingungen des ersten Meßrohrs auch gegengleich zu nämlichen Biegeschwingungen des vierten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des dritten Meßrohrs sind. Bei symmetrisch aufgebauter und gleichmäßig von Medium durchströmter Rohranordnung sind im übrigen auch die - hier wiederum als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise X-förmig erscheinen lassenden (vgl. Fig. 7b) - Biegeschwingungen im X-Mode ebenfalls bezüglich der zweiten gedachten Längsschnittebene YZ symmetrisch. Um eine separate, nicht zuletzt auch definierte Anregung des V-Modes bzw. des X-Modes über einen möglichst weiten - u.a. auch von im Betrieb schwankenden Dichten, Massendurchflußraten, Temperaturverteilungen im Meßaufnehmer etc. geprägten - Betriebsbereich des Meßaufnehmers zu gewährleisten, ist gemäß einer weiteren Ausgestaltung der Erfindung die mittels der vier Meßrohre gebildete Rohranordnung, mithin der damit gebildet Meßaufnehmer, so dimensioniert, daß eine - beispielsweise bei vollständig mit Wasser gefüllter Rohranordnung meßbare - Eigenfrequenz f_{18V}; des Biegeschwingungsmode erster Art (V-Mode), von einer, insb. bei vollständig mit Wasser gefüllter Rohranordnung bzw. zeitgleich zur Eigenfrequenz f_{18V} des Biegeschwingungsmode erster Art (V-Mode) meßbaren, Eigenfrequenz f_{18X} des Biegeschwingungsmode zweiter Art (X-Mode) verschieden ist, beispielsweise so, daß die Eigenfrequenzen f_{18V}; f_{18X};der beiden nämlichen Biegeschwingungsmoden (V-Mode, X-Mode) um 10Hz oder mehr voneinander abweichen. Im besonderen ist, nicht zuletzt auch für den Fall großer nomineller Nennweiten von mehr als 150 mm, die Rohranordnung so ausgebildet, daß, nämliche Eigenfrequenz f_{18V} des Biegeschwingungsmode erster Art um mehr als 10Hz größer als nämliche Eigenfrequenz f_{18X} des Biegeschwingungsmode zweiter Art ist. Die Erregeranordnung ist gemäß einer weiteren Ausgestaltung der Erfindung daher derart ausgebildet, daß damit das erste Meßrohr 18₁ und das zweite Meßrohr 18₂ im Betrieb zu gegengleichen Biegeschwingungen und das dritte Meßrohr 18₃ und das vierte Meßrohr 18₄ im Betrieb gegengleiche Biegeschwingungen anregbar sind, insb. auch dem Biegeschwingungsmode erster Art (V-Mode) entsprechenden Biegeschwingungen auf deren momentaner Eigenfrequenz f_{18V} bzw. dem Biegeschwingungsmode zweiter Art (X-Mode) entsprechenden Biegeschwingungen auf deren momentaner Eigenfrequenz f_{18V}, letztere Biegeschwingungen ggf. auch simultan mit den dem Biegeschwingungsmode erster Art (V-Mode) entsprechenden Biegeschwingungen.

Gemäß einer weiteren Ausgestaltung der Erfindung ist die Erregeranordnung 5, nicht zuletzt auch zwecks Anregung von gegengleichen Biegeschwingungen des ersten und zweiten Meßrohrs und/oder des dritten und vierten Meßrohrs, mittels eines, insb. differentiell auf das erste Meßrohr 18₁ und das zweite Meßrohr 18₂ wirkenden, ersten Schwingungserregers 5₁ gebildet. Ferner ist vorgesehen, daß als erster Schwingungserreger 5₁ ein, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist.

Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung nach einer Weiterbildung der Erfindung ferner einen, insb. elektrodynamischen und/oder differentiell auf das dritte Meßrohrs 18₃ und das vierte Meßrohr 18₄ wirkenden, zweiten Schwingungserreger 5₂. Der zweite Schwingungserreger 5₂ ist in vorteilhafter Weise zumindest insoweit baugleich zum ersten Schwingungserreger 5₁ ausgebildet, als er analog zu dessen Wirkprinzip arbeitet, beispielsweise also ebenfalls vom elektrodynamischen Typ ist. Gemäß einer weiteren Ausgestaltung ist der zweite Schwingungserreger 5₂ daher mittels eines am dritten Meßrohr gehalterten Permanentmagneten und einer von dessen Magnetfeld durchfluteten, am vierten Meßrohr gehalterten Zylinderspule gebildet. Die beiden Schwingungserreger 5₁, 5₂ der Erregeranordnung 5 können in vorteilhafter Weise elektrisch seriell verschaltet sind, insb. derart, daß ein gemeinsames Treibersignal gemeinsamem mithin simultane Schwingungen der Meßrohre 18₁, 18₃, 18₂, 18₄ anregt, etwa Biegeschwingungen im V-Mode und/oder im X-Mode. Nicht zuletzt für den zuvor erwähnten Fall, daß sowohl Biegeschwingungen im V-Mode als auch Biegeschwingungen im X-Mode mittels der beiden Schwingungserreger 5₁, 5₂ aktiv angeregt werden sollen, kann es von Vorteil sein, die Schwingungserreger 5₁, 5₂ so zu dimensionieren und so an der Rohranordnung anzubringen, daß im Ergebnis ein Übertragungsfaktor des ersten Schwingungserregers 5₁, definiert durch ein Verhältnis von darin eingespeister elektrischer Erregerleistung zu einer damit erzeugten Schwingungen der Meßrohre bewirkende Erregerkraft, zumindest innerhalb eines den V-Mode und den X-Mode umfassenden Frequenzbandes von einem Übertragungsfaktor des zweiten Schwingungserregers 5₁, definiert durch ein Verhältnis von darin eingespeister elektrischer Erregerleistung zu einer damit erzeugten Schwingungen der Meßrohre bewirkende Erregerkraft, verschieden ist, etwa derart, daß nämliche Übertragungsfaktoren um 10% oder mehr voneinander abweichen. Dies ermöglicht beispielsweise auch eine getrennte Anregung von V- und X-Mode, nicht zuletzt auch bei serieller Verschaltung der beiden Schwingungserreger 5₁, 5₂ und/oder Speisung der beiden Schwingungserreger 5₁, 5₂ mit einem einzigen gemeinsamen Treibersignal, und kann im Falle elektrodynamischer Schwingungserreger 5₁, 5₂ z.B. durch Verwendung von Zylinderspulen mit verschieden Impedanzen bzw. unterschiedlichen Windungszahlen und/oder von unterschiedlich dimensionierten bzw. aus unterschiedlichen magnetischen Materialien bestehenden Permanentmagneten auf sehr einfache Weise erreicht werden. Es sei an dieser Stelle zudem ferner noch erwähnt, daß, obgleich der bzw. die Schwingungserreger der im Ausführungsbeispiel gezeigten Erregeranordnung jeweils etwa mittig an den jeweiligen Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2, 4a, 4b, 5a, und 5b jeweils ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Sensoranordnung 19 zum Erzeugen von Vibrationen, insb. Biegeschwingungen, der Meßrohre repräsentierenden Schwingungssignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweites Schwingungssignal liefern. Dies im besonderen in der Weise, daß wenigstens zwei der von der Sensoranordnung 19 gelieferten Schwingungssignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungssignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungssignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können. Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt. Nicht zuletzt zur Schaffung eines möglichst kompakten, dennoch aber für den Massendurchfluß möglichst empfindlichen Meßaufnehmers sind nach einer weiteren Ausgestaltung der Erfindung die Schwingungssensoren 19₁, 19₂, abgestimmt auf die Einbaulänge L₁₁ des Meßaufnehmers, so im Meßaufnehmer angeordnet, daß ein Meßlänge-zu-Einbaulänge-Verhältnis L₁₉/L₁₁ des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur erwähnten Meßlänge L₁₉ des Meßaufnehmers definiert ist, mehr als 0.05, insb. mehr als 0.09, beträgt.

Die Sensoranordnung 19 ist ferner, wie bei derartigen Meßaufnehmern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Die Meßschaltung empfängt die Schwingungssignale der Sensoranordnung 19 und generiert daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte, die beispielsweise eine Massedurchflußrate, einen totalisierten Massendurchfluß und/oder eine Dichte und/oder eine Viskosität des zu messenden Mediums repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Im beosnderen ist die Meßschaltung, mithin die damit gebildte Umformer-Elektronik ferner dafür vorgesehen und ausgelegt, anhand von in der Erregeranordnung umgesetzter elektrischer Erregerleistung, beispielsweise periodisch wiederkehrend und/oder auf Abruf, einen die Viskosität des strömenden Mediums repräsentierenden Viskosität-Meßwert zu generieren und/oder anhand von vom Meßaufnehmer gelieferten Schwingungssignalen, beispielsweise periodisch wiederkehrend und/oder auf Abruf, einen die Massendurchflußrate des strömenden Mediums repräsentierenden Massendurchfluß-Meßwert und/oder, beispielsweise periodisch wiederkehrend und/oder auf Abruf, einen die Dichte des strömenden Mediums repräsentierenden Dichte-Meßwert zu generieren.

Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebsschaltungen verwendet werden können, wie sie beispielsweise bereits in herkömmlichen Coriolis-Massedurchfluß-/ Dichtemeßgeräten breite Anwendung gefunden haben.

Die Umformer-Elektronik 12, einschließlich der darin realisierten Meß- und Betriebsschaltung, kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein.

Wie bereits mehrfach erwähnt ist das In-Line-Meßgerät und insoweit auch der Meßaufnehmer 11 im besonderen für Messungen auch hoher Massendurchflüsse von mehr als 1000 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 50 mm beträgt, insb. aber größer als 100 mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 40 mm beträgt. Im besonderen sind die Meßrohre 18₁, 18₂, 18₃, 18₄ ferner so ausgebildet, das jedes ein Kaliber D₁₈ von mehr als 60 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre 18₁, 18₂, 18₃, 18₄ dabei so ausgelegt, daß deren Meßrohrlänge L₁₈ jeweils größer als 1200 mm ist. Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann dann die die vier Meßrohre 18₁, 18₂, 18₃, 18₄ umfassende Rohranordnung zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂, 18₃, 18₄ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein. Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/ D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/ D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten. Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, insb. weniger als 0.07, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der oben bezeichnten Meßrohrlänge L₁₈ zumindest des ersten Meßrohrs zur Einbaulänge L₁₁ des Meßaufnehmers, mehr als 0.7, insb. mehr als 0.8 und/oder weniger als 1.2, beträgt.

Zwecks Einstellen von Schwingungseigenschaften der Rohranordnung, nicht zuletzt auch zwecks einer möglichst einfachen, gleichwohl effektiven Realisierung einer ausreichenden Separierung des erwähnten V-Modes vom X-Modes hinsichtlich ihrer Eigenfrequenzen f_{18V}; f_{18X}; einerseits, sowie anderseits auch zwecks Verbesserung der mechanischen Kopplung der vier Meßrohre zum Vergleichmäßigen der von den vier Meßrohren simultan ausgeführten Schwingungen, zumindest den aktiv angeregten Biegeschwingungen Nutzmode, etwa auch bei allfällig durch Bauteiletoleranzen bedingten Ungleichheiten, umfaßt der Meßaufnehmer nach einer weiteren Ausgestaltung der Erfindung ferner ein, sowohl vom ersten Strömungsteiler als auch vom zweiten Strömungsteiler beabstandet, einlaßseitig an jedem der vier Meßrohre fixiertes - beispielsweise im wesentlichen X-förmige Grundfläche oder, wie in Fig. 4a oder 4b schematisch dargestellt, eine im wesentlichen H-förmige Grundfläche aufweisendes - erstes Kopplerelement 24₁ erster Art zum Einstellen von Eigenfrequenzen natürlicher Schwingungsmoden der Rohranordnung, sowie ein - sowohl vom ersten Strömungsteiler als auch vom zweiten Strömungsteiler beabstandet - auslaßseitig an jedem der vier Meßrohre fixiertes, etwa zum ersten Kopplerelement 24₁ erster Art im wesentlichen baugleiches, ggf. auch eine im wesentlichen X-förmige oder im wesentlichen H-förmige Grundfläche aufweisendes, zweites Kopplerelement 24₂ erster Art zum Einstellen von Eigenfrequenzen natürlicher Schwingungsmoden der Rohranordnung. Jedes der beiden Kopplerelemente erster Art kann hierbei ferner so ausgebildet und jeweils so an den Meßrohren fixiert sein, daß es in Projektion auf die erwähnte gedachte Querschnittsebene XY des Meßaufnehmers X-förmig ausgebildet ist, oder daß es, wie in Fig. 4a und 4b dargestellt, in Projektion auf nämliche Querschnittsebene XY H-förmig ausgebildet ist. Die Kopplerelemente 24₁ erster Art können beispielsweise jeweils mittels plattenförmiger Teilelemente gebildet oder, wie in der Fig. 4a, 4b schematisch dargestellt, mittels eines monolithischen Stanz-Biegeteils hergestellt sein. Die beiden Kopplerelemente erster Art sind im in der Fig. 4a, 4b bzw. 5a, 5b gezeigten Ausführungsbeispiel ferner so ausgebildet und an den Meßrohren angebracht, daß sie bezüglich der erwähnten ersten gedachten Längsschnittebene XZ des Meßaufnehmers bzw. bezüglich der erwähnten zweiten gedachten Längsschnittebene YZ des Meßaufnehmers im wesentlichen symmetrisch sind, mithin also die erste gedachte Längsschnittebene XZ und/oder die zweite gedachte Längsschnittebene YZ jeweils auch Symmetrieebene jedes der beiden Kopplerelemente erster Art ist. Die beiden Kopplerelemente erster Art sind darüberhinaus auch bezüglich der erwähnten gedachten Querschnittsebene XY des Meßaufnehmers vorzugsweise symmetrisch, mithin bezüglich nämlicher Querschnittsebene XY äquidistant und parallel verlaufend, im Meßaufnehmer angeordnet. Falls erforderlich - beispielsweise weil der Meßaufnehmer für die Messung extrem heißer Medien bzw. für die Messung in Anwendungen mit über einen weiten Bereich schwankender Betriebstemperatur, etwa infolge wiederkehrend in-situ durchgeführten Reinigungsvorgängen des Meßaufnehmers ("cleaning in process", "sterilizing in process" etc.), vorgesehen ist und insoweit nennenswerte thermische Ausdehnungen der Meßrohre zu erwarten sind - können die Kopplerelemente 24₁, 242 erster Art ferner so ausgebildet sein, daß sie sich im wesentlichen gleichermaßen ausdehnen, wie die darüber jeweils gekoppelten Meßrohre und/oder daß sie zumindest gegenüber von Kräften, die in Richtung einer durch die Scheitelpunkte der beiden durch das jeweilige Kopplerelemente zweiter Art miteinander verbundenen Meßrohre verlaufenden, etwa mit der erwähnten gedachten Hochachse H koinzidenten, oder dazu parallelen Wirkungslinie ausreichend nachgiebig sind. Letzteres kann beispielsweise durch entsprechend in das jeweilige Kopplerelement eingeformte - etwa im wesentlichen quer zu vorgenannter Wirkungslinie verlaufende - Schlitze realisiert werden. Alternativ oder in Ergänzung zu in die Kopplerelemente eingeformten Schlitzen ist gemäß einer anderen Ausgestaltung der Erfindung jedes der beiden Kopplerelement erster Art, nicht zuletzt zwecks Erzielung einer ausreichenden Nachgiebigkeit in Richtung der gedachten Hochachse H und wie auch aus der Zusammenschau der Fig. 4a, 4b, 5a, 5b ohne weiteres ersichtlich, gewölbt ausgeführt. Dies im besonderen in der Weise, daß jedes der beiden Kopplerelement erster Art, wie auch in den Fig. 4a, 4b, 5a, 5b angedeutet, bezüglich der zwischen nämlichen Kopplerelementen 24₁, 24₂ verlaufenden gedachten Querschnittsebene XY, nämlich von der Querschnittsebene XY aus gesehen, jeweils zumindest abschnittsweise konvex sind. Im Ergebnis ist so auch eine geringfügige Änderung des relative Abstandes, etwa infolge thermisch bedingter Dehnung, zwischen Meßrohre ermöglicht, und zwar unter weitgehender Vermeidung von das Schwingungsverhalten der Rohranordnung signifikant beeinflussenden Erhöhungen von mechanischen Spannungen.

Falls erforderlich, können desweiteren allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig jeweils mittels als sogenannte Knotenplatten dienenden Kopplerelemente - im folgenden Kopplerelemente zweiter Art - miteinander mechanisch verbunden sind. Darüber hinaus können mittels solcher Kopplerelemente zweiter Art, sei es durch deren Dimensionierung und/oder deren Positionierung auf den Meßrohren mechanische Eigenfrequenzen der Meßrohre und somit auch mechanische Eigenfrequenzen der mittels der vier Meßrohre gebildeten Rohranordnung, einschließlich daran angebrachter weiterer Komponenten des Meßaufnehmers, mithin auch die natürlichen Eigenfrequenzen von deren V-Mode bzw. von deren X-Mode, und insoweit auch das Schwingungsverhalten des Meßaufnehmers insgesamt gezielt beeinflußt werden. Die als Knotenplatten dienenden Kopplerelemente zweiter Art können beispielsweise dünne, insb. aus demselben oder einem ähnlichen Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂ bzw. 18₃ bzw. 18₄ aufgeklemmt und ggf. hernach noch mit dem jeweiligen Meßrohr, beispielsweise durch Hartverlöten oder Schweißen, stoffschlüssig verbunden werden können.

Dementsprechend umfaßt die Rohranordnung gemäß einer weiteren Ausgestaltung der Erfindung ein, beispielsweise plattenförmiges, erstes Kopplerelement 25₁ zweiter Art, das - wie aus den Fig. 4a, 5a, 5b, 6a ohne weiteres ersichtlich - zum Bilden von einlaßseitigen Schwingungsknoten zumindest für Vibrationen, nicht zuletzt auch Biegeschwingungen, etwa denen im erwähnten V-Mode, des ersten Meßrohrs und für dazu gegengleiche Vibrationen des zweiten Meßrohrs, vom ersten Strömungsteiler beabstandet, einlaßseitig am ersten Meßrohr und am zweiten Meßrohr fixiert ist, sowie ein, etwa zum ersten Kopplerelement baugleiches, zweites Kopplerelement 25₂ zweiter Art, das zum Bilden von auslaßseitigen Schwingungsknoten für Vibrationen, nicht zuletzt auch Biegeschwingungen, mithin denen im erwähnten V-Mode bzw. X-Mode, des ersten Meßrohrs 18₁ und für dazu gegengleiche Vibrationen des zweiten Meßrohrs 18₁, vom zweiten Strömungsteiler 20₂ beabstandet, auslaßseitig am ersten Meßrohr 18₁ und am zweiten Meßrohr 18₂ fixiert ist. Gleichermaßen weist die Rohranordnung zum Bilden von einlaßseitigen Schwingungsknoten für Vibrationen, insb. den erwähnten Biegeschwingungen, des dritten Meßrohrs und für dazu gegengleiche Vibrationen des vierten Meßrohrs ein, etwa wiederum plattenförmiges bzw. zum ersten Kopplerelement 25₁ zweiter Art baugleiches, drittes Kopplerelement 25₃ zweiter Art, das, vom ersten Strömungsteiler beabstandet einlaßseitig, am dritten Meßrohr und am vierten Meßrohr fixiert ist, sowie ein, etwa zum ersten Kopplerelement 25₁ zweiter Art baugleiches, viertes Kopplerelement 25₄ zweiter Art, das zum Bilden von auslaßseitigen Schwingungsknoten für Vibrationen, etwa den erwähnten Biegeschwingungen, des dritten Meßrohrs und für dazu gegengleiche Vibrationen des vierten Meßrohrs, vom zweiten Strömungsteiler beabstandet, auslaßseitig auch am dritten Meßrohr und am vierten Meßrohr fixiert ist, auf.

Die vier vorgenannten Kopplerelemente 25₁, 25₂, 25₃, 25₄ zweiter Art sind gemäß einer weiteren Ausgestaltung der Erfindung und wie auch aus der Zusammenschau der Fig. 4a, 4b, 5a, 5b, 6a, 6b ohne weiteres ersichtlich jeweils an genau zwei, ansonsten aber an keinem weiteren der vier Meßrohre fixiert, so daß im Ergebnis das erste und zweite Kopplerelemente 25₁, 25₂ zweiter Art lediglich am ersten und zweiten Meßrohr und das dritte und vierte Kopplerelement 25₃, 25₄ zweiter Art lediglich am dritten und vierten Meßrohr fixiert sind. Infolge dessen kann die Rohranordnung, mithin auch der Meßaufnehmer z.B. in der Weise hergestellt, daß zunächst das erste und zweite Kopplerelement 25₁, 25₂ zweiter Art jeweils am (künftigen) ersten und zweiten Meßrohr 18₁, 18₂ unter Bildung eines ersten Meßrohrpakets und das dritte und vierte Kopplerelement 25₃, 25₄ zweiter Art jeweils am (künftigen) dritten und vierten Meßrohr 18₃, 18₄ unter Bildung eines zweiten Meßrohrpakets fixiert werden. Somit ist es möglich, die beiden Meßrohrpakte zu einem späteren Zeitpunkt, etwa unmittelbar vor oder auch erst nach dem Einsetzen der beiden Meßrohrpakte in das erwähnte rohrförmige Mittelsegment 7_{1A} des (künftigen) Aufnehmergehäuses, durch entsprechendes Fixieren des ersten und zweiten Kopplerelements 24₁, 24₂ erster Art an jedem der beiden Meßrohrpakte, etwa einstweilen jeweils an wenigstens einem der Meßrohre 18₁, 18₂ des ersten Meßrohrpakets und an wenigstens einem der Meßrohre 18₃, 18₄ des zweiten Meßrohrpakets, zur Rohranordnung zusammenzufügen. Dies hat - nicht zuletzt auch für den erwähnten Fall, das der Meßaufnehmer für große nominelle Nennweiten von mehr als 100 mm trotz der relativ großen Abmessungen seiner Komponenten, mithin der Rohranordnung, des Aufnehmergehäuses, der Strömungsteiler etc. - den Vorteil, daß die im Ergebnis relativ ausladende Rohranordnung während des überwiegenden Dauer des gesamten Fertigungsprozesses, indem der Meßaufnehmer hergestellt wird, erst zu einem relativ späten Zeitpunkt in toto gehandhabt zu werden braucht. Darüberhinaus kann dadurch durchaus auch auf solche Rohranordnung zurückgegriffen werden, wie sie bislang in herkömmliche Meßaufnehmer mit Doppelrohranordnung verwendet worden sind, einhergehend mit einer beträchtlichen Reduzierung der Fertigungs- und Lagerhaltungskosten. Falls erforderlich, können die Kopplerelemente 25₁, 25₂, 25₃, 25₄ aber auch in entsprechender jeweils an allen vier Meßrohren fixiert sein, beispielsweise auch für den Fall, daß der Meßaufnehmer für relativ kleine nominelle Nennweiten von 50 mm oder weniger ausgelegt ist.

Im hier gezeigten Ausführungsbeispiel sind das erste Kopplerelement 25₁ zweiter Art sowohl an einem sich zwischen dem ersten Strömungsteiler 20₁ und dem ersten Kopplerelement 24₁ erster Art erstreckenden - hier abschnittsweise gebogenen - einlaßseitigen Rohrsegment des ersten Meßrohrs 18₁ als auch an einem sich gleichermaßen zwischen dem ersten Strömungsteiler 20₁ und dem ersten Kopplerelement 24₁ erster Art erstreckenden einlaßseitigen Rohrsegment des zweiten Meßrohrs 18₂ und das zweite Kopplerelement 25₂ zweiter Art sowohl an einem sich zwischen dem zweiten Strömungsteiler 20₂ und dem zweiten Kopplerelement 24₂ erster Art erstreckenden - hier ebenfalls abschnittsweise gebogenen - auslaßseitigen Rohrsegment des ersten Meßrohrs 18₁ als auch an einem sich gleichermaßen zwischen dem zweiten Strömungsteiler 20₂ und dem zweiten Kopplerelement 24₂ erster Art erstreckenden auslaßseitigen Rohrsegment des zweiten Meßrohrs 18₂ fixiert. In analoger Weise sind das dritte Kopplerelement 25₃ zweiter Art sowohl an einem sich zwischen dem ersten Strömungsteiler 20₁ und dem ersten Kopplerelement 24₁ erster Art erstreckenden - hier ebenfalls abschnittsweise gebogenen - einlaßseitigen Rohrsegment des dritten Meßrohrs 18₃ als auch an einem sich gleichermaßen zwischen dem ersten Strömungsteiler 20₁ und dem ersten Kopplerelement 24₁ erster Art erstreckenden einlaßseitigen Rohrsegment des vierten Meßrohrs 18₄ und das vierte Kopplerelement 25₄ zweiter Art sowohl an einem sich zwischen dem zweiten Strömungsteiler 20₂ und dem zweiten Kopplerelement 24₂ erster Art erstreckenden - hier wiederum abschnittsweise gebogenen - auslaßseitigen Rohrsegment des dritten Meßrohrs 18₃ als auch an einem sich gleichermaßen zwischen dem zweiten Strömungsteiler 20₂ und dem zweiten Kopplerelement 24₁ erster Art erstreckenden auslaßseitigen Rohrsegment des vierten Meßrohrs 18₄ fixiert. Dies im besonderen in der Weise, daß - wie aus der Zusammenschau der Fig. 4a, 4b, 5a, 5b ohne weiteres ersichtlich - das zumindest erste und vierte Kopplerelement zweiter Art zueinander parallel sind und zumindest das zweite und dritte Kopplerelement zweiter Art zueinander parallel sind. Jedes der vier vorgenannten, insb. einander baugleichen, Kopplerelemente 25₁, 25₂ zweiter Art ist gemäß einer weiteren Ausgestaltung der Erfindung zudem plattenförmig ausgebildet, beispielsweise in derart, daß es jeweils eine rechteckförmige, oder oder aber daß es jeweils, wie auch aus den Fig. 4a, 4b ersichtlich, eine eher ovale Grundfläche aufweist. Wie aus der Zusammenschau der Fig. 4a, 4b, 5a, 5b ferner ersichtlich, könne die vier Kopplerelemente 24₁, 24₂ 24₃, 24₄ ferner so ausgebildet und im Meßaufnehmer so plaziert sein, daß sie bezüglich der gedachten Längsschnittebene YZ symmetrisch sind und daß sie bezüglich der gedachten Längsschnittebene XZ und bezüglich der gedachten Querschnittsebene XY paarweise symmetrisch angeordnet sind, im Ergebnis also ein Massenschwerpunkt jedes der Kopplerelemente zweiter Art jeweils einen gleichen Abstand zu einem Massenschwerpunkt der Rohranordnung aufweist. Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der US-A 2006/0150750 vorgeschlagen und wie in den Fig. 4a, 4b, 5a, 5b angedeutet, darüberhinaus noch weitere, solcher als Knotenplatten wirkenden Kopplerelemente der vorgenannten Art aufweist, beispielsweise also insgesamt 8 oder 12 Kopplerelemente zweiter Art.

Wie in den Fign. 5a und 5b schematisch dargestellt, definieren die Rohrform jedes der Meßrohre zusammen mit einem minimaler Abstand zwischen dem ersten und zweiten Kopplerelement zweiter Art - mithin also bei der Verwendung von 8 oder mehr als solcher Kopplerelemente die dem Massenschwerpunkt der Rohranordnung ein- und auslaßseitig jeweils am nahesten liegenden, insoweit also die ein- und auslaßseitig jeweils innersten Kopplerelemente zweiter Art - jeweils eine Nutz-Schwinglänge, L₁₈ₓ, jedes der Meßrohre. Die Nutz-Schwinglänge, L₁₈ₓ, des jeweiligen Meßrohrs entspricht hierbei, wie auch in den Fig. 5a und 5b schematisch dargestellt, dabei einer Länge des zwischen den beiden Kopplerelementen 25₁, 25₂ zweiter Art verlaufenden Abschnitts der Biegelinie des nämlichen Meßrohrs, wobei nach einer weiteren Ausgestaltung der Erfindung die Kopplerelemente zweiter Art so im Meßaufnehmer plaziert sind, daß im Ergebnis die Nutz-Schwinglänge jedes der Meßrohre 18₁, 18₂, 18₃, 18₄ weniger als 3000 mm, insb. weniger als 2500 mm und/oder mehr als 800 mm, beträgt. Alternativ oder in Ergänzung ist ferner vorgesehen, die die Meßrohre so auszubilden und die Kopplerelemente zweiter Art so anzuordnen, daß alle vier Meßrohre 18₁, 18₂, 18₃, 18₄ im Ergebnis die gleiche Nutz-Schwinglänge, L₁₈ₓ, aufweisen. Nach einer weiteren Ausgestaltung der Erfindung sind zu dem das erste Meßrohr und das zweite Meßrohr zumindest über den sich zwischen dem ersten Kopplerelement zweiter Art und dem zweiten Kopplerelement zweiter Art erstreckenden Bereich - mithin also deren jeweiligen Nutz-Schwinglänge - zueinander parallel, und sind auch das dritte Meßrohr und das vierte Meßrohr zumindest über den sich zwischen dem dritten Kopplerelement zweiter Art und dem vierten Kopplerelement zweiter Art erstreckenden Bereich - mithin also deren jeweiligen Nutz-Schwinglänge - zueinander parallel.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, abgestimmt auf die erwähnte Nutz-Schwinglänge, so bemessen, daß ein Kaliber-zu-Schwinglänge-Verhältnis D₁₈/L₁₈ₓ des Meßaufnehmers, definiert durch ein Verhältnis des Kalibers D₁₈ des ersten Meßrohrs zur Nutz-Schwinglänge L₁₈ₓ des ersten Meßrohrs, mehr als 0.03, insb. mehr als 0.05 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/L₁₁ des Meßaufnehmers, definiert durch ein Verhältnis der Nutz-Schwinglänge L₁₈ₓ des ersten Meßrohrs zur Einbaulänge L₁₁ des Meßaufnehmers, mehr als 0.55, insb. mehr als 0.6 und/oder weniger als 1.5, beträgt. Nach einer weiteren Ausgestaltung der Erfindung sind die Schwingungssensoren, abgestimmt auf die Nutz-Schwinglänge, so im Meßaufnehmer angeordnet, daß ein Meßlänge-zu-Schwinglänge-Verhältnis L₁₉/L₁₈ₓ des Meßaufnehmers, definiert durch ein Verhältnis der erwähnten Meßlänge L₁₉ des Meßaufnehmers zur Nutz-Schwinglänge L₁₈ₓ des ersten Meßrohrs, mehr als 0.3, insb. mehr als 0.4 und/oder weniger als 0.95, beträgt. Im übrigen können Meßlänge, L₁₉, und/oder Meßlänge-zu-Schwinglänge-Verhältnis L₁₉/L₁₈ₓ darüberhinaus durchaus auch gemäß den in den eigen, nicht vorveröffentlichten internationalen Anmeldungen PCT/EP2010/058797 bzw. PCT/EP2010/058799 vorgeschlagenen Kriterien zur Bestimmung optimaler Meßlängen bzw. optimaler Meßlänge-zu-Schwinglänge-Verhältnisse für Meßaufnehmer vom Vibrationstyp genauer bestimmt werden.

Zur Verringerung allfälliger Querempfindlichkeiten des Meßaufnehmers auf Druck, nicht zuletz auch bei einem möglichst hohen Nennweite-zu-Einbaulänge-Verhältnis D₁₁/L₁₁ von größer als 0.1 und einem möglichst niedrigen Schwinglänge-zu-Einbaulänge-Verhältnis L₁₈ₓ/L₁₁ von weniger als 1.5, können in vorteilhafter Weise ferner ringförmige Versteifungselementen an den Meßrohren verwendet werden, von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen kann es hierbei von Vorteil sein, wenn auf jedem der Meßrohre 18₁, 18₂, 18₃ bzw. 18₄, wenigstens vier solcher, insb. baugleicher, Versteifungselemente angebracht sind. Die Versteifungselementen können dabei beispielsweise so im Meßaufnehmer 11 plaziert sein, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt.

Durch die Verwendung von vier statt wie bisher zwei parallel durchströmten gebogenen Meßrohren ist es somit auch möglich, Meßaufnehmer der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von weniger als 3 bar, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann.

## Patentansprüche

1. Meßaufnehmer vom Vibrationstyp zum Erfassen wenigstens einer physikalischen Meßgröße eines in einer Rohrleitung geführten strömungsfähigen Mediums, insb. eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften, welcher Meßaufnehmer umfaßt:
- ein, insb. teilweise im wesentlichen rohrförmiges und/oder teilweise außen kreiszylindrisches, Aufnehmer-Gehäuse (7₁), von dem ein einlaßseitiges erstes Gehäuseende mittels eines genau vier jeweils voneinander beabstandeten, insb. kreiszylindrische, kegelförmige oder konusförmige, Strömungsöffnungen (20_{1A}, 20_{1B}, 20_{1C}, 20_{1D}) aufweisenden einlaßseitigen ersten Strömungsteiler (20₁) und ein auslaßseitiges zweites Gehäuseende mittels eines genau vier jeweils voneinander beabstandeten, insb. kreiszylindrische, kegelförmige oder konusförmige, Strömungsöffnungen (20_{2A}, 20_{2B}, 20_{2C}, 20_{2D}) aufweisenden auslaßseitigen zweiten Strömungsteilers (20₂) gebildet sind;
- eine Rohranordnung mit genau vier unter Bildung strömungstechnisch parallel geschalteter Strömungspfade an die, insb. baugleichen, Strömungsteiler (20₁, 20₂) angeschlossenen, insb. lediglich mittels nämlicher Strömungsteiler (20₁, 20₂) im Aufnehmer-Gehäuse schwingfähig gehalterten und/oder baugleichen und/oder zueinander paarweise parallelen, gebogenen, nämlich zumindest abschnittsweise V-förmigen Meßrohren (18₁, 18₂, 18₃, 18₄) zum Führen von strömendem Medium, von denen
-- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein, insb. zum ersten Meßrohr zumindest abschnittsweise paralleles, zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
-- ein, insb. zum dritten Meßrohr zumindest abschnittsweise paralleles, viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet;
- eine, insb. mittels eines elektro-dynamischen und/oder Schwingungen des ersten Meßrohrs (18₁) relativ zum zweiten Meßrohr (18₂) differentiell anregenden ersten Schwingungserregers (5₁) und eines elektro-dynamischen und/oder Schwingungen des dritten Meßrohrs (18₃) relativ zum vierten Meßrohr (18₄) differentiell anregenden und/oder zum ersten Schwingungserreger (5₁) baugleichen zweiten Schwingungserregers (5₂) gebildete, elektro-mechanische Erregeranordnung (5) zum Erzeugen und/oder Aufrechterhalten von, insb. einem natürlichen Biegeschwingungsmode der Rohranordnung entsprechenden, Biegeschwingungen jedes der vier Meßrohre (18₁, 18₂, 18₃, 18₄);
- sowie eine auf Vibrationen, insb. mittels der Erregeranordnung angeregten Biegeschwingungen, der Meßrohre (18₁, 18₂, 18₃, 18₄) reagierende, insb. elektro-dynamische und/oder mittels einander baugleicher Schwingungssensoren (19₁, 19₂, 19₃, 19₄) gebildete, Sensoranordnung (19) zum Erzeugen von Vibrationen, insb. Biegeschwingungen, der Meßrohre (18₁, 18₂, 18₃, 18₄) repräsentierenden Schwingungssignalen;
- wobei die beiden Strömungsteiler (20₁, 20₂) so ausgebildet und im Meßaufnehmer angeordnet sind,
-- daß eine die erste Strömungsöffnung (20_{1A}) des ersten Strömungsteilers (20₁) mit der ersten Strömungsöffnung (20_{2A}) des zweiten Strömungsteilers (20₂) imaginär verbindende gedachte erste Verbindungsachse (Z₁) des Meßaufnehmers parallel zu einer die zweite Strömungsöffnung (20_{1B}) des ersten Strömungsteilers (20₁) mit der zweiten Strömungsöffnung (20_{2B}) des zweiten Strömungsteilers (20₂) imaginär verbindende gedachten zweiten Verbindungsachse (Z₂) des Meßaufnehmers verläuft, und
-- daß eine die dritte Strömungsöffnung (20_{1C}) des ersten Strömungsteilers (20₁) mit der dritten Strömungsöffnung (20_{2C}) des zweiten Strömungsteilers (20₂) imaginär verbindende gedachte dritten Verbindungsachse (Z₃) des Meßaufnehmers parallel zu einer die vierte Strömungsöffnung (20_{1D}) des ersten Strömungsteilers (20₁) mit der vierten Strömungsöffnung (20_{2B}) des zweiten Strömungsteilers (20₂) imaginär verbindende gedachten vierten Verbindungsachse (Z₄) des Meßaufnehmers verläuft,
- und wobei die Meßrohre so ausgebildet und im Meßaufnehmer angeordnet sind,
-- daß die Rohranordnung eine sowohl zwischen dem ersten Meßrohr und dem dritten Meßrohr als auch zwischen dem zweiten Meßrohr und dem vierten Meßrohr liegende erste gedachte Längsschnittebene (XZ) aufweist, bezüglich der die Rohranordnung spiegelsymmetrisch ist, und
-- daß die Rohranordnung eine zu deren gedachter erster Längsschnittebene (XZ) senkrechte, sowohl zwischen dem ersten Meßrohr und zweiten Meßrohr als auch zwischen dem dritten Meßrohr und vierten Meßrohr verlaufende zweite gedachte Längsschnittebene (YZ) aufweist, bezüglich der die Rohranordnung gleichfalls spiegelsymmetrisch ist.

2. Meßaufnehmer nach einem der vorherigen Ansprüche, wobei jeder der beiden Strömungsteiler (20₁, 20₂) als integraler Bestandteil des Aufnehmer-Gehäuse (7₁) ausgebildet ist.

3. Meßaufnehmer nach einem der vorherigen Ansprüche,
- wobei die Erregeranordnung derart ausgebildet ist, daß damit jedes der vier Meßrohre (18₁, 18₂, 18₃, 18₄), insb. simultan, zu Biegeschwingungen anregbar ist; und/oder
- wobei die Erregeranordnung derart ausgebildet ist, daß damit das erste Meßrohr (18₁) und das zweite Meßrohr (18₂) zu bezüglich der zweiten gedachten Längsschnittebene (YZ) gegengleichen, insb. zu bezüglich der zweiten gedachten Längsschnittebene (YZ) symmetrischen, Biegeschwingungen und das dritte Meßrohr (18₃) und das vierte Meßrohr (18₄) zu bezüglich der zweiten gedachten Längsschnittebene (YZ) gegengleichen, insb. zu bezüglich der zweiten gedachten Längsschnittebene (YZ) symmetrischen, Biegeschwingungen anregbar sind.

4. Meßaufnehmer nach einem der vorherigen Ansprüche, wobei die beiden Strömungsteiler (20₁, 20₂) so ausgebildet und im Meßaufnehmer angeordnet sind, daß eine erste gedachte Längsschnittebene (XZ₁) des Meßaufnehmers, innerhalb der die, insb. zu einer mit der Rohrleitung fluchtenden Hauptströmungsachse des Meßaufnehmers parallele, erste gedachte Verbindungsachse (Z₁) und die zweite gedachte Verbindungsachse (Z₁) verlaufen, parallel zu einer zweiten gedachten Längsschnittebene (XZ₂) des Meßaufnehmers, innerhalb der die gedachte dritte Verbindungsachse (Z₃) und die gedachte vierte Verbindungsachse (Z₄) verlaufen, ist; insb. derart, daß die erste gedachte Längsschnittebene (XZ) der Rohranordnung zwischen der ersten und zweiten gedachten Längsschnittebene (XZ₁, XZ₂) des Meßaufnehmers liegt und/oder parallel zur ersten und zweiten gedachten Längsschnittebene (XZ₁, XZ₂) des Meßaufnehmers ist.

5. Meßaufnehmer nach dem vorherigen Anspruch, wobei die beiden Strömungsteiler (20₁, 20₂) so ausgebildet und im Meßaufnehmer angeordnet sind, daß eine dritte gedachte Längsschnittebene (YZ₁) des Meßaufnehmers, innerhalb der die gedachte erste Verbindungsachse (Z₁) und die gedachte dritte Verbindungsachse (Z₃) verlaufen, parallel zu einer vierten gedachten Längsschnittebene (YZ₂) des Meßaufnehmers, innerhalb der die gedachte zweite Verbindungsachse (Z₂) und die die gedachte vierte Verbindungsachse (Z₄) verlaufen, ist.

6. Meßaufnehmer nach dem vorherigen Anspruch, wobei die Meßrohre so ausgebildet und im Meßaufnehmer angeordnet sind, daß die zweite gedachte Längsschnittebene (YZ) der Rohranordnung zwischen der dritten gedachten Längsschnittebene (YZ₁) des Meßaufnehmers und der vierten gedachten Längsschnittebene (YZ₂) des Meßaufnehmers verläuft, insb. derart, daß die zweite gedachte Längsschnittebene (YZ) der Rohranordnung parallel zur dritten gedachten Längsschnittebene (YZ₁) des Meßaufnehmers und parallel zur vierten gedachten Längsschnittebene (YZ₂) des Meßaufnehmers ist.

7. Meßaufnehmer nach einem der vorherigen Ansprüche, wobei die Rohranordnung eine sowohl zur ersten gedachten Längsschnittebene (XZ) als auch zur zweiten gedachten Längsschnittebene (YZ) jeweils senkrechte gedachte Querschnittebene (XY) aufweist;
- wobei ein Massenschwerpunkt der Rohranordnung in der gedachten Querschnittsebene (XY) liegt; und/oder
- wobei die Rohranordnung bezüglich der gedachten Querschnittsebene (XY) spiegelsymmetrisch ist; und/oder
- wobei jedes der vier Meßrohre jeweils einen Meßrohr-Scheitelpunkt, definiert als größter senkrechter Abstand des jeweiligen Meßrohres von der ersten gedachten Längsschnittebene (XZ), aufweist und die gedachte Querschnittsebene (XY) jedes der vier Meßrohre in dessen jeweiligen Meßrohr-Scheitelpunkt schneidet.

8. Meßaufnehmer nach einem der vorherigen Ansprüche, weiters umfassend
- ein, sowohl vom ersten Strömungsteiler als auch vom zweiten Strömungsteiler beabstandet, einlaßseitig an jedem der vier Meßrohre fixiertes, insb. eine H- oder X-förmige Grundfläche aufweisendes, erstes Kopplerelement (24₁) erster Art zum Einstellen von Eigenfrequenzen natürlicher Schwingungsmoden der Rohranordnung, insb. von Biegeschwingungsmoden, sowie
- ein, sowohl vom ersten Strömungsteiler als auch vom zweiten Strömungsteiler beabstandet, auslaßseitig an jedem der vier Meßrohre fixiertes, insb. eine H- oder X-förmige Grundfläche aufweisendes und/oder zum ersten Kopplerelement (24₁) erster Art im wesentlichen baugleiches, zweites Kopplerelement (24₂) erster Art zum Einstellen von Eigenfrequenzen natürlicher Schwingungsmoden der Rohranordnung, insb. von Biegeschwingungsmoden.

9. Meßaufnehmer nach dem vorherigen Anspruch,
- wobei jedes der beiden Kopplerelemente (24₁, 24₂) erster Art symmetrisch bezüglich der ersten gedachten Längsschnittebene (XZ) der Rohranordnung ist; und/oder
- wobei jedes der beiden Kopplerelemente (24₁, 24₂) erster Art symmetrisch bezüglich der zweiten gedachten Längsschnittebene (YZ) der Rohranordnung ist; und/oder
- wobei die beiden Kopplerelemente (24₁, 24₂) erster Art symmetrisch bezüglich einer sowohl zur ersten gedachten Längsschnittebene (XZ) als auch zur zweiten gedachten Längsschnittebene (YZ) der Rohranordnung jeweils senkrechten gedachte Querschnittsebene (XY) der Rohranordnung im Meßaufnehmer angeordnet sind; und/oder
- wobei die beiden Kopplerelemente (24₁, 24₂) erster Art äquidistant bezüglich einer sowohl zur ersten gedachten Längsschnittebene (XZ) als auch zur zweiten gedachten Längsschnittebene (YZ) der Rohranordnung jeweils senkrechten gedachte Querschnittsebene (XY) der Rohranordnung im Meßaufnehmer angeordnet sind; und/oder
- wobei die beiden Kopplerelemente (24₁, 24₂) erster Art bezüglich einer sowohl zur ersten gedachten Längsschnittebene (XZ) als auch zur zweiten gedachten Längsschnittebene (YZ) der Rohranordnung jeweils senkrechten gedachte Querschnittsebene (XY) der Rohranordnung parallel verlaufend im Meßaufnehmer angeordnet sind; und/oder
- wobei jedes der beiden Kopplerelemente (24₁, 24₂) erster Art jeweils so ausgebildet und im Meßaufnehmer plaziert ist, daß es bezüglich der ersten gedachten Längsschnittebene (XZ) der Rohranordnung und/oder bezüglich der zweiten gedachten Längsschnittebene (YZ) der Rohranordnung symmetrisch ist; und/oder
- wobei jedes der beiden Kopplerelemente (24₁, 24₂) erster Art jeweils so ausgebildet und im Meßaufnehmer plaziert ist, daß es in Projektion auf eine sowohl zur ersten gedachten Längsschnittebene (XZ) der Rohranordnung als auch zur zweiten gedachten Längsschnittebene (YZ) der Rohranordnung jeweils senkrechten gedachte Querschnittsebene (XY) der Rohranordnung X-förmig ausgebildet ist, oder daß es in Projektion auf eine zur ersten gedachten Längsschnittebene (XZ) und der zweiten gedachten Längsschnittebene (YZ) der Rohranordnung jeweils senkrechten gedachte Querschnittsebene (XY) der Rohranordnung H-förmig ausgebildet ist; und/oder
- wobei sowohl das erste Kopplerelement (24₁) erster Art als auch das zweite Kopplerelement (24₂) erster Art jeweils mittels plattenförmiger Teilelemente gebildet ist.

10. Meßaufnehmer nach einem der Ansprüche 8 bis 9, weiters umfassend:
- ein, insb. plattenförmiges, erstes Kopplerelement (25₁) zweiter Art, das zum Bilden von einlaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs einlaßseitig am ersten Meßrohr und am zweiten Meßrohr fixiert ist;
- ein, insb. plattenförmiges und/oder zum ersten Kopplerelement (25₁) zweiter Art baugleiches und/oder zum ersten Kopplerelement (25₁) zweiter Art paralleles, zweites Kopplerelement (25₂) zweiter Art, das zum Bilden von auslaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs auslaßseitig am ersten Meßrohr und am zweiten Meßrohr fixiert ist;
- ein, insb. plattenförmiges und/oder zum ersten Kopplerelement (25₁) zweiter Art baugleiches und/oder zum zweiten Kopplerelement (25₂) zweiter Art paralleles, drittes Kopplerelement (25₃) zweiter Art, das zum Bilden von einlaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs sowohl vom ersten Strömungsteiler als auch vom zweiten Strömungsteiler beabstandet einlaßseitig am dritten Meßrohr und am vierten Meßrohr fixiert ist; sowie
- ein, insb. plattenförmiges und/oder zum ersten Kopplerelement (25₁) zweiter Art baugleiches und/oder zum ersten Kopplerelement (25₁) zweiter Art paralleles, viertes Kopplerelement (25₄) zweiter Art, das zum Bilden von auslaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs sowohl vom ersten Strömungsteiler als auch vom zweiten Strömungsteiler wie auch vom ersten Kopplerelement beabstandet auslaßseitig am dritten Meßrohr und am vierten Meßrohr fixiert ist.

11. Meßaufnehmer nach dem vorherigen Anspruch,
- wobei das erste Kopplerelement (25₁) zweiter Art sowohl an einem sich zwischen dem ersten Strömungsteiler (20₁) und dem ersten Kopplerelement (24₁) erster Art erstreckenden Rohrsegment des ersten Meßrohrs (18₁) als auch an einem sich zwischen dem ersten Strömungsteiler (20₁) und dem ersten Kopplerelement (24₁) erster Art erstreckenden Rohrsegment des zweiten Meßrohrs (18₂) fixiert ist;
- wobei das zweite Kopplerelement (25₂) zweiter Art sowohl an einem sich zwischen dem zweiten Strömungsteiler (20₂) und dem zweiten Kopplerelement (24₂) erster Art erstreckenden Rohrsegment des ersten Meßrohrs (18₁) als auch an einem sich zwischen dem zweiten Strömungsteiler (20₂) und dem zweiten Kopplerelement (24₂) erster Art erstreckenden Rohrsegment des zweiten Meßrohrs (18₂) fixiert ist;
- wobei das dritte Kopplerelement (25₃) zweiter Art sowohl an einem sich zwischen dem ersten Strömungsteiler (20₁) und dem ersten Kopplerelement (24₁) erster Art erstreckenden Rohrsegment des dritten Meßrohrs (18₃) als auch an einem sich zwischen dem ersten Strömungsteiler (20₁) und dem ersten Kopplerelement (24₁) erster Art erstreckenden Rohrsegment des vierten Meßrohrs (18₄) fixiert ist; und
- wobei das vierte Kopplerelement (25₄) zweiter Art sowohl an einem sich zwischen dem zweiten Strömungsteiler (20₂) und dem zweiten Kopplerelement (24₂) erster Art erstreckenden Rohrsegment des dritten Meßrohrs (18₃) als auch an einem sich zwischen dem zweiten Strömungsteiler (20₂) und dem zweiten Kopplerelement (24₁) erster Art erstreckenden Rohrsegment des vierten Meßrohrs (18₄) fixiert ist.

12. Meßaufnehmer nach einem der Ansprüche 10 bis 11,
- wobei eine einer Länge eines zwischen dem ersten Kopplerelement zweiter Art und dem zweiten Kopplerelement zweiter Art verlaufenden Abschnitts der Biegelinie entsprechende Nutz-Schwinglänge, L₁₈ₓ, des ersten Meßrohrs, insb. jedes der Meßrohre, weniger als 3000 mm, insb. weniger als 2500 mm und/oder mehr als 800 mm, beträgt.
- und wobei ein Kaliber-zu-Schwinglänge-Verhältnis, D₁₈/L₁₈ₓ, des Meßaufnehmers, definiert durch ein Verhältnis eines Kalibers, D₁₈, des ersten Meßrohrs (18₁) zur Nutz-Schwinglänge, L₁₈ₓ, des ersten Meßrohrs (18₁), mehr als 0.03, insb. mehr als 0.05 und/oder weniger als 0.15, beträgt.

13. Meßaufnehmer nach einem der vorherigen Ansprüche,
- wobei das erste Meßrohr ein Kaliber aufweist, das gleich einem Kaliber des zweiten Meßrohrs, insb. auch gleich einem Kaliber des dritten Meßrohrs sowie gleich einem Kaliber des vierten Meßrohrs ist; und/oder
- wobei die vier Meßrohre (18₁, 18₂, 18₃, 18₄) hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind; und/oder
- wobei das Aufnehmer-Gehäuse (7₁), die Strömungsteiler (20₁, 20₂) und Rohrwände der Meßrohre (18₁, 18₂, 18₃, 18₄) jeweils aus, insb. rostfreiem und/oder hochfestem, Stahl bestehen.

14. Meßaufnehmer nach einem der vorherigen Ansprüche, wobei jedes der vier, insb. gleichgroßen, Meßrohre (18₁, 18₂, 18₃, 18₄) ein Kaliber, D₁₈, aufweist, das mehr als 40 mm, insb. mehr als 60 mm, beträgt.

15. Meßaufnehmer nach dem vorherigen Anspruch,wobei die Meßrohre (18₁, 18₂, 18₃, 18₄) so gebogen und so angeordnet sind, daß ein Kaliber-zu-Höhe-Verhältnis, D₁₈/Q₁₈, der Rohranordnung, definiert durch ein Verhältnis des Kalibers, D₁₈, des ersten Meßrohrs zu einer maximalen seitlichen Ausdehnung, Q₁₈, der Rohranordnung, gemessen von einem Scheitelpunkt des ersten Meßrohrs (18₁) zu einem Scheitelpunkt des dritten Meßrohrs (18₃), mehr als 0.05, insb. mehr als 0.07 und/oder weniger als 0.3 5, insb. weniger als 0.2, beträgt.

16. Meßaufnehmer nach einem der vorherigen Ansprüche, wobei ein Mittelsegment (7_{1A}) des Aufnehmer-Gehäuses (7₁) zumindest anteilig mittels eines geraden, insb. kreiszylindrischen, Trägerrohres gebildet ist, insb. derart, daß ein auf einer ersten Seite aus nämlichem Trägerrohrs herausragendes Segment des ersten Meßrohrs und ein auf der ersten Seite aus nämlichem Trägerrohr herausragendes Segment des zweiten Meßrohrs von einer ersten Gehäusekappe des Aufnehmer-Gehäuses umgeben sind und daß ein auf einer der ersten Seite gegenüberliegenden zweiten Seite aus nämlichem Trägerrohr herausragendes Segment des dritten Meßrohrs und ein auf der zweiten Seite aus nämlichem Trägerrohr herausragendes Segment des vierten Meßrohrs von einer, insb. zur ersten Gehäusekappe baugleichen, zweiten Gehäusekappe des Aufnehmer-Gehäuses umgeben sind.

17. Meßaufnehmer nach einem der vorherigen Ansprüche, wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen.

18. Meßaufnehmer nach dem vorherigen Anspruch,
- wobei jeder der Flansche (6₁, 6₂) jeweils eine Dichtfläche (6_{1A}, 6_{2A}) zum fluiddichten Verbinden des Meßaufnehmers mit dem jeweils korrespondierenden Rohrsegment der Rohrleitung aufweist, und wobei ein Abstand zwischen den Dichtflächen (6_{1A}, 6₂₄) beider Flansche (6₁, 6₂) eine, insb. mehr als 1200 mm betragende und/oder weniger als 3000 mm, insb. weniger als 2500 mm, betragende, Einbaulänge, L₁₁, des Meßaufnehmers definiert,
- und wobei eine einer Länge eines zwischen der ersten Strömungsöffnung (20_{1A}) des ersten Strömungsteilers (20₁) und der ersten Strömungsöffnung (20_{2A}) des zweiten Strömungsteilers (20₂) verlaufenden Abschnitts einer Biegelinie des ersten Meßrohrs entsprechende Meßrohrlänge, L₁₈, des ersten Meßrohrs (18₁) mehr als 1000 mm, insb. mehr als 1200 mm und/oder weniger als 3000 mm, insb. weniger als 2500, beträgt.

19. Meßaufnehmer nach dem vorherigen Anspruch, wobei ein Meßrohrlänge-zu-Einbaulänge-Verhältnis, L₁₈/L₁₁, des Meßaufnehmers, definiert durch ein Verhältnis der Meßrohrlänge, L₁₈, des ersten Meßrohrs zur Einbaulänge, L₁₁, des Meßaufnehmers, mehr als 0.7, insb. mehr als 0.8 und/oder weniger als 1.2, beträgt.

20. Meßaufnehmer nach einem der vorherigen Ansprüche,
- wobei die Sensoranordnung (19) mittels eines, insb. elektrodynamischen und/oder Schwingungen des ersten Meßrohrs (18₁) relativ zum zweiten Meßrohr (18₂) differentiell erfassenden, einlaßseitigen ersten Schwingungssensors (19₁) sowie eines, insb. elektrodynamischen und/oder Schwingungen des ersten Meßrohrs (18₁) relativ zum zweiten Meßrohr (18₂) differentiell erfassenden, auslaßseitigen zweiten Schwingungssensors (19₂) gebildet ist,
- und wobei die Sensoranordnung (19) mittels eines, insb. elektrodynamischen und/oder Schwingungen des dritten Meßrohrs (18₃) relativ zum vierten Meßrohr (18₄) differentiell erfassenden und/oder mit dem ersten Schwingungssensor (19₁) elektrisch seriell verschalteten, einlaßseitigen dritten Schwingungssensors (19₃) sowie eines, insb. elektrodynamischen und/oder Schwingungen des dritten Meßrohrs (18₃) relativ zum vierten Meßrohr (18₄) differentiell erfassenden und/oder mit dem zweiten Schwingungssensor (19₂) elektrisch seriell verschalteten, auslaßseitigen vierten Schwingungssensors (19₄) gebildet ist.

21. Meßsystem zum Messen einer Dichte und/oder einer Massendurchflußrate, insb. auch eines über ein Zeitintervall totalisierten Gesamt-Massendurchflusses, eines in einer Rohrleitung zumindest zeitweise, insb. mit einer Massendurchflußrate von mehr als 1000 t/h, strömenden Mediums, insb. eines Gases, einer Flüssigkeit, eines Pulvers oder eines anderen strömungsfähigen Stoffes, welches, insb. als In-Line-Meßgerät und/oder Meßgerät in Kompaktbauweise ausgebildetes, Meßsystem einen Meßaufnehmer gemäß einem der Ansprüche 1 bis 20 sowie eine mit dem Meßaufnehmer elektrisch gekoppelte, insb. in einem mechanisch mit dem Aufnehmer-Gehäuse verbundenen Elektronik-Gehäuse angeordneten, Umformer-Elektronik zum Ansteuern des Meßaufnehmers, insb. von dessen Erregeranordnung, und zum Auswerten von vom Meßaufnehmer gelieferten Schwingungssignalen umfaßt.

22. Meßsystem nach dem vorherigen Anspruch,
- wobei die Umformer-Elektronik anhand von in der Erregeranordnung umgesetzter elektrischer Erregerleistung einen die Viskosität des strömenden Mediums repräsentierenden Viskosität-Meßwert generiert; und/oder
- wobei die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert.

23. Verwenden eines Meßaufnehmers gemäß einem der Ansprüche 1 bis 20 oder eines Meßsystems gemäß einem der Ansprüche 21 bis 22 zum Messen einer Dichte und/oder einer Massendurchflußrate, insb. auch eines über ein Zeitintervall totalisierten Gesamt-Massendurchflusses, und/oder einer Viskosität und/oder einer Reynoldszahl eines in einer Prozeßleitung, insb. einer Rohrleitung, zumindest zeitweise mit einer Massendurchflußrate von mehr als 1000 t/h, insb. mehr als 1500 t/h, strömenden Mediums, insb. eines Gases, einer Flüssigkeit, eines Pulvers oder eines anderen strömungsfähigen Stoffes.

## Claims

1. A vibration measuring transducer for detecting at least one physical measured variable of a flowable medium conducted in a pipeline, in particular a gas, a fluid, a powder or another flowable substance, and/or for generating Coriolis forces used to detect a mass flow rate of a flowable medium conducted in a pipeline, in particular a gas, a fluid, a powder or another flowable substance, said measuring transducer comprising:
- a transducer housing (71), in particular mostly tubular in sections and/or externally circular cylindrical in part, of which an inlet-side first housing end is formed by means of an inlet-side first flow divider (20₁) with precisely four flow openings (20_{1A}, 20_{1B}, 20_{1C}, 20_{1D}) spaced apart from each other, in particular circular cylindrical, tapered or conical ones, and of which an outlet-side second housing end is formed by means of an outlet-side second flow divider (20₂) with precisely four flow openings (20_{2A}, 20_{2B}, 20_{2C}, 20_{2D}) spaced apart from each other, in particular circular cylindrical, tapered or conical ones;
- a tube arrangement with precisely four curved measuring tubes (18₁, 18₂, 18₃, 18₄), that is to say at least V-shaped in sections, for conducting flowable media, forming flow paths routed flow in parallel, connected to the, in particular identical, flow dividers (20₁, 20₂), in particular only mounted in the transducer housing by means of said flow dividers (20₁, 20₂) in such a way that they can oscillate and/or with an identical design and/or parallel to each other in pairs, of which
-- a first measuring tube (18₁) with an inlet-side first measuring tube end leading to a first flow opening (20_{1A}) of the first flow divider (20₁) and with an outlet-side second measuring tube end leading to a first flow opening (20_{2A}) of the second flow divider (20₂),
-- a second measuring tube (18₂), in particular parallel to the first measuring tube at least in sections, with an inlet-side first measuring tube end leading to a second flow opening (20_{1B}) of the first flow divider (20₁) and with an outlet-side second measuring tube end leading to a second flow opening (20_{2B}) of the second flow divider (20₂),
-- a third measuring tube (18₃) with an inlet-side first measuring tube end leading to a third flow opening (20_{1C}) of the first flow divider (20₁) and with an outlet-side second measuring tube end leading to a third flow opening (20_{2C}) of the second flow divider (20₂), and
-- a fourth measuring tube (18₄), in particular parallel to the third measuring tube at least in sections, with an inlet-side first measuring tube end extending into a fourth flow opening (20_{1D}) of the first flow divider (20₁) and with an outlet-side second measuring tube end extending into a fourth flow opening (20_{2B}) of the second flow divider (20₂);
- an electromechanical exciter arrangement (5), in particular formed by means of an electrodynamic first oscillation exciter (5₁) and/or one which initiates differential oscillations of the first measuring tube (18₁) relative to the second measuring tube (18₂) and an electrodynamic second oscillation exciter (5₂) and/or one which initiates differential oscillations of the third measuring tube (18₃) relative to the fourth measuring tube (18₄) and/or one which has an identical design to the first oscillation exciter (5₁), for initiating and/or maintaining bending oscillations of the four measuring tubes (18₁, 18₂, 18₃, 18₄), in particular corresponding to a natural bending oscillation mode of the tube arrangement;
- and a sensor arrangement (19) responding to vibrations of the measuring tubes (18₁, 18₂, 18₃, 18₄), in particular bending oscillations initiated by means of the exciter arrangement, in particular an electrodynamic sensor arrangement and/or a sensor arrangement formed by means of oscillation sensors (19₁, 19₂, 19₃, 19₄) with an identical design, for generating oscillation signals representing vibrations, in particular bending oscillations, of the measuring tubes (18₁, 18₂, 18₃, 18₄);
- wherein the two flow dividers (20₁, 20₂) are configured and arranged in the measuring transducer in such a way that
-- an imaginary first connecting axis (Z₁) of the measuring transducer creating an imaginary connection between the first flow opening (20_{1A}) of the first flow divider (20₁) and the first flow opening (20_{2A}) of the second flow divider (20₂) runs parallel to an imaginary second connecting axis (Z₂) of the measuring transducer creating an imaginary connection between the second flow opening (20_{1B}) of the first flow divider (20₁) and the second flow opening (20_{2B}) of the second flow divider (20₂), and
-- an imaginary third connecting axis (Z₃) of the measuring transducer creating an imaginary connection between the third flow opening (20_{1C}) of the first flow divider (20₁) and the third flow opening (20_{2C}) of the second flow divider (20₂) runs parallel to an imaginary fourth connecting axis (Z₄) of the measuring transducer creating an imaginary connection between the fourth flow opening (20_{1D}) of the first flow divider (20₁) and the fourth flow opening (20_{2D}) of the second flow divider (20₂),
- and wherein the measuring tubes are configured and arranged in the measuring transducer in such a way that
-- the tube arrangement has a first imaginary longitudinal sectional plane (XZ) located between the first measuring tube and the third measuring tube, as well as between the second measuring tube and the fourth measuring tube, relative to which the tube arrangement is mirror-symmetrical, and
-- the tube arrangement has a second imaginary longitudinal sectional plane (YZ) perpendicular to its imaginary first longitudinal sectional plane (XZ), extending between the first measuring tube and second measuring tube, as well as between the third measuring tube and fourth measuring tube, relative to which the tube arrangement is also mirror-symmetrical.

2. The measuring transducer as claimed in one of the preceding claims, wherein each of the two flow dividers (20₁, 20₂) is configured as an integral part of the transducer housing (7₁).

3. The measuring transducer as claimed in one of the preceding claims,
- wherein the exciter arrangement is configured in such a way that it can be used to induce bending oscillations in each of the four measuring tubes (18₁, 18₂, 18₃, 18₄), in particular simultaneously; and/or
- wherein the exciter arrangement is configured in such a way that it can be used to initiate bending oscillations of the first measuring tube (18₁) and the second measuring tube (18₂) mirror-inverted relative to the second imaginary longitudinal sectional plane (YZ) , in particular symmetrical relative to the second imaginary longitudinal sectional plane (YZ), and bending oscillations of the third measuring tube (18₃) and the fourth measuring tube (18₄) mirror-inverted relative to the second imaginary longitudinal sectional plane (YZ), in particular symmetrical relative to the second imaginary longitudinal sectional plane (YZ).

4. The measuring transducer as claimed in one of the preceding claims, wherein the two flow dividers (20₁, 20₂) are configured and arranged in the measuring transducer in such a way that a first imaginary longitudinal sectional plane (XZ₁) of the measuring transducer within which the first imaginary connecting axis (Z₁), in particular parallel to a main flow axis of the measuring transducer aligned with the pipeline, and the second imaginary connecting axis (Z₁) run is parallel to a second imaginary longitudinal sectional plane (XZ₂) of the measuring transducer within which the imaginary third connecting axis (Z₃) and the imaginary fourth connecting axis (Z₄) run; in particular in such a way that the first imaginary longitudinal sectional plane (XZ) of the tube arrangement is located between the first and second imaginary longitudinal sectional planes (XZ₁, XZ₂) of the measuring transducer and/or is parallel to the first and second imaginary longitudinal sectional planes (XZ₁, XZ₂) of the measuring transducer.

5. The measuring transducer as claimed in the preceding claim, wherein the two flow dividers (20₁, 20₂) are configured and arranged in the measuring transducer in such a way that a third imaginary longitudinal sectional plane (YZ₁) of the measuring transducer within which the imaginary first connecting axis (Z₁) and the imaginary third connecting axis (Z₃) run is parallel to a fourth imaginary longitudinal sectional plane (YZ₂) of the measuring transducer within which the imaginary second connecting axis (Z₂) and the imaginary fourth connecting axis (Z₄) run.

6. The measuring transducer as claimed in the preceding claim, wherein the measuring tubes are configured and arranged in the measuring transducer in such a way that the second imaginary longitudinal sectional plane (YZ) of the tube arrangement runs between the third imaginary longitudinal sectional plane (YZ₁) of the measuring transducer and the fourth imaginary longitudinal sectional plane (YZ₂) of the measuring transducer, in particular in such a way that the second imaginary longitudinal sectional plane (YZ) of the tube arrangement is parallel to the third imaginary longitudinal sectional plane (YZ₁) of the measuring transducer and parallel to the fourth imaginary longitudinal sectional plane (YZ₂) of the measuring transducer.

7. The measuring transducer as claimed in one of the preceding claims, wherein the tube arrangement has an imaginary cross-sectional plane (XY) perpendicular both to the first imaginary longitudinal sectional plane (XZ) and to the second imaginary longitudinal sectional plane (YZ);
- wherein a center of mass of the tube arrangement is located in the imaginary cross-sectional plane (XY); and/or
- wherein the tube arrangement is mirror-symmetrical relative to the imaginary cross-sectional plane (XY); and/or
- wherein each of the four measuring tubes has a measuring tube apex, defined as the greatest vertical distance between the respective measuring tube and the first imaginary longitudinal sectional plane (XZ), and the imaginary cross-sectional plane (XY) of each of the four measuring tubes intersects at its respective measuring tube apex.

8. The measuring transducer as claimed in one of the preceding claims, further comprising:
- a first coupler element (24₁) of the first type, positioned at a distance both from the first flow divider and from the second flow divider, attached on the inlet side to each of the four measuring tubes, in particular with an H- or X-shaped base area, for setting natural frequencies of natural oscillation modes of the tube arrangement, in particular bending oscillation modes, as well as
- a second coupler element (24₂) of the first type, positioned at a distance both from the first flow divider and from the second flow divider, attached on the outlet side to each of the four measuring tubes, in particular with an H- or X-shaped base area, and/or with a mostly identical design to the first coupler element (24₁) of the first type, for setting natural frequencies of natural oscillation modes of the tube arrangement, in particular bending oscillation modes.

9. The measuring transducer as claimed in the preceding claim,
- wherein each of the two coupler elements (24₁, 24₂) of the first type is symmetrical relative to the first imaginary longitudinal sectional plane (XZ) of the tube arrangement; and/or
- wherein each of the two coupler elements (24₁, 24₂) of the first type is symmetrical relative to the second imaginary longitudinal sectional plane (YZ) of the tube arrangement; and/or
- wherein the two coupler elements (24₁, 24₂) of the first type are arranged symmetrical relative to an imaginary cross-sectional plane (XY) of the tube arrangement in the measuring transducer perpendicular in each case to the first imaginary longitudinal sectional plane (XZ) and also to the second imaginary longitudinal sectional plane (YZ) of the tube arrangement; and/or
- wherein the two coupler elements (24₁, 24₂) of the first type are arranged equidistant relative to an imaginary cross-sectional plane (XY) of the tube arrangement in the measuring transducer perpendicular in each case to the first imaginary longitudinal sectional plane (XZ) and also to the second imaginary longitudinal sectional plane (YZ) of the tube arrangement; and/or
- wherein the two coupler elements (24₁, 24₂) of the first type are arranged running parallel to an imaginary cross-sectional plane (XY) of the tube arrangement in the measuring transducer perpendicular in each case both to the first imaginary longitudinal sectional plane (XZ) and also to the second imaginary longitudinal sectional plane (YZ) of the tube arrangement; and/or
- wherein each of the two coupler elements (24₁, 24₂) of the first type is configured and positioned in the measuring transducer in such a way that it is symmetrical relative to the first imaginary longitudinal sectional plane (XZ) of the tube arrangement and/or relative to the second imaginary longitudinal sectional plane (YZ) of the tube arrangement; and/or
- wherein both of the two coupler elements (24₁, 24₂) of the first type are configured and positioned in the measuring transducer in such a way that, when projected onto an imaginary cross-sectional plane (XY) of the tube arrangement perpendicular both to the first imaginary longitudinal sectional plane (XZ) of the tube arrangement and also to the second imaginary longitudinal sectional plane (YZ) of the tube arrangement, it is configured in an X shape or, when projected onto an imaginary cross-sectional plane (XY) of the tube arrangement perpendicular both to the first imaginary longitudinal sectional plane (XZ) and the second imaginary longitudinal sectional plane (YZ) of the tube arrangement, it is configured in an H shape; and/or
- wherein both the first coupler element (24₁) of the first type and the second coupler element (24₂) of the first type are formed by means of plate-shaped partial elements.

10. The measuring transducer as claimed in one of claims 8 to 9, further comprising:
- an, in particular plate-shaped, first coupler element (25₁) of the second type, which is attached on the inlet side to the first measuring tube and to the second measuring tube in order to form inlet-side nodes both for vibrations, in particular bending oscillations, of the first measuring tube and also for mirror-inverted vibrations, in particular bending oscillations, of the second measuring tube;
- a second coupler element (25₂) of the second type, in particular plate-shaped and/or with an identical design to the first coupler element (25₁) of the second type and/or parallel to the first coupler element (25₁) of the second type, which is attached on the outlet side to the first measuring tube and to the second measuring tube in order to form outlet-side nodes both for vibrations, in particular bending oscillations, of the first measuring tube and also for mirror-inverted vibrations, in particular bending oscillations, of the second measuring tube;
- a third coupler element (25₃) of the second type, in particular plate-shaped and/or with an identical design to the first coupler element (25₁) of the second type and/or parallel to the second coupler element (25₂) of the second type, which is attached on the inlet side to the third measuring tube and to the fourth measuring tube at a distance both from the first flow divider and also from the second flow divider in order to form inlet-side nodes both for vibrations, in particular bending oscillations, of the third measuring tube and also for mirror-inverted vibrations, in particular bending oscillations, of the fourth measuring tube; and
- a fourth coupler element (25₄) of the second type, in particular plate-shaped and/or with an identical design to the first coupler element (25₁) of the second type and/or parallel to the first coupler element (25₁) of the second type, which is attached on the outlet side to the third measuring tube and to the fourth measuring tube at a distance both from the first flow divider and also from the second flow divider as well as from the first coupler element in order to form outlet-side nodes both for vibrations, in particular bending oscillations, of the third measuring tube and also for mirror-inverted vibrations, in particular bending oscillations, of the fourth measuring tube.

11. The measuring transducer as claimed in the preceding claim,
- wherein the first coupler element (25₁) of the second type is attached both to a tube segment of the first measuring tube (18₁) extending between the first flow divider (20₁) and the first coupler element (24₁) of the first type and to a tube segment of the second measuring tube (18₂) extending between the first flow divider (20₁) and the first coupler element (24₁) of the first type;
- wherein the second coupler element (25₂) of the second type is attached both to a tube segment of the first measuring tube (18₁) extending between the second flow divider (20₂) and the second coupler element (24₂) of the first type and to a tube segment of the second measuring tube (18₂) extending between the second flow divider (20₂) and the second coupler element (24₂) of the first type;
- wherein the third coupler element (25₃) of the second type is attached both to a tube segment of the third measuring tube (18₃) extending between the first flow divider (20₁) and the first coupler element (24₁) of the first type and to a tube segment of the fourth measuring tube (18₄) extending between the first flow divider (20₁) and the first coupler element (24₁) of the first type; and
- wherein the fourth coupler element (25₄) of the second type is attached both to a tube segment of the third measuring tube (18₃) extending between the second flow divider (20₂) and the second coupler element (24₂) of the first type and to a tube segment of the fourth measuring tube (18₄) extending between the second flow divider (20₂) and the second coupler element (24₁) of the first type.

12. The measuring transducer as claimed in one of claims 10 to 11,
- wherein a useful oscillation length, L₁₈ₓ, of the first measuring tube, in particular each of the measuring tubes, corresponding to a length of a section of the deflection curve running between the first coupler element of the second type and the second coupler element of the second type, is equal to less than 3000 mm, in particular less than 2500 mm and/or more than 800 mm;
- and wherein a caliber to oscillation length ratio, D₁₈/L₁₈ₓ, of the measuring transducer, defined by a ratio of a caliber, D₁₈, of the first measuring tube (18₁) to the useful oscillation length, L₁₈ₓ, of the first measuring tube (18₁), is equal to more than 0.03, in particular more than 0.05 and/or less than 0.15.

13. The measuring transducer as claimed in one of the preceding claims,
- wherein the first measuring tube has a caliber equal to a caliber of the second measuring tube, in particular also equal to a caliber of the third measuring tube and equal to a caliber of the fourth measuring tube; and/or
- wherein the four measuring tubes (18₁, 18₂, 18₃, 18₄) have an identical design in terms of the material from which their tube walls are made and/or in terms of their geometric tube dimensions, in particular a measuring tube length, a tube wall thickness, a tube external diameter and/or a caliber; and/or
- wherein the transducer housing (7₁), the flow dividers (20₁, 20₂) and tube walls of the measuring tubes (18₁, 18₂, 18₃, 18₄) are each made of steel, in particular stainless steel and/or high-strength steel.

14. The measuring transducer as claimed in one of the preceding claims, wherein each of the four measuring tubes (18₁, 18₂, 18₃, 18₄), in particular of the same size, has a caliber, D₁₈, which is more than 40 mm, in particular more than 60 mm.

15. The measuring transducer as claimed in the preceding claim, wherein the measuring tubes (18₁, 18₂, 18₃, 18₄) are curved and arranged in such a way that a caliber to height ratio, D₁₈/Q₁₈, of the tube arrangement, defined by a ratio of the caliber, D₁₈, of the first measuring tube to a maximum lateral expansion, Q₁₈, of the tube arrangement, measured from an apex of the first measuring tube (18₁) to an apex of the third measuring tube (18₃), is equal to more than 0.05, in particular more than 0.07 and/or less than 0.3, in particular less than 0.2.

16. The measuring transducer as claimed in one of the preceding claims, wherein a center segment (7_{1A}) of the transducer housing (7₁) is formed at least partially by a straight, in particular circular cylindrical, support tube, in particular in such a way that a segment of the first measuring tube protruding from said support tube on a first side and a segment of the second measuring tube protruding from said support tube on the first side are surrounded by a first housing cap of the transducer housing, and in such a way that a segment of the third measuring tube protruding from said support tube on a second side opposite the first side and a segment of the fourth measuring tube protruding from said support tube on the second side are surrounded by a second housing cap of the transducer housing, in particular with an identical design to the first housing cap.

17. The measuring transducer as claimed in one of the preceding claims, wherein the first flow divider (20₁) has a flange (6₁) for connecting the measuring transducer to a pipe segment of the pipeline used to conduct medium to the measuring transducer, and the second flow divider (20₂) has a flange (6₂) for connecting the measuring transducer to a pipe segment of the pipeline used to conduct medium away from the measuring transducer.

18. The measuring transducer as claimed in the preceding claim,
- wherein each of the flanges (6₁, 6₂) has a sealing surface (6_{1A}, 6_{2A}) for establishing a fluid-impermeable connection between the measuring transducer and the corresponding pipe segment of the pipeline, and wherein a distance between the sealing surfaces (6_{1A}, 6₂₄) of the two flanges (6₁, 6₂) defines an installation length, L₁₁, of the measuring transducer, in particular equal to more than 1200 mm and/or less than 3000 mm, in particular less than 2500 mm,
- and wherein a measuring tube length, L₁₈, of the first measuring tube (18₁) equal to a length of a section of a deflection curve of the first measuring tube running between the first flow opening (20_{1A}) of the first flow divider (20₁) and the first flow opening (20_{2A}) of the second flow divider (20₂) is equal to more than 1000 mm, in particular more than 1200 mm and/or less than 3000 mm, in particular less than 2500 mm.

19. The measuring transducer as claimed in the preceding claim, wherein a measuring tube length to installation length ratio, L₁₈/L₁₁, of the measuring transducer, defined by a ratio of the measuring tube length, L₁₈, of the first measuring tube to the installation length, L₁₁, of the measuring transducer, is equal to more than 0.7, in particular more than 0.8 and/or less than 1.2.

20. The measuring transducer as claimed in one of the preceding claims,
- wherein the sensor arrangement (19) is formed by means of an inlet-side first oscillation sensor (19₁), in particular an electrodynamic one and/or one which carries out differential detection of oscillations of the first measuring tube (18₁) relative to the second measuring tube (18₂), as well as an outlet-side second oscillation sensor (19₂), in particular an electrodynamic one and/or one which carries out differential detection of oscillations of the first measuring tube (18₁) relative to the second measuring tube (18₂),
- and wherein the sensor arrangement (19) is formed by means of a third inlet-side oscillation sensor (19₃), in particular an electrodynamic one and/or one which carries out differential detection of oscillations of the third measuring tube (18₃) relative to the fourth measuring tube (18₄) and/or one which is electrically connected in series with the first oscillation sensor (19₁), as well as an outlet-side fourth oscillation sensor (19₄), in particular an electrodynamic one and/or one which carries out differential detection of oscillations of the third measuring tube (18₃) relative to the fourth measuring tube (18₄) and/or one which is electrically connected in series with the second oscillation sensor (19₂).

21. A measuring system for measuring a density and/or a mass flow rate, in particular also a total mass flow totaled over a time interval, of a medium, in particular a gas, a fluid, a powder or another flowable substance, flowing at least occasionally in a pipeline, in particular with a mass flow rate of more than 1000 t/h, said measuring system, in particular configured as an inline measuring device and/or a measuring device with a compact design, comprising a measuring transducer as claimed in one of claims 1 to 20, and converter electronics electrically connected to the measuring transducer, in particular arranged in an electronics housing mechanically connected to the transducer housing, for controlling the measuring transducer, in particular its exciter arrangement, and for analyzing oscillation signals supplied by the measuring transducer.

22. The measuring system as claimed in the preceding claim,
- wherein the converter electronics generate a viscosity measured value representing the viscosity of the flowing medium based on electrical exciter power converted in the exciter arrangement; and/or
- wherein the converter electronics generate a mass flow measured value representing the mass flow rate of the flowing medium and/or a density measured value representing the density of the flowing medium, based on oscillation signals supplied by the measuring transducer.

23. The use of a measuring transducer as claimed in one of claims 1 to 20 or a measuring system as claimed in one of claims 21 to 22 for measuring a density and/or a mass flow rate, in particular also a total mass flow totaled over a time interval, and/or a viscosity and/or a Reynolds number of a medium, in particular a gas, a fluid, a powder or another flowable substance, flowing in a process line, in particular a pipeline, at least occasionally with a mass flow rate of more than 1000 t/h, in particular more than 1500 t/h.

## Revendications

1. Capteur du type à vibrations destiné à mesurer au moins une grandeur physique d'un produit circulant dans une conduite, notamment un gaz, un liquide, une poudre ou toute autre substance fluide, et/ou lequel capteur étant destiné à générer des forces de Coriolis servant à la mesure d'un débit massique d'un produit circulant dans une conduite, notamment d'un gaz, d'un liquide, d'une poudre ou d'une autre substance fluide, lequel capteur comprend :
- un boîtier de capteur (7₁), notamment en partie essentiellement tubulaire et/ou en partie de section circulaire cylindrique à l'extérieur, boîtier dont une première extrémité côté entrée est formée par un premier diviseur de débit (20₁) côté entrée, lequel comporte exactement quatre ouvertures d'écoulement (20_{1A}, 20_{1B}, 20_{1C}, 20_{1D}) espacées les uns des autres, notamment circulaires cylindriques, coniques ou en forme de cône, et boîtier dont une deuxième extrémité côté sortie est formée par un deuxième diviseur de débit (20₂) côté sortie, lequel comporte exactement quatre ouvertures d'écoulement (20_{2A}, 20_{2B}, 20_{2C}, 20_{2D}) espacées les uns des autres, notamment circulaires cylindriques, coniques ou en forme de cône ;
- un agencement de tubes avec exactement quatre tubes de mesure (18₁, 18₂, 18₃, 18₄) formant des chemins d'écoulement parallèles, lesquels tubes sont raccordés aux diviseurs de débit (20₁, 20₂), lesquels diviseurs de débit sont notamment de construction identique, lesquels tubes sont notamment fixés de manière apte à vibrer dans le boîtier de capteur, uniquement au moyen desdits diviseurs de débit (20₁, 20₂), et/ou lesquels tube étant de construction identique et/ou disposés par paires parallèles, courbés, à savoir au moins partiellement en forme de V, lesquels tubes étant destinés à guider le produit, tubes parmi lesquels
-- un premier tube de mesure (18₁) débouche, par une première extrémité côté entrée, dans une première ouverture d'écoulement (20_{1A}) du premier diviseur de débit (20₁) et, par une deuxième extrémité côté sortie, dans une première ouverture d'écoulement (20_{2A}) du deuxième diviseur de débit (20₂),
-- un deuxième tube de mesure (18₂), lequel est parallèle au premier tube de mesure au moins par sections, lequel deuxième tube débouche, par une première extrémité côté entrée, dans une deuxième ouverture d'écoulement (20_{1B}) du premier diviseur de débit (20₁) et, par une deuxième extrémité côté sortie, dans une deuxième ouverture d'écoulement (20_{2B}) du deuxième diviseur de débit (20₂),
-- un troisième tube de mesure (18₃) débouche, par une première extrémité côté entrée, dans une troisième ouverture d'écoulement (20_{1C}) du premier diviseur de débit (20₁) et, par une deuxième extrémité côté sortie, dans une troisième ouverture d'écoulement (20_{2C}) du deuxième diviseur de débit (20₂),
-- un quatrième tube de mesure (18₄), lequel est parallèle au troisième tube de mesure au moins par sections, lequel quatrième tube débouche, par une première extrémité côté entrée, dans une quatrième ouverture d'écoulement (20_{1D}) du premier diviseur de débit (20₁) et, par une deuxième extrémité côté sortie, dans une quatrième ouverture d'écoulement (20_{2D}) du deuxième diviseur de débit (20₂),
- un circuit d'excitation électromécanique (5), lequel circuit est formé par un premier excitateur de vibrations (5₁), notamment électrodynamique et/ou excitant de manière différentielle en vibrations le premier tube de mesure (18₁) par rapport au deuxième tube de mesure (18₂), et lequel circuit est formé par un deuxième excitateur de vibrations (5₂), notamment électrodynamique et/ou excitant de manière différentielle en vibrations le troisième tube de mesure (18₃) par rapport au quatrième tube de mesure (18₄) et/ou lequel deuxième excitateur de vibrations est de construction identique au premier excitateur de vibrations (5₁), lequel circuit est destiné à générer et/ou maintenir des vibrations de flexion de chacun des quatre tubes de mesure (18₁, 18₂, 18₃, 18₄), lesquelles vibrations de flexion correspondent notamment à un mode naturel de vibrations de flexion de l'agencement de tubes ;
- ainsi qu'un agencement de capteurs (19), lequel agencement réagit aux vibrations, notamment aux vibrations de flexion excitées par le circuit d'excitation, des tubes de mesure (18₁, 18₂, 18₃, 18₄), lequel agencement est notamment électrodynamique et/ou constitué de capteurs de vibrations (19₁, 19₂, 19₃, 19₄) de construction identique, lequel agencement est destiné à générer des signaux de vibration représentant les vibrations, notamment les vibrations de flexion, des tubes de mesure (18₁, 18₂, 18₃, 18₄) ;
- les deux diviseurs de débit (20₁, 202) étant conçus et disposés dans le capteur
-- de telle sorte qu'un premier axe de liaison imaginaire (Z₁) du capteur, lequel premier axe relie de manière imaginaire la première ouverture d'écoulement débit (20_{1A}) du premier diviseur de débit (20₁) à la première ouverture d'écoulement (20_{2A}) du deuxième diviseur de débit (20₂), soit parallèle à un deuxième axe de liaison imaginaire (Z₂) du capteur, lequel deuxième axe relie de manière imaginaire la deuxième ouverture d'écoulement (20_{1B}) du premier diviseur de débit (20₁) à la deuxième ouverture d'écoulement (20_{2B}) du deuxième diviseur de débit (20₂), et
-- de telle sorte qu'un troisième axe de liaison imaginaire (Z₃) du capteur, lequel troisième axe relie de manière imaginaire la troisième ouverture d'écoulement (20_{1C}) du premier diviseur de débit (20₁) à la troisième ouverture d'écoulement (20_{2C}) du deuxième diviseur de débit (20₂), soit parallèle à un quatrième axe de liaison imaginaire (Z₄) du capteur, lequel quatrième axe relie de manière imaginaire la quatrième ouverture d'écoulement (20_{1D}) du premier diviseur de débit (20₁) à la quatrième ouverture d'écoulement (20_{2B}) du deuxième diviseur de débit (20₂),
- et les tubes de mesure étant conçus et disposés dans le capteur
-- de telle sorte que l'agencement de tubes présente un premier plan de coupe longitudinale imaginaire (XZ) situé à la fois entre le premier tube de mesure et le troisième tube de mesure et entre le deuxième tube de mesure et le quatrième tube de mesure, plan de coupe par rapport auquel l'agencement de tubes est symétrique par réflexion, et
-- de telle sorte que l'agencement de tubes présente un deuxième plan de coupe longitudinal imaginaire (YZ), perpendiculaire à son premier plan de coupe longitudinal imaginaire (XZ), lequel deuxième plan de coupe s'étend à la fois entre le premier tube de mesure et le deuxième tube de mesure et entre le troisième tube de mesure et le quatrième tube de mesure, deuxième plan de coupe par rapport auquel l'agencement de tubes est également symétrique par réflexion.

2. Capteur selon la revendication précédente, pour lequel chacun des deux diviseurs de débit (20₁, 20₂) est réalisé en tant que partie intégrante du boîtier de capteur (7₁).

3. Capteur selon l'une des revendications précédentes
- pour lequel le circuit d'excitation est conçu de telle sorte qu'il permette d'exciter chacun des quatre tubes de mesure (18₁, 18₂, 18₃, 18₄), notamment simultanément, en vibrations de flexion ; et/ou
- pour lequel le circuit d'excitation est conçu de telle sorte qu'il permette d'exciter le premier tube de mesure (18₁) et le deuxième tube de mesure (18₂) en vibrations de flexion de sens opposé par rapport au deuxième plan de coupe longitudinal imaginaire (YZ), notamment en vibrations de flexion symétriques par rapport au deuxième plan de coupe longitudinal imaginaire (YZ), et le troisième tube de mesure (18₃) et le quatrième tube de mesure (18₄) en vibrations de flexion de sens opposé par rapport au deuxième plan de coupe longitudinal imaginaire (YZ), notamment en vibrations de flexion symétriques par rapport au deuxième plan de coupe longitudinal imaginaire (YZ).

4. Capteur selon l'une des revendications précédentes, pour lequel les deux diviseurs de débit (20₁, 20₂) sont conçus et disposés dans le capteur de telle sorte qu'un premier plan de coupe longitudinal imaginaire (XZ₁) du capteur - plan à l'intérieur duquel s'étendent le premier axe de liaison imaginaire (Z₁) et le deuxième axe de liaison imaginaire (Z₁), lesquels axes sont parallèles à un premier axe d'écoulement principal du capteur, lequel axe d'écoulement principal est notamment aligné avec la conduite - est parallèle à un deuxième plan de coupe longitudinal imaginaire (XZ₂) du capteur, plan à l'intérieur duquel s'étendent le troisième axe de liaison imaginaire (Z₃) et le quatrième axe de liaison imaginaire (Z₄) ; notamment de telle sorte que le premier plan de coupe longitudinale imaginaire (XZ) de l'agencement de tubes se situe entre le premier et le deuxième plan de coupe longitudinale imaginaire (XZ₁, XZ₂) du capteur et/ou soit parallèle au premier et au deuxième plan de coupe longitudinale imaginaire (XZ₁, XZ₂) du capteur.

5. Capteur selon la revendication précédente, pour lequel les deux diviseurs de débit (20₁, 20₂) sont conçus et disposés dans le capteur de telle sorte qu'un troisième plan de coupe longitudinal imaginaire (YZ₁) du capteur, plan à l'intérieur duquel s'étendent le premier axe de liaison imaginaire (Z₁) et le troisième axe de liaison imaginaire (Z₃), soit parallèle à un quatrième plan de coupe longitudinal imaginaire (YZ₂) du capteur, plan à l'intérieur duquel s'étendent le deuxième axe de liaison imaginaire (Z₂) et le quatrième axe de liaison imaginaire (Z₄).

6. Capteur selon la revendication précédente, pour lequel les tubes de mesure sont conçus et disposés dans le capteur de telle sorte que le deuxième plan de coupe longitudinal imaginaire (YZ) de l'agencement de tubes s'étende entre le troisième plan de coupe longitudinal imaginaire (YZ₁) du capteur et le quatrième plan de coupe longitudinal imaginaire (YZ₂) du capteur, notamment de telle sorte que le deuxième plan de coupe longitudinal imaginaire (YZ) de l'agencement de tubes soit parallèle au troisième plan de coupe longitudinal imaginaire (YZ₁) du capteur et parallèle au quatrième plan de coupe longitudinal imaginaire (YZ₂) du capteur.

7. Capteur selon l'une des revendications précédentes, pour lequel l'agencement de tubes comporte un plan de coupe transversal imaginaire (XY) perpendiculaire à la fois au premier plan de coupe longitudinal imaginaire (XZ) et au deuxième plan de coupe longitudinal imaginaire (YZ) ;
- le centre de gravité de l'agencement de tubes se situant dans le plan de coupe transversale imaginaire (XY) ; et/ou
- l'agencement de tubes présentant une symétrie de réflexion par rapport au plan de coupe transversale imaginaire (XY) ; et/ou
- chacun des quatre tubes de mesure présentant un sommet de tube de mesure, lequel est défini comme la plus grande distance perpendiculaire entre le tube de mesure concerné et le premier plan de coupe longitudinale imaginaire (XZ), et le plan de coupe transversal imaginaire (XY) coupant chacun des quatre tubes de mesure en son sommet de tube de mesure respectif.

8. Capteur selon l'une des revendications précédentes, comprenant en outre
- un premier élément de couplage (24₁) de premier type, espacé à la fois du premier diviseur de débit et du deuxième diviseur de débit, fixé côté entrée sur chacun des quatre tubes de mesure, lequel premier élément présente notamment une surface de base en forme de H ou de X, lequel premier élément est destiné à régler les fréquences propres des modes de vibration naturels de l'agencement de tubes, notamment des modes de vibration de flexion, ainsi que
- un deuxième élément de couplage (24₂) de premier type, espacé à la fois du premier diviseur de débit et du deuxième diviseur de débit, fixé côté sortie sur chacun des quatre tubes de mesure, lequel deuxième élément présente notamment une surface de base en forme de H ou de X et/ou est de construction essentiellement identique au premier élément de couplage (24₁) de premier type, lequel deuxième élément est destiné à régler les fréquences propres des modes de vibration naturels de l'agencement de tubes, notamment des modes de vibration de flexion.

9. Capteur selon la revendication précédente,
- pour lequel chacun des deux éléments de couplage (24₁, 24₂) de premier type est symétrique par rapport au premier plan de coupe longitudinale imaginaire (XZ) de l'agencement de tubes ; et/ou
- pour lequel chacun des deux éléments de couplage (24₁, 24₂) de premier type est symétrique par rapport au deuxième plan de coupe longitudinale imaginaire (YZ) de l'agencement de tubes ; et/ou
- pour lequel les deux éléments de couplage (24₁, 24₂) de premier type sont disposés de manière symétrique par rapport à un plan de coupe transversal imaginaire (XY) de l'agencement de tubes dans le capteur, lequel plan de coupe transversal est perpendiculaire à la fois au premier plan de coupe longitudinal imaginaire (XZ) et au deuxième plan de coupe longitudinal imaginaire (YZ) de l'agencement de tubes ; et/ou
- pour lequel les deux éléments de couplage (24₁, 24₂) de premier type sont disposés dans le capteur à égale distance par rapport à un plan de coupe transversal imaginaire (XY) de l'agencement de tubes, lequel plan de coupe transversal est perpendiculaire à la fois au premier plan de coupe longitudinal imaginaire (XZ) et au deuxième plan de coupe longitudinal imaginaire (YZ) de l'agencement de tubes ; et/ou
- pour lequel les deux éléments de couplage (24₁, 24₂) de premier type sont disposés dans le capteur de manière à s'étendre parallèlement à un plan de coupe transversal imaginaire (XY) de l'agencement de tubes, lequel plan de coupe transversal est perpendiculaire à la fois au premier plan de coupe longitudinal imaginaire (XZ) et au deuxième plan de coupe longitudinal imaginaire (YZ) de l'agencement de tubes ; et/ou
- pour lequel chacun des deux éléments de couplage (24₁, 24₂) de premier type est conçu et placé dans le capteur de telle sorte qu'il soit symétrique par rapport au premier plan de coupe longitudinale imaginaire (XZ) de l'agencement de tubes et/ou par rapport au deuxième plan de coupe longitudinale imaginaire (YZ) de l'agencement de tubes ; et/ou
- pour lequel chacun des deux éléments de couplage (24₁, 24₂) de premier type est conçu et placé dans le capteur
de telle sorte que, lorsque lesdits éléments sont projetés sur un plan de coupe transversal imaginaire perpendiculaire à la fois au premier plan de coupe longitudinale imaginaire (XZ) de l'agencement de tubes et au deuxième plan de coupe longitudinale imaginaire (YZ) de l'agencement de tubes, chacun des deux éléments présente une forme en X, ou
de telle sorte que, lorsque lesdits éléments sont projetés sur un plan de coupe transversal imaginaire (XY) de l'agencement de tubes, lequel plan de coupe transversal est perpendiculaire respectivement au premier plan de coupe longitudinal imaginaire (XZ) et au deuxième plan de coupe longitudinal imaginaire (YZ) de l'agencement de tubes, chacun des deux éléments présente une forme en H ; et/ou
- pour lequel le premier élément de couplage (24₁) de premier type et le deuxième élément de couplage (24₂) de premier type sont chacun formés au moyen d'éléments partiels en forme de plaques.

10. Capteur selon l'une des revendications 8 à 9, comprenant en outre :
- un premier élément de couplage (25₁) de deuxième type, notamment en forme de plaque, lequel premier élément est fixé côté entrée sur le premier tube de mesure et sur le deuxième tube de mesure, afin de former des nœuds de vibration côté entrée tant pour les vibrations, notamment les vibrations de flexion, du premier tube de mesure que pour les vibrations de sens opposé, notamment les vibrations de flexion, du deuxième tube de mesure ;
- un deuxième élément de couplage (25₂) de deuxième type, notamment en forme de plaque et/ou de construction identique au premier élément de couplage (25₁) de deuxième type et/ou parallèle au premier élément de couplage (25₁) de deuxième type, lequel deuxième élément est fixé côté sortie sur le premier tube de mesure et sur le deuxième tube de mesure, afin de former des nœuds de vibration côté sortie tant pour les vibrations, notamment les vibrations de flexion, du premier tube de mesure que pour les vibrations de sens opposé, notamment les vibrations de flexion, du deuxième tube de mesure ;
- un troisième élément de couplage (25₃) de deuxième type, notamment en forme de plaque et/ou de construction identique au premier élément de couplage (25₁) de deuxième type et/ou parallèle au deuxième élément de couplage (25₂) de deuxième type, lequel troisième élément est fixé à distance tant du premier diviseur de débit que du deuxième diviseur de débit, côté entrée, sur le troisième tube de mesure et sur le quatrième tube de mesure, afin de former des nœuds de vibration côté entrée tant pour les vibrations, notamment les vibrations de flexion, du troisième tube de mesure que pour les vibrations de sens opposé, notamment les vibrations de flexion, du quatrième tube de mesure ; ainsi que
- un quatrième élément de couplage (25₄) de deuxième type, notamment en forme de plaque et/ou de construction identique au premier élément de couplage (25₁) de deuxième type et/ou parallèle au premier élément de couplage (25₁), lequel quatrième élément de couplage est fixé à distance du premier diviseur de débit, du deuxième diviseur de débit ainsi que du premier élément de couplage, côté sortie, sur le troisième tube de mesure et sur le quatrième tube de mesure, afin de former des nœuds de vibration côté sortie tant pour les vibrations, notamment les vibrations de flexion, du troisième tube de mesure que pour les vibrations de sens opposé, notamment les vibrations de flexion, du quatrième tube de mesure.

11. Capteur selon la revendication précédente,
- pour lequel le premier élément de couplage (25₁) de deuxième type est fixé à la fois à un segment de tube du premier tube de mesure (18₁) s'étendant entre le premier diviseur de débit (20₁) et le premier élément de couplage (24₁) de premier type, et à un segment de tube du deuxième tube de mesure (18₂) s'étendant entre le premier diviseur de débit (20₁) et le premier élément de couplage (24₁) de premier type ;
- pour lequel le deuxième élément de couplage (25₂) de deuxième type est fixé à la fois à un segment de tube du premier tube de mesure (18₁) s'étendant entre le deuxième diviseur de débit (20₂) et le deuxième élément de couplage (24₂) de premier type, et à un segment de tube du deuxième tube de mesure (18₂) s'étendant entre le deuxième diviseur de débit (20₂) et le deuxième élément de couplage (24₂) de premier type ;
- pour lequel le troisième élément de couplage (25₃) de deuxième type est fixé à la fois à un segment de tube du troisième tube de mesure (18₃) s'étendant entre le premier diviseur de débit (20₁) et le premier élément de couplage (24₁) de premier type, et à un segment de tube du quatrième tube de mesure (18₄) s'étendant entre le premier diviseur de débit (20₁) et le premier élément de couplage (24₁) de premier type ; et
- pour lequel le quatrième élément de couplage (25₄) de deuxième type est fixé à la fois à un segment de tube du troisième tube de mesure (18₃) s'étendant entre le deuxième diviseur de débit (20₂) et le deuxième élément de couplage (24₂) de premier type, et à un segment de tube du quatrième tube de mesure (18₄) s'étendant entre le deuxième diviseur de débit (20₂) et le deuxième élément de couplage (24₁) de premier type.

12. Capteur selon l'une des revendications 10 à 11,
- pour lequel la longueur de vibration utile, L₁₈ₓ, du premier tube de mesure - notamment de chacun des tubes de mesure, laquelle longueur correspond à la longueur d'un tronçon de la ligne de flexion s'étendant entre le premier élément de couplage de deuxième type et le deuxième élément de couplage de deuxième type - est inférieure à 3 000 mm, notamment inférieure à 2 500 mm et/ou supérieure à 800 mm, et
- pour lequel un rapport calibre/longueur de vibration, D₁₈/L₁₈ₓ, du capteur - lequel rapport est défini par le rapport entre un calibre, D₁₈, du premier tube de mesure (18₁) et la longueur de vibration utile, L₁₈ₓ, du premier tube de mesure (18₁) - est supérieur à 0,03, notamment supérieur à 0,05 et/ou inférieur à 0,15.

13. Capteur selon l'une des revendications précédentes,
- pour lequel le premier tube de mesure présente un calibre identique à celui du deuxième tube de mesure, et notamment également identique à celui du troisième tube de mesure ainsi qu'à celui du quatrième tube de mesure ; et/ou
- pour lequel les quatre tubes de mesure (18₁, 18₂, 18₃, 18₄) sont de construction identique en ce qui concerne le matériau constituant leurs parois et/ou leurs dimensions géométriques, notamment leur longueur, l'épaisseur de leur paroi, leur diamètre extérieur et/ou leur calibre ; et/ou
- pour lequel le boîtier de capteur (7₁), les diviseurs de débit (20₁, 20₂) et les parois des tubes de mesure (18₁, 18₂, 18₃, 18₄) sont chacun constitués d'acier, notamment d'acier inoxydable et/ou à haute résistance.

14. Capteur selon l'une des revendications précédentes, pour lequel chacun des quatre tubes de mesure (18₁, 18₂, 18₃, 18₄), notamment de même diamètre, présente un calibre, D₁₈, supérieur à 40 mm, notamment supérieur à 60 mm

15. Capteur selon la revendication précédente, pour lequel les tubes de mesure (18₁, 18₂, 18₃, 18₄) sont courbés et disposés de telle sorte qu'un rapport calibre/hauteur, D₁₈/Q₁₈, de l'agencement de tubes - lequel rapport est défini par un rapport entre le calibre, D₁₈, du premier tube de mesure et une extension latérale maximale, Q₁₈, de l'agencement de tubes, laquelle extension est mesurée d'un sommet du premier tube de mesure (18₁) à un sommet du troisième tube de mesure (18₃) - soit supérieur à 0,05, notamment supérieur à 0,07 et/ou inférieur à 0,35, notamment inférieur à 0,2.

16. Capteur selon l'une des revendications précédentes, pour lequel un segment central (7_{1A}) du boîtier de capteur (7₁) est formé, au moins en partie, par un tube de support droit, notamment cylindrique circulaire, notamment de telle sorte qu'un segment du premier tube de mesure faisant saillie d'un premier côté dudit tube de support et un segment du deuxième tube de mesure faisant saillie d'un premier côté dudit tube de support, sont entourés par un premier capuchon de boîtier du capteur et qu'un segment du troisième tube de mesure faisant saillie d'un deuxième côté, opposé au premier côté, dudit tube de support, ainsi qu'un segment du quatrième tube de mesure faisant saillie du deuxième côté dudit tube de support, sont entourés par un deuxième capuchon de boîtier du capteur, lequel deuxième capuchon est notamment de construction identique au premier capuchon de boîtier.

17. Capteur selon l'une des revendications précédentes, pour lequel le premier diviseur de débit (20₁) comporte une bride (6₁) destinée à raccorder le capteur à un segment de conduite servant à acheminer le produit vers le capteur, et pour lequel le deuxième diviseur de débit (20₂) comporte une bride (6₂) destinée à raccorder le capteur à un segment de la conduite servant à évacuer le produit du capteur.

18. Capteur selon la revendication précédente,
- pour lequel chacune des brides (6₁, 6₂) comporte une surface d'étanchéité (6_{1A}, 6_{2A}) destinée à relier de manière étanche aux fluides le capteur au segment correspondant de la conduite, et
pour lequel la distance entre les surfaces d'étanchéité (6_{1A}, 6_{2A}) des deux brides (6₁, 6₂) définit une longueur de montage, L₁₁, notamment, supérieure à 1 200 mm et/ou inférieure à 3 000 mm, notamment inférieure à 2 500 mm, du capteur,
- et pour lequel une longueur de tube de mesure, L₁₈, du premier tube de mesure (181) - laquelle longueur correspond à une longueur d'un tronçon d'une ligne de courbure du premier tube de mesure, lequel tronçon s'étend entre la première ouverture d'écoulement (20_{1A}) du premier diviseur de débit (20₁) et la première ouverture d'écoulement (20_{2A}) du deuxième diviseur de débit (20₂) - est supérieure à 1 000 mm, notamment supérieure à 1 200 mm, et/ou inférieure à 3 000 mm, notamment inférieure à 2 500 mm.

19. Capteur selon la revendication précédente, pour lequel le rapport entre la longueur du tube de mesure et la longueur de montage, L₁₈/L₁₁, du capteur, défini par le rapport entre la longueur du tube de mesure, L₁₈, du premier tube de mesure et la longueur de montage, L₁₁, du capteur, est supérieur à 0,7, notamment supérieur à 0,8 et/ou inférieur à 1,2.

20. Capteur selon l'une des revendications précédentes,
- pour lequel l'agencement de capteurs (19) est constitué d'un premier capteur de vibrations (19₁) situé côté entrée, notamment électrodynamique et/ou mesurant de manière différentielle les vibrations du premier tube de mesure (18₁) par rapport au deuxième tube de mesure (18₂), ainsi que d'un deuxième capteur de vibrations (19₂) situé côté sortie, notamment électrodynamique et/ou mesurant de manière différentielle les vibrations du premier tube de mesure (18₁) par rapport au deuxième tube de mesure (18₂),
- et pour lequel l'agencement de capteurs (19) est constitué d'un troisième capteur de vibrations (19₃) situé côté entrée, notamment électrodynamique et/ou mesurant de manière différentielle les vibrations du troisième tube de mesure (18₃) par rapport au quatrième tube de mesure (18₄) et/ou connecté électriquement en série avec le premier capteur de vibrations (19₁), ainsi que d'un quatrième capteur de vibrations (19₄) situé côté sortie, notamment électrodynamique et/ou mesurant de manière différentielle les vibrations du troisième tube de mesure (18₃) par rapport au quatrième tube de mesure (18₄) et/ou couplé électriquement en série avec le deuxième capteur de vibrations (19₂).

21. Système de mesure destiné à la mesure de la densité et/ou du débit massique, notamment également le débit massique total cumulé sur un intervalle de temps, d'un produit s'écoulant au moins temporairement dans une conduite, lequel produit présente notamment un débit massique supérieur à 1 000 t/h, produit concernant lequel il s'agit notamment d'un gaz, d'un liquide, d'une poudre ou d'une autre substance capable de s'écouler, lequel système de mesure, conçu notamment sous la forme d'un appareil de mesure en ligne et/ou d'un appareil de mesure de conception compacte, comprend un capteur selon l'une des revendications 1 à 20 ainsi qu'une électronique de transmetteur couplée électriquement au capteur, laquelle électronique est disposée notamment dans un boîtier électronique relié mécaniquement au boîtier du capteur, laquelle électronique est destinée à commander le capteur - notamment son circuit d'excitation - et à analyser les signaux de vibration fournis par le capteur.

22. Système de mesure selon la revendication précédente,
- pour lequel l'électronique de transmetteur génère, à partir de la puissance d'excitation électrique convertie dans le dispositif d'excitation, une valeur de mesure de viscosité représentant la viscosité du produit en écoulement ; et/ou
- pour lequel l'électronique de transmetteur génère, à partir des signaux de vibration fournis par le capteur, une valeur mesurée du débit massique représentant le débit massique du produit en écoulement et/ou une valeur mesurée de la densité représentant la densité du produit en écoulement.

23. Utilisation d'un capteur selon l'une des revendication 1 à 20 ou d'un système de mesure selon l'une des revendications 21 à 22, lequel capteur est destiné à mesurer une densité et/ou un débit massique, notamment également un débit massique total cumulé sur un intervalle de temps, et/ou d'une viscosité et/ou d'un nombre de Reynolds d'un produit, notamment d'un gaz, d'un liquide, d'une poudre ou d'une autre substance capable de s'écouler, lequel produit s'écoule au moins temporairement dans une ligne de process, notamment une conduite, avec un débit massique supérieur à 1 000 t/h, notamment supérieur à 1 500 t/h.
